# EUROPEAN PATENT APPLICATION

(11) **EP 4 811 227 A1**
(43) Date of publication of application: **23.09.2026**
(21) Application number: 25306145.1
(22) Date of filing: 16.07.2025
(51) Int. Cl.: G06N 10/70, G06N 10/20

(54) **QUANTUM COMPUTER AND METHOD FOR DISTILLING MAGIC STATES**

(30) Priority: 21.03.2025 EP 25305397
(71) Applicant: Alice & Bob, 75015 Paris (FR); INRIA - Institut National de Recherche en Informatique et en Automatique, 78150 Le Chesnay (FR)
(72) Inventor: RUIZ, Diego, 75015 PARIS (FR); GUILLAUD, Jérémie, 75015 Paris (FR); MIRRAHIMI, Mazyar, 78150 LE CHESNAY (FR); VUILLOT, Christophe, 78150 LE CHESNAY (FR)
(74) Representative: Atout PI Laplace

(57) **Abstract**

There is provided a method for distilling a multi-qubit magic state implemented by a quantum computer comprising a plurality of physical data cat qubits using an outer code, wherein the multi-qubit magic state is for a multi-qubit controlled unitary gate. There is provided a method for distilling a magic state implemented by a quantum computer comprising a plurality of physical data cat qubits using an outer code, wherein the magic state is for a *jπ*/4 rotation about the Pauli *X*- or *Z*-axis where *j* is an integer selected from *j* ∈ {1,2,3,5,6,7}. There is also provided methods of gate teleportation using the multi-qubit magic state or the magic state for the *jπ*/4 rotation about the Pauli *X*- or *Z*-axis. There is also provided a quantum computer comprising: a plurality of physical resonators; and a command circuit for sending control signals to the physical resonators to stabilize a plurality of physical data cat qubits; wherein the command circuit is further configured to perform any of the methods of distilling magic state(s).

## Description

### FIELD OF THE INVENTION

The invention concerns methods and quantum computers for distilling magic states, and in particular methods and quantum computers comprising physical biased noise qubits such as so-called cat qubits.

### BACKGROUND

Making a useful quantum computer able to solve particular mathematical problems intractable using classical computing requires both: (i) the realization of sufficiently protected logical qubits encoded with physical qubits using error-correcting codes; and (ii) a universal set of logical gates.

A problem with (i) is that to encode logical qubits operating below the so-called fault-tolerance threshold requires a relatively large number of underlying physical qubits to achieve a level of sufficient protection. The trade-off between the degree of protection provided by error-correcting codes and the increase in components required to implement them defines what is known as the "resource overhead problem".

One way to mitigate this is to use so-called noise-biased physical qubits, wherein one of the inherent physical bit-flip or phase-flip rates of the qubit is preferentially suppressed relative to the other. Certain error-correcting codes have been developed which exploit this noise-bias of the underlying physical qubits to reduce the resource overhead.

For instance, so-called cat qubits are an example of bosonic qubits known to benefit from a noise bias. More precisely, the bit-flip errors are suppressed exponentially with "size" - that is, the average number of photons or bosons - of the Schrodinger cat states. Due to this noise-bias, quantum error correction becomes similar in complexity to classical error correction. For instance, a certain level of quantum error correction can be achieved by using a phase-flip correcting repetition code.

A problem with (ii) is that not all logical gates are straight forward to apply to logical qubits encoded using error-correcting codes. Some gates are transversal, meaning that to apply it, one just needs to apply the appropriate physical gate to each of the physical qubits with which the logical qubit is encoded. For instance, on a phase-flip repetition code implemented with cat qubits, *Z_{L}* = Z^{⊗*n*} and *CNOT_{L} = CNOT*^{⊗*n*} are both examples of transversal logical gates, where n is the number of physical qubits. However, the three-qubit logical Toffoli gate, *TOF_{L} = TOF^{⊗n}* is not transversal. Indeed, the Eastin Knill theorem proves that it is impossible to have a universal set of transversal logical gates.

A solution to (ii) is to use so-called magic states, which is a state of a qubit (be it at the physical level or the logical level) which, once teleported to a second qubit, results in the state of said second qubit being as if it has undergone the non-transversal gate. However, typical protocols to prepare a logical magic state requires "distilling" the logical magic state from a number of other logical qubits or "cultivating" the magic state from a single logical qubit, thereby being particularly resource intensive either in space overhead or time overhead.

Combining cat-qubits and magic state distillation is therefore attractive. For instance, US 11741279, US 12169673, and Chamberland, Christopher, et al. " Chamberland, Christopher, et al. "Building a fault-tolerant quantum computer using concatenated cat codes." PRX Quantum 3.1 (2022): 010329 all disclose methods exclusively for distilling Toffoli magic states with logical qubits encoded using physical cat qubits.

However, such schemes distilling Toffoli magic states still require a relatively large resource overhead.

Therefore, there remains a need to provide a quantum computing architecture having universal gate set whilst minimizing the resource overhead.

### SUMMARY

To this end, in a first aspect, there is provided a method for distilling a magic state implemented by a quantum computer comprising a plurality of physical data cat qubits using an outer code, wherein the magic state is for a *jπ*/4 rotation about the Pauli X- or Z-axis where *j* is an integer selected from *j* ∈ {1,2,3,5,6,7}. The method comprises: (i) encoding three or more validation logical qubits with at least some of the data cat qubits using one or more classical phase-flip error-correcting code(s); (ii) encoding one or more output logical qubit(s) with at least some of the data cat qubits using one or more error-correcting code(s); (iii) preparing one or more distilled magic state(s) with the validation logical qubits and the one or more output logical qubit(s) using the outer code to respectively host each of the distilled magic state(s) in a different one of the output logical qubit(s), wherein the outer code is configured to have a logical gate corresponding to the *jπ*/4 rotation and/or *-jπ*/4 rotation which is transversal.

Using the outer code comprises: (a) performing, for each of the validation logical qubits and output logical qubit(s), at least one single Pauli rotation or Pauli product rotation involving said logical qubit, wherein the rotation is a $\frac{jπ}{4} + \frac{l ∗ j ∗ π}{2} \left[2π\right]$ rotation with *l* being an integer, wherein each rotation is performed via: (I) gate teleportation of an initial magic state using a first injection logical qubit, the first injection logical qubit being encoded with at least some of the data cat qubits using a phase-flip repetition code; or (II) physically applying a single qubit gate corresponding to the $\frac{jπ}{4} + \frac{l ∗ j ∗ π}{2} \left[2 π\right]$ rotation to one data cat qubit which simultaneously forms the logical X support for one or more of the validation and/or output logical qubit(s); and (b) performing a logical Z or X measurement on each of the validation logical qubits, and depending on the results of the logical measurements either: (I) repeating operations (i)-(iii); or (II) terminating the distilling and utilizing the distilled magic state(s).

The present invention therefore enables magic states corresponding to single logical qubit rotations to be distilled in an architecture using data cat qubits. In particular, the present inventors have recognised a surprising synergy in combining classical error-correction using data cat qubits with distillation schemes for magic states corresponding to single logical qubit rotations, yielding unprecedent overhead reduction as compared to conventional distillation schemes for Toffoli magic state.

The injection logical qubit may be prepared in the initial magic state by using state injection comprising physically preparing one or more said data cat qubit(s) of the injection logical qubit in the initial magic state and selectively measuring the stabilizers of said phase-flip (injection) repetition code.

Preferably, the one or more output logical qubit(s) are encoded with at least some of the data cat qubits using one or more classical phase-flip error-correcting code(s), such as (I) a phase-flip repetition code for each of the output logical qubit(s) or (II) a single classical phase-flip LDPC code having parameter kn/d>1 encoding the output logical qubit(s) and the validation logical qubits together. In embodiments using the single classical phase-flip LDPC code having parameter kn/d>1, whilst the output logical qubit(s) are encoded therein, it may be convenient to merge the LDPC code with an output repetition code such that the output logical qubit(s) are extendable to the output repetition code, this can be done for each output logical qubit by sharing one of its data cat qubits with an output repetition code.

However, the Present inventors have also recognised that, in particular for embodiments using the single classical phase-flip LDPC code, the LDPC code may instead be merged with an output quantum error-correcting code such as a surface code of a thin surface code, such that the one or more output logical qubit(s) are encoded with at least some of the data cat qubits using one or more quantum (that is, phase-flip and bit-flip correcting) error-correcting code(s).

It will be appreciated that the choice of the integer *j* defines the form of the magic state to be distilled, whereas the choice of the integer *l* is dictated by the specific outer code used.

The invention according to the first aspect may include one or more of the following embodiments.

Each of the plurality of physical data cat qubits of the quantum computer has an average boson number characterising said data cat qubit, the data cat qubit of each validation logical qubit which has the smallest average boson number being referred to as the smallest validation data cat qubit of the validation logical qubit, and the data cat qubit of each output logical qubit which has the smallest average boson number being referred to as the smallest output data cat qubit of the validation logical qubit. Thus, in embodiments, each of the smallest output data cat qubits may have a larger average boson number than all of the smallest validation data cat qubits, optionally wherein each of the plurality of physical data cat qubits of the quantum computer is a dissipatively stabilized cat qubit.

The present inventors have thus discovered a previously unrecognised synergy in using data cat qubits for distillation using the outer code as described herein, as the outer code may be configured to account for lower bit flip rates in the validation logical qubits, thereby allowing the use of lower average boson numbers of the data cat qubits used therein, which lowers the phase flip threshold (given that phase flip rate of physical cat decreases linearly with decreasing average boson number, so need less data cat qubits per phase-flip classical error-correcting code) as well as avoiding other detrimental effects associated with higher boson numbers .

The physical data cat qubits may be dissipatively stabilized cat qubits.

The outer code may comprise performing a plurality of Pauli product rotations on two or more logical qubits of the validation logical qubits and/or the output logical qubit(s), each Pauli product rotation being given by the exponential of -i/2 multiplied by the tensor product of Pauli rotations on each of said two or more logical qubits.

The outer code may further comprise performing a single Pauli rotation on at least one of the validation logical qubits.

The *jπ*/4 rotation may be about the Pauli-X axis, and wherein operation (iii)(b) may comprise performing a logical Z measurement on each of the validation logical qubits.

The present Inventors have recognised that it is easier to operate with rotation about the Pauli-X axis for cat qubits. This stems from the noise bias inherent with cat qubits which results in much stronger bit-flip error protection compared to phase-flip error protection at the physical level of the cat qubit itself. For instance, for *j* = 1 such that the rotation is a π/4 rotation, rather than rotation about the Pauli-Z axis (which is for the so-called magic T state), rotating about the Pauli-X axis results in a hitherto under-appreciated magic state, referred to herein as the |*Rₓ*(*π*/4)〉 state, where $\left|{R}_{x}\left(π/4\right)\right〉 = {R}_{x} \left(π/4\right) \left|0\right〉 = cos \left(\frac{π}{8}\right) \left|0\right〉 - i sin \left(\frac{π}{8}\right) \left|1\right〉$ , this magic state, in combination with the logical Clifford group of gates, yields a logical universal gate set.

In embodiments, both (A) the three or more validation logical qubits and (B) the one or more output logical qubit(s) together form a number *k* of logical qubits which are encoded with a number *n* of the plurality of data cat qubits using a classical phase-flip low density parity check (LDPC) code comprising one or more stabilizers having a weight greater than two such that the LDPC code is able to encode a number *k* of logical qubits with a number *n* of the plurality of data cat qubits, wherein a majority of the *n* data cat qubits form part of the logical Z support for two or more of the *k* logical qubits, and preferably such that the LDPC code has a value *kd*/*n* greater than one, where *d* is the distance of the LDPC code; wherein operation (iii)(a) comprises, for each of the validation logical qubits, performing a or the single Pauli rotation via physically applying the single qubit gate corresponding to the $\frac{jπ}{4} + \frac{l ∗ j ∗ π}{2} \left[2 π\right]$ rotation to one data cat qubit which forms part of the logical Z support for said validation logical qubit but which does not form part of the logical Z support for any others of the logical qubits; and wherein operation (iii)(a) further comprises, for each of the Pauli product rotations, physically applying the single qubit gate corresponding to the $\frac{jπ}{4} + \frac{l ∗ j ∗ π}{2} \left[2 π\right]$ rotation to one data cat qubit which simultaneously forms part of the logical Z supports for said two or more logical qubits of said Pauli product rotation but which does not form part of the logical Z support for any others of the logical qubits.

Said otherwise, in operation (iii)(a), the logical X support for the validation logical qubit on which the Pauli rotation is performed is formed from only a single data cat qubit.

Similarly, for each Pauli product rotation, the logical X supports for said two or more logical qubits (i.e. those on which said Pauli product rotation is performed) is formed from only a single data cat qubit, i.e. a single data cat qubit simultaneously forms the X supports for said two or more validation qubits (that is, it is "shared" between said two or more validation qubits by virtue of the LDPC code).

In embodiments using the LDPC code, operations (i) and (ii) may comprise encoding the validation logical qubits and the output logical qubit(s) in a logical |0〉*_{L}* state or a logical |1〉*_{L}* state and subsequently performing a number of rounds of stabilizer measurements of the error-correcting code(s); and the method comprises performing at least some of the single Pauli rotations and the Pauli product rotations in parallel.

Preferably, all of the Pauli rotations and the Pauli product rotations are performed in parallel, i.e. substantially within the same time step of the distillation protocol.

The step of performing a number of rounds of stabilizer measurements of the error-correcting code(s) may be to ensure that the logical |0〉*_{L}* or logical |1〉*_{L}* states are above a threshold fidelity, which can be achieved via preselection. In preselection, depending on the physical error rates associated with quantum computer (e.g. of the data cat qubits, but also including associated errors such as those of any ancilla qubits needed for the stabilizer measurements, or state preparation and measurement errors - SPAM errors) the repetition of a further round of stabilizer measurements will only stop when a given number previous rounds of stabilizer measurements have been performed without detecting an error through the stabilizer measurements (e.g. typically the given number of previous rounds may be between 2 and 5 rounds).

Alternatively, the present Inventors have discovered that performing pre-selection on the encoded logical |0〉*_{L}* states or a logical |1〉*_{L}* states may not always be needed or optimal. For instance, instead, the method may further comprise: after performing the Pauli rotations and Pauli product rotations (whether some or all in parallel or otherwise) but before the step of physically performing the Z measurements, performing a second plurality of rounds of stabilizer measurements of the error-correcting code(s). After the second plurality of rounds (e.g. numbering around 10, but can be more or less again depending on the physical error rates associated with quantum computer) such that any residual error that happened before performing the Pauli rotations and Pauli product rotations are well resolved, depending on the error detected, a corrective logical ${R}_{X} \left(\frac{π}{2}\right)$ gate is applied to one or more of the logical qubit(s). The method then comprises performing a third plurality of rounds of stabilizer measurements of the error-correcting code(s). After the third plurality of rounds (e.g. numbering around 10, but can be more or less again depending on the physical error rates associated with quantum computer) such that any residual error that happened before performing the corrective logical ${R}_{X} \left(\frac{π}{2}\right)$ gate(s) are resolved as X errors. Said X errors can be accounted for by post-processing the constructed logical Z measurements taking into account said X errors.

In embodiments using the LDPC code, the method may comprise: providing the an initial "validation" LDPC code merged with one or more output phase-flip repetition code(s) with which to respectively host the one or more output logical qubit(s) so as to provide said LDPC code with which to encode the three or more validation logical qubits and the one or more output logical qubit(s), wherein, for each of the one or more output repetition code(s), at least one data cat qubit forming a part of a stabilizer of the LDPC code also forms a part of a stabilizer of said output phase-flip repetition code, and that the data cat qubits used with the one or more output phase-flip repetition code(s) do not form part of the logical X or Z support of any of the validation logical qubits.

Moreover, utilizing the distilled magic state(s) may comprise: in operation (iii)(b): physically performing a Z measurement on each data cat qubit which forms a part of the logical Z support of at least one of the validation logical qubits; using the Z measurements on said each data cat qubit to construct the logical Z measurement on each of the validation logical qubits; and if terminating the distilling, for each of the output logical qubit(s), taking the product of all of the physical Z measurements of each data cat qubit which simultaneously forms a part of the logical Z supports of said output logical qubit and at least one validation logical qubit to construct a logical Z measurement related to said output logical qubit, and, depending on said logical Z measurement of said output logical qubit, deriving whether a Pauli X correction should be applied to said output logical qubit.

Said Pauli X corrections may be applied by performing a physical X gate on said data cat qubit(s) which form the logical X support for output logical qubit(s) but which do not form the logical X support for other validation logical qubits, or tracked in software (which is so-called updating the Pauli frame).

In embodiments using the LDPC code, the method may comprise: providing an initial "validation" LDPC code merged with one or more output surface code(s) with which to respectively host the one or more output logical qubit(s), wherein, for each of the one or more output surface code(s), at least two data cat qubits forming a part of a stabilizer of the LDPC code also forms a part of a stabilizer of said output surface code, and that the data cat qubits used with the one or more output surface code(s) do not form part of the logical X or Z support of any of the validation logical qubits. Accordingly, the merged code is not a classical phase-flip low density parity check (LDPC) code given that the output surface code(s) comprise both X and Z stabilizers. However, an analogous method applies.

For instance, operation (iii)(a) may comprise, for each of the validation logical qubits, performing a or the single Pauli rotation via physically applying the single qubit gate corresponding to the $\frac{jπ}{4} + \frac{l ∗ j ∗ π}{2} \left[2 π\right]$ rotation to one data cat qubit which forms part of the logical Z support for said validation logical qubit but which does not form part of the logical Z support for any others of the logical qubits; and
wherein operation (iii)(a) may further comprise, for each of the Pauli product rotations, physically applying the single qubit gate corresponding to the $\frac{jπ}{4} + \frac{l ∗ j ∗ π}{2} \left[2 π\right]$ rotation to one data cat qubit which simultaneously forms part of the logical Z supports for said two or more logical qubits of said Pauli product rotation but which does not form part of the logical Z support for any others of the logical qubits.

Moreover, operations (i) and (ii) may comprise encoding the validation logical qubits and the output logical qubit(s) in a logical |0〉*_{L}* state or a logical |1〉*_{L}* state and subsequently performing a number of rounds of stabilizer measurements of the error-correcting code(s); and the method comprises performing at least some of the single Pauli rotations and the Pauli product rotations in parallel.
Additionally or alternatively, in embodiments comprising output surface code(s),operation (iii)(b) may comprise: physically performing a Z measurement on each data cat qubit which forms a part of the logical Z support of at least one of the validation logical qubits; using the Z measurements on said each data cat qubit to construct the logical Z measurement on each of the validation logical qubits; and if terminating the distilling, for each of the output logical qubit(s), taking the product of all of the physical Z measurements of each data cat qubit which simultaneously forms a part of the logical Z supports of said output logical qubit and at least one validation logical qubit to construct a logical Z measurement of said output logical qubit, and, depending on said logical Z measurement related to said output logical qubit, deriving whether a Pauli X correction should be applied to said output logical qubit.

At least one, and preferably each, of the one or more output surface code(s) may be a thin surface code configured to correct fewer bit-flip errors than phase-flip errors.

As will be appreciated, each stabilizer of the low density parity check (LDPC) code, as well as the repetition codes or surface codes, may comprise an ancilla qubit with which to perform stabilizer measurements of the code (e.g. for X stabilizer measurements, via performing a CNOT gate between the ancilla qubit as control and each data cat qubit of the stabilizer as target, and subsequently physically measuring the X operator of the ancilla qubit).

Preferably, the ancilla qubit is also a cat qubit, such as a dissipatively stabilized cat qubit (most preferable) or a Kerr cat qubit. Alternatively, the ancilla qubit may be a transmon or fluxonium etc.

In embodiments using the LDPC code, the rotation is for *j* = 2. Thus, the magic state is a ${R}_{x} \left(\frac{π}{2}\right)$ magic state.

In embodiments using the LDPC code, the rotation is for *j* = 1. Thus, the magic state is a ${R}_{x} \left(\frac{π}{4}\right)$ magic state.

In embodiments, the method may be for distilling a $\left|{R}_{x}\left(\frac{π}{4}\right)\right〉$ magic state and subsequently utilizing the $\left|{R}_{x}\left(\frac{π}{4}\right)\right〉$ magic state, the method comprising: (i) distilling a $\left|{R}_{x}\left(\frac{π}{2}\right)\right〉$ magic state according to any of the aspects or embodiments using the LDPC code; (ii) distilling a $\left|{R}_{x}\left(\frac{π}{4}\right)\right〉$ magic state according to any of the aspects or embodiments using the LDPC code; and (iii) using the distilled $\left|{R}_{x}\left(\frac{π}{2}\right)\right〉$ magic state and the distilled $\left|{R}_{x}\left(\frac{π}{4}\right)\right〉$magic state to implement a logical ${R}_{x} \left(\frac{π}{4}\right)$ gate on a computational logical qubit.

In other embodiments, each logical qubit of (i) the three or more validation logical qubits and (ii) the one or more output logical qubit(s) may be respectively encoded with at least some of the data cat qubits using a phase-flip repetition code, wherein operation (iii)(a) comprises, for each of the validation logical qubits, performing the single Pauli rotation via gate teleportation of the initial magic state of the first injection logical qubit to said validation logical qubit, wherein the initial magic state is for the $\frac{jπ}{4} + \frac{l ∗ j ∗ π}{2} \left[2π\right]$ rotation, and wherein said first injection logical qubit is prepared in the initial magic state by using state injection comprising physically preparing one or more data cat qubit(s) of the first injection logical qubit in the initial magic state; and wherein operation (iii)(a) further comprises, for each of the Pauli product rotations, performing gate teleportation of the initial magic state of a second injection logical qubit to said two or more logical qubit(s), said second injection logical qubit being encoded with at least some of the data cat qubits using a phase-flip repetition code, wherein the initial magic state is for the $\frac{jπ}{4} + \frac{l ∗ j ∗ π}{2} \left[2π\right]$ rotation, and wherein said second injection logical qubit is prepared in the initial magic state by using state injection comprising physically preparing one or more data cat qubit(s) of the second injection logical qubit in the initial magic state.

The data cat qubits of the phase-flip repetition code used to encode the first injection logical qubit may be physically the same as those used to encode the second injection logical qubit, or they may be different.

At least some of the data cat qubits may be provided in a bus comprised of a linear array of the data cat qubits with an ancilla qubit coupled between each adjacent pair of data cat qubits in the linear array, each adjacent pair of data cat qubits and ancilla qubit coupled therebetween thereby forming a bus stabilizer, and wherein each phase-flip repetition code of the validation logical qubits and output logical qubit(s) comprises a data cat qubit which is coupled to another ancilla qubit coupled to at least two data cat qubits of the linear array to thereby be able to form a logical-qubit-to-bus stabilizer of at least weight three; and the phase-flip repetition code of the first injection logical qubit comprises a data cat qubit which is coupled to yet another ancilla qubit coupled to a data cat qubit of the bus to thereby be able to form an injection-to-bus stabilizer of weight two; (I) the gate teleportation of the single Pauli rotation for each validation logical qubit comprises: preparing the first injection logical qubit in a logical |0〉*_{L}* or |1〉*_{L}* state; measuring the X operator of the bus stabilizers, the injection-to-bus stabilizer, and the logical-qubit-to-bus stabilizer involving said validation logical qubit, to thereby construct a logical XX measurement between the first injection logical qubit and said validation logical qubit; depending on the result of the logical XX measurement, deriving and optionally applying a Pauli Z correction to the first injection logical qubit; physically applying the single qubit gate corresponding to the $\frac{jπ}{4} + \frac{l ∗ j ∗ π}{2} \left[2 π\right]$ rotation one of the data cat qubits of the first injection logical qubit; measuring the Z operator of the first injection logical qubit to provide a logical Z measurement; and depending on the result of the logical Z measurement, deriving and optionally applying a Pauli X correction to said validation logical qubit; and (II) the gate teleportation of the Pauli product rotation comprises: preparing the first injection logical qubit in a logical |0〉*_{L}* or |1〉*_{L}* state; measuring the X operator of the bus stabilizers, the injection-to-bus stabilizer, and the logical-qubit-to-bus stabilizers involving each of said two or more logical qubits, to thereby construct a logical X^{m} measurement between the first injection logical qubit and said two or more logical qubits, where m is an integer indicating the number of logical qubits involved in the logical X measurement; depending on the result of the logical X^{m} measurement, deriving and optionally applying a Pauli Z correction to the first injection logical qubit; physically applying the single qubit gate corresponding to the $\frac{jπ}{4} + \frac{l ∗ j ∗ π}{2} \left[2 π\right]$ rotation one of the data cat qubits of the first injection logical qubit; measuring the Z operator of the first injection logical qubit to provide a logical Z measurement; and depending on the result of the logical Z measurement, deriving and optionally applying a Pauli X correction to said two or more logical qubits.

Preferably, there may be two buses, each being as described above, which enables parallelisation of the measurements and gates provided using the outer code.

Alternatively, the *jπ*/*4* rotation may be about the Pauli-Z axis, and wherein operation (iii)(b) comprises performing a logical Z measurement on each of the validation logical qubits; wherein each logical qubit of (i) the three or more validation logical qubits and (ii) the one or more output logical qubit(s) is respectively encoded with at least some of the data cat qubits using a phase-flip repetition code, wherein operation (iii)(a) comprises, for each of the validation logical qubits, performing the single Pauli rotation via gate teleportation of the initial magic state of the first injection logical qubit to said validation logical qubit, wherein the initial magic state is for the $\frac{jπ}{4} + \frac{l ∗ j ∗ π}{2} \left[2 π\right]$ rotation, and wherein said first injection logical qubit is prepared in the initial magic state by using state injection comprising physically preparing one or more data cat qubit(s) of the first injection logical qubit in the initial magic state; and wherein operation (iii)(a) further comprises, for each of the Pauli product rotations, performing gate teleportation of the initial magic state of a second injection logical qubit to said two or more logical qubit(s), said second injection logical qubit being encoded with at least some of the data cat qubits using a phase-flip repetition code, wherein the initial magic state is for the $\frac{jπ}{4} + \frac{l ∗ j ∗ π}{2} \left[2 π\right]$ rotation, and wherein said second injection logical qubit is prepared in the initial magic state by using state injection comprising physically preparing one or more data cat qubit(s) of the second injection logical qubit in the initial magic state.

Here, the magic state may be a magic |*T*^{†}〉 state; a supplementary magic state which is a magic |*S*〉 state is prepared by distillation in a supplementary magic state logical qubit with at least some of the data cat qubits using a supplementary magic |*S*〉 state distillation method, the supplementary magic state logical qubit being configured to perform a transversal CNOT gate with the first injection logical qubit; for each phase-flip repetition code of the validation logical qubits and output logical qubit(s), each data cat qubit is respectively coupled to a different data cat qubit of the first injection logical qubit; and the gate teleportation of the single Pauli rotation for each validation logical qubit comprises: (i) preparing the first injection logical qubit in a magic T state with at least some of the data qubits using T state injection, (ii) after preparing the first injection logical qubit and the supplementary magic state logical qubit, applying a first logical CNOT gate between the first injection logical qubit as control and the supplementary magic state logical qubit as target, and applying a second logical CNOT gate between the validation logical qubit as control and the first injection logical qubit as target, (iii) after applying the first and second logical CNOT gates, measuring the first injection logical qubit in the Z basis to provide a first measurement result, wherein the first measurement is a classical binary result representing a first value or a second value, (iv) measuring the supplementary magic state logical qubit in the X basis if the first measurement represents the first value or in the Z basis to the second basis if the first measurement represents the second value to provide a second measurement result, wherein the second measurement result is a classical binary result, (v) performing a classical XOR gate between the first and second measurement results to provide a third measurement result, wherein the third measurement result is a classical binary result, and (iv) depending on the third measurement result, determining a logical Pauli Z gate to be applied to the validation logical qubit.

A second injection logical qubit may be encoded with at least some of the data cat qubits using a classical phase-flip error-correcting code, so as to be used in performing the Pauli product rotations, and wherein for the phase-flip repetition code of the second injection logical qubit, each data cat qubit may be respectively coupled to a different data cat qubit of the bus.

In a second aspect, there is provided method for distilling a multi-qubit magic state implemented by a quantum computer comprising a plurality of physical data cat qubits using an outer code, wherein the multi-qubit magic state is for a multi-qubit controlled unitary gate.

The method of the second aspect comprises the following operations: (i) encoding one or more validation logical qubit(s) and a plurality of output logical qubits with at least some of the data cat qubits using a merged error-correcting code comprising (A) a plurality of output error-correcting codes with which to respectively host the plurality of output logical qubits, merged with (B) a classical phase-flip low density parity check (LDPC) code comprising one or more stabilizers having a weight greater than two such that the LDPC code is able to encode a number *k* of logical qubits with a number *n* of the plurality of data cat qubits, wherein a majority of the *n* data cat qubits form part of the logical Z support for two or more of the *k* logical qubits; and (ii) preparing the distilled multi-qubit magic state with the validation logical qubit(s) and the output logical qubits using the outer code to respectively host the distilled multi-qubit magic state across the plurality of output logical qubits, wherein the outer code is configured to have a logical gate corresponding to the multi-qubit controlled unitary gate which is transversal.

Moreover, using the outer code comprises: (a1) performing, for each logical qubit of the validation logical qubit(s) and output logical qubits, at least one single Pauli rotation or Pauli product rotation involving said logical qubit, wherein the rotation is a $\frac{jπ}{4}$ rotation about the Pauli *X*-axis, where *j* is an integer selected from *j* ∈ {1,2,3,5,6,7}, wherein said single Pauli rotation is performed via physically applying a single qubit gate corresponding to the $\frac{jπ}{4}$ rotation to a single one of the *n* data cat qubits which forms part of the logical Z support for said logical qubit but not part of the logical Z support for any other logical qubit, and wherein said Pauli product rotation is performed via physically applying a single qubit gate corresponding to the $\frac{jπ}{4}$ rotation to a single one of the n data cat qubits which forms part of the logical Z supports for each of the logical qubits involved in said Pauli product rotation but not part of the logical Z support for any other logical qubit; or (a2) performing, on a plurality of the *n* data cat qubits, a physical single qubit gate corresponding to a ±*π*/2 rotation about the Pauli *Z*-axis, provided that the outer code is configured to also have a logical gate corresponding to the +*π*/2 rotation about the Pauli *Z*-axis which is transversal; and (b) performing a logical Z measurement subsequent to operation (a1) or a logical X measurement subsequent to operation (a2) on each of the validation logical qubit(s), and depending on the results of the logical measurements either: (I) repeating operations (i)-(ii); or (II) terminating the distilling and utilizing the distilled multi-qubit magic state.

Thus, the present invention enables distillation of a multi-qubit magic state which is for a multi-qubit controlled unitary gate whilst reducing the overhead in physical data cat qubits required, whilst retaining the benefit of being robust against relatively high physical error rates. For instance, in some embodiments, taking a physical error rate of *p_{Z}* = 10⁻³ and a noise bias (bit-flip time to phase-flip time) of *η* ≳ 5 × 10⁶, the present invention may output magic states with logical error on the order of 10⁻⁷ using only a few tens of physical qubits, and potentially less than six cycles of error correction. It is also noted that the present invention may remain effective under a more modest noise bias *η* ≳ 100, while requiring only a slightly larger number of physical qubits and preparation time.

Moreover, unlike distillation or cultivation schemes that rely on the Toffoli gate, only requires 2-qubit bias-preserving CNOT gates and nearest-neighbour connectivity in a 2D planar architecture. The present invention may also remain effective as well at relatively higher physical error rates, a regime in which Toffoli-gate-based schemes perform poorly.

In embodiments, the LDPC code, in isolation, may have a value *kd*/*n* greater than one, where *d* is the distance of the LDPC code, and *k* is a number of logical qubits able to be encoded with the LDPC code with a number *n* of the plurality of data cat qubits

Moreover, the merged error-correcting code can be considered as a merging of the output logical qubits of the output error-correcting codes with different ones of the *k* logical qubits able to be encoded with the LDPC code.

Preferably, each of the *k* logical qubits is merged in this manner, such that the total number of logical qubits of the one or more validation logical qubit(s) and the plurality of output logical qubits is *k*. However, alternatively, it can be envisaged that certain ones of the k logical qubits of the LDPC code may be unused, although it is recognised that any operational advantage gained by doing so should be balanced with the extra physical qubit overhead used to encode a logical qubit with the LDPC code which is not used by the outer code to distil the magic state(s).

For the avoidance of doubt, we note here that a Pauli product rotation is given by the exponential of the tensor product of Pauli rotations on each of said two or more logical qubits involved in the Pauli product rotation (explicitly, with a factor of -*i*/2 in the exponent).

As will be appreciated, embodiments of the first aspect may equally apply to the second aspect.

For instance, the physical data cat qubits may be dissipatively stabilized cat qubits.

In embodiments, each of the plurality of physical data cat qubits of the quantum computer may have an average boson number characterising said data cat qubit, the data cat qubit of each validation logical qubit which has the smallest average boson number being referred to as the smallest validation data cat qubit of the validation logical qubit, and the data cat qubit of each output logical qubit which has the smallest average boson number being referred to as the smallest output data cat qubit of the validation logical qubit, wherein each of the smallest output data cat qubits may have a larger average boson number than all of the smallest validation data cat qubits, optionally wherein each of the plurality of physical data cat qubits of the quantum computer is a dissipatively stabilized cat qubit.

That is, the same synergy discussed above in relation to the first aspect applies here.

Generally, if performing operation (a1), each logical qubit can be subject to a plurality of rotations, i.e. a plurality of single Paul rotations only, a plurality of Pauli product rotations (i.e. involving others of the logical qubits) only, only one single Pauli product rotation and one or more Pauli product rotations, or only one Pauli product rotation and a plurality of single Pauli product rotations.

For instance, in embodiments, the outer code may comprise performing a plurality of Pauli product rotations on two or more logical qubits of the validation logical qubit(s) and/or the output logical qubits, wherein each of the validation logical qubit(s) and the output logical qubits is involved in at least one Pauli product rotation.

A first subset of the plurality of Pauli product rotations may be for a first rotation, and wherein a second subset of the plurality of Pauli product rotations may be for a second rotation which is the conjugate of the first rotation.

For instance, the first subset may be each for a *π*/2 (or *π*/4) rotation about the Pauli X-axis, whereas the second subset may be each for a -*π*/2 (or -*π*/4) rotation about the Pauli X-axis.

The outer code may further comprise performing a single Pauli rotation on only one of the validation logical qubits.

That is, typically, in many embodiments, only a single validation logical qubit will be subject to only one single Pauli rotation whilst each of the validation logical qubit(s) (including said single validation logical qubit subject to the single Pauli rotation) and output logical qubits will be subject to a plurality of Pauli product rotations, as determined by the outer code.

In embodiments, operation (i) may comprise encoding the validation logical qubits and the output logical qubit(s) in a logical |0〉*_{L}* state or a logical |1〉*_{L}* state and subsequently performing a number of rounds of stabilizer measurements of the error-correcting code(s); and the method may comprise performing at least some of the single Pauli rotations and the Pauli product rotations in parallel.

The plurality of output error-correcting codes with which to respectively host the plurality of output logical qubits may be: (I) a plurality of output phase-flip repetition codes, wherein, for each of the output repetition codes, at least one data cat qubit forming a part of a stabilizer of the LDPC code also forms a part of a stabilizer of said output phase-flip repetition code, and that the remaining data cat qubits used with the output phase-flip repetition codes do not form part of the logical Z support of any of the validation logical qubits; or (II) is a plurality of output surface codes, wherein, for each of the output surface codes, at least two data cat qubits forming a part of a stabilizer of the LDPC code also forms a part of a stabilizer of said output surface code, and that the remaining data cat qubits used with the output surface codes do not form part of the logical Z support of any of the validation logical qubits.

In embodiments wherein the method comprises performing operation (a1), operation (ii)(b) may comprise: physically performing a Z measurement on each data cat qubit which forms a part of the logical Z support of at least one of the validation logical qubits; using the Z measurements on said each data cat qubit to construct the logical Z measurement on each of the validation logical qubit(s); and if terminating the distilling, for each of the output logical qubits, taking the product of all of the physical Z measurements of each data cat qubit which simultaneously forms a part of the logical Z support of said output logical qubit and at least one validation logical qubit to construct a logical Z measurement related to said output logical qubit, and, depending on said logical Z measurement, deriving whether a Pauli X correction should be applied to said output logical qubit.

For the avoidance of doubt, physically performing a Z measurement on each data cat qubit which forms the logical Z support of at least one of the validation logical qubits comprises performing a single physical Z measurement on each data cat qubit of the LDPC code part of the merged error-correcting code.

In embodiments wherein the method comprises performing operation (a1), the distilled multi-qubit magic state may be a |*CZ*〉 = |*CₓX*〉 *=* 1/2(|00〉 + |01〉 + |10〉 - |11〉) state hosted across two output logical qubits.

In embodiments wherein the method comprises performing operation (a1), the distilled multi-qubit magic state may be a $\left|{C}_{X}{C}_{X}X\right〉 = \frac{1}{2 \sqrt{2}} \left(\left|+++\right〉+\left|++-\right〉+\right.$ $\left.\left|+-+\right〉+\left|+--\right〉+\left|-++\right〉+\left|-+-\right〉+\left|--+\right〉-\left|---\right〉\right)$ state hosted across three output logical qubits.

In embodiments wherein the method comprises performing operation (a2), operation (ii)(b) may comprise: physically performing a X measurement on each data cat qubit which forms a part of the logical Z support of at least one of the validation logical qubits; using the X measurements on said each data cat qubit to construct the logical X measurement on each of the validation logical qubit(s); and if terminating the distilling, for each of the output logical qubits, taking the product of all of the physical X measurements of each data cat qubit which simultaneously forms a part of the logical Z support of said output logical qubit and at least one validation logical qubit to construct a logical X measurement related to said output logical qubit, and, depending on said logical X measurement, deriving whether a Pauli Z correction should be applied to said output logical qubit.

For the avoidance of doubt, physically performing an X measurement on each data cat qubit which forms the logical Z support of at least one of the validation logical qubits comprises performing a single physical X measurement on each data cat qubit of the LDPC code part of the merged error-correcting code.

In embodiments wherein the method comprises performing operation (a2), the distilled multi-qubit magic state may be a |*CZ*〉 *=* |*CₓX*〉 *=* 1/2(|00〉 + |01〉 + |10〉 - |11〉) state hosted across two output logical qubits.

In a third aspect, there is provided a method of gate teleportation from: (I) a magic state logical qubit prepared in a magic state to a computational logical qubit, by consuming the magic state which is for a *jπ*/4 rotation about the Pauli *X*- or *Z*-axis where *j* is an integer selected from *j* ∈ {1,2,3,5,6,7} using operations comprising two-qubit entangling logical gates and logical measurements of the magic state logical qubit such that the rotation is performed on the computational logical qubit; or (II) a plurality of magic state logical qubits prepared in a multi-qubit magic state to a plurality of computational logical qubits, by consuming the multi-qubit magic state which is for a multi-qubit controlled unitary gate using operations comprising two-qubit entangling logical gates and logical measurements of the magic state logical qubits such that the multi-qubit controlled unitary gate is performed on the computational logical qubits.

Said operations of (I) two-qubit entangling logical gates and logical measurements of the magic state logical qubit, or (II) two-qubit entangling logical gates and logical measurements of the magic state logical qubits may performed according to embodiments as described herein.

Moreover, the (I) magic state or (II) magic states may be distilled according to the aspects and embodiments described herein.

In a fourth aspect there is provided a superconducting non-linear circuit comprising: (I) an LDPC portion comprising a plurality of stabilizers, each stabilizer comprising (i) two or more physical data resonators for respectively stabilizing two or more data cat qubits, and (ii) a physical ancilla resonator for stabilizing an ancilla qubit, wherein each of the two or more physical data resonators is coupled to the physical ancilla resonator, and wherein at least one (preferably several, most preferably the majority) of the stabilizers comprises three or more physical data resonators; and (II) an output portion comprising a plurality of stabilizers, each stabilizer comprising (i) two physical data resonators for respectively stabilizing two data cat qubits, and (ii) a physical ancilla resonator for stabilizing an ancilla qubit, wherein each of the two physical data resonators is coupled to the physical ancilla resonator; wherein one of the physical data resonators of the LDPC portion is also one of the physical data resonators of the output portion.

Preferably, the physical ancilla resonators of both the LDPC portion and the output portion are also for respectively stabilizing cat qubits.

Each physical data resonator of the LDPC portion may be shared (i.e. be comprised by) two or more of the stabilizers. Each physical data resonator of the output portion may be shared (i.e. be comprised by) two or more of the stabilizers except a single physical data resonator which is an end physical data resonator which is only comprised by one of the stabilizers.

The superconducting non-linear circuit may comprise a plurality of coplanar waveguides for delivering control signals to the physical data resonators or the physical ancilla resonators of the LDPC and output portions.

The superconducting non-linear circuit a plurality of asymmetrically threaded SQUIDs (ATSs) each formed from a pair of Josephson junctions in a superconducting loop shunted by an inductor, each ATS being respectively coupled to a physical data resonator of the LDPC portion or the output portion.
would destroy novelty)

In a fifth aspect, there is provided a superconducting non-linear circuit according to the fourth aspect and any of its embodiments, and a command circuit configured to deliver control signals to the superconducting non-linear circuit, the command circuit being further configured, via said control signals, to implement the method of the first or second aspects and any of the embodiments using the classical phase-flip LDPC code as described herein.

In a sixth aspect, there is provided a quantum computer comprising: a plurality of physical resonators; and a command circuit for sending control signals to the physical resonators to stabilize a plurality of physical data cat qubits; wherein the command circuit is further configured to perform the method of any of the preceding aspects or embodiments thereof.

Note that it need not be a one-to-one correspondence between the plurality of physical resonators and the plurality of stabilized cat qubits, i.e. a single resonator may be multiplexed to host more than one cat qubit therein. However, to reduce engineering complexity etc, it is preferable that each resonator does indeed host a single cat qubit.

In a seventh aspect, there is provided a classical computer program product comprising instructions which cause the quantum computer of the sixth aspect to carry out the operations of the method of the first, second, or third aspects and any of their embodiments.

In an eighth aspect, there is provided a computer-readable medium having stored thereon the computer program product of the seventh aspect.

### BRIEF DESCRIPTION OF THE FIGURES

Various embodiments of the invention will now be described, by way of example only, and with reference to the accompanying drawings in which:
Figure 1 shows a generic view of a quantum system for performing a phase-flip repetition code with cat qubits which can be used in embodiments of the invention using biased-noise qubits such as cat qubits;
Figure 2 shows an arrangement of data cat qubits and a command circuit configured to distil a magic state, according to an embodiment;
Figure 3 shows a method for distilling a magic state implemented by a quantum computer comprising a plurality of physical data cat qubits using an outer, according to an embodiment;
Figure 4 shows an exemplary scheme for teleporting a noisy T state from a second injection logical qubit to a corresponding validation logical qubit, which can be used in embodiments of the invention;
Figure 5 shows a quantum circuit diagram for distilling a magic |*S*^{†}〉*_{L}* state, according to an embodiment;
Figure 6 shows a quantum circuit diagram showing another exemplary scheme for teleporting the noisy T state, which can be used in embodiments of the invention;
Figure 7 shows a quantum circuit diagram showing another exemplary scheme for teleporting the noisy T state, which can be used in embodiments of the invention;
Figure 8 shows a quantum circuit diagram showing an exemplary set of gates constructed from a "15 to 1" outer code for distilling a magic T state, according to an embodiment;
Figure 9 shows a quantum circuit diagram showing an exemplary scheme for teleporting a Pauli product *π*/4 rotation about Z from a noisy T state, according to an embodiment, which can be seen as a generalisation of Figure 4;
Figure 10 shows a quantum circuit diagram showing another exemplary scheme for teleporting a Pauli product *π*/4 rotation about Z from a noisy T state, according to an embodiment, which can be seen as a generalisation of Figure 6;
Figure 11 shows a quantum circuit diagram showing another exemplary scheme for teleporting a Pauli product *π*/4 rotation about Z from a noisy T state, according to an embodiment, which can be seen as a generalisation of Figure 7;
Figure 12 shows an arrangement 4 of data cat qubits 8 and a command circuit 6 configured to distil a magic state which corresponds to a *jπ*/4 rotation about the Pauli X-axis, according to an embodiment;
Figure 13 shows a quantum circuit diagram for performing a *π*/4 Pauli rotation about the X axis on a validation logical qubit, which can be used in embodiments of the invention;
Figure 14 shows a quantum circuit diagram for performing a *π*/4 Pauli product rotation about the X axis on two logical qubits, which can be used in embodiments of the invention;
Figure 15 shows a quantum circuit diagram showing an exemplary quantum circuit built using the outer code for distilling a magic *Rₓ*(*π*/4) state, according to an embodiment;
Figure 16 shows various stabilizer geometry shapes which may be used in embodiments of the invention;
Figure 17 shows schematic views use of various stabilizer geometries used in a quantum system, according to various embodiments of the invention;
Figures 18 and 19 show examples of support for logical operators obtained by spanning an inverted T-shape stabilizer geometry and a cross-shaped stabilizer geometry, respectively, according to an embodiment of the invention;
Figure 20 shows an example of converting stabilizer geometries into a parity check matrix, used to implement embodiments of the invention;
Figure 21 shows an example method using Gaussian elimination to transform a parity matrix into a generator matrix, used to implement embodiments of the invention;
Figure 22 shows various codes obtained by varying the stabilizer geometries and optimizing their allocation, according to an embodiment of the invention;
Figure 23 shows an example of different stabilizers used at two of the boundaries of a grid-like array, according to an embodiment of the invention;
Figure 24 shows exemplary error syndrome measurement operations depending on the stabilizer geometry shape which can be used in embodiments of the invention;
Figure 25 shows an arrangement of data cat qubits and a command circuit configured to distil a magic state which corresponds to the *π*/4 rotation about the Pauli X-axis, according to an embodiment;
Figure 26 shows simulation results for different numbers of rounds of stabilizer measurements;
Figure 27 shows a quantum circuit diagram of a portion of a distillation method using an LDPC code at the level of the physical data cat qubits, according to an embodiment;
Figure 28 shows an arrangement 4 of data cat qubits 8 and a command circuit 6 configured to distil a magic state which corresponds to the *π*/2 rotation about the Pauli X-axis or indeed Z-axis, according to an embodiment;
Figure 29 shows an exemplary quantum circuit built using the outer code for distilling an output logical qubit in the magic $\left|{X}^{\frac{1}{2}}\right〉 = \left|-i\right〉$ state, according to an embodiment;
Figure 30 shows an arrangement 4 of data cat qubits 8 and a command circuit 6 configured to distil a magic state which corresponds to the *π*/2 rotation about the Pauli X-axis or indeed Z-axis, which has a higher fidelity than that distilled using the arrangement of Figure 28, according to an embodiment;
Figure 31 shows a modified version of the arrangement of Figure 25 configured to optimize CNOT gate scheduling, according to an embodiment;
Figure 32 shows an arrangement of data cat qubits and a command circuit configured to distil a magic state which corresponds to the *π*/4 rotation about the Pauli X-axis, according to an embodiment;
Figure 33 shows an arrangement 4 of data cat qubits 8 and a command circuit 6 configured to distil a magic state which corresponds to the *π*/2 rotation about the Pauli X-axis or indeed Z-axis, according to an embodiment;
Figure 34 shows a modified version of the arrangement of Figure 25 configured to use transmon qubits as the ancillas for some of the stabilizers, according to an embodiment;
Figure 35 shows a stabilizer which can be used in the embodiments herein, wherein the ancilla qubit in a stabilizer is accompanied by a second, so-called flag qubit;
Figure 36 shows an arrangement of data cat qubits and a command circuit configured to distil a multi-qubit magic state which corresponds to a multi-qubit controlled unitary gate, specifically a magic *C_{X}X* (or equivalently *CZ*) state, according to an embodiment;
Figure 37 shows an exemplary quantum circuit built using the outer code for distilling across output logical qubits a multi-qubit magic state which can correspond to *a C_{X}X* or *CZ* gate, according to an embodiment;
Figure 39 shows an arrangement of data cat qubits and a command circuit configured to distil a multi-qubit magic state which corresponds to a multi-qubit controlled unitary gate, specifically a magic *C_{X}C_{X}X* state, according to an embodiment;

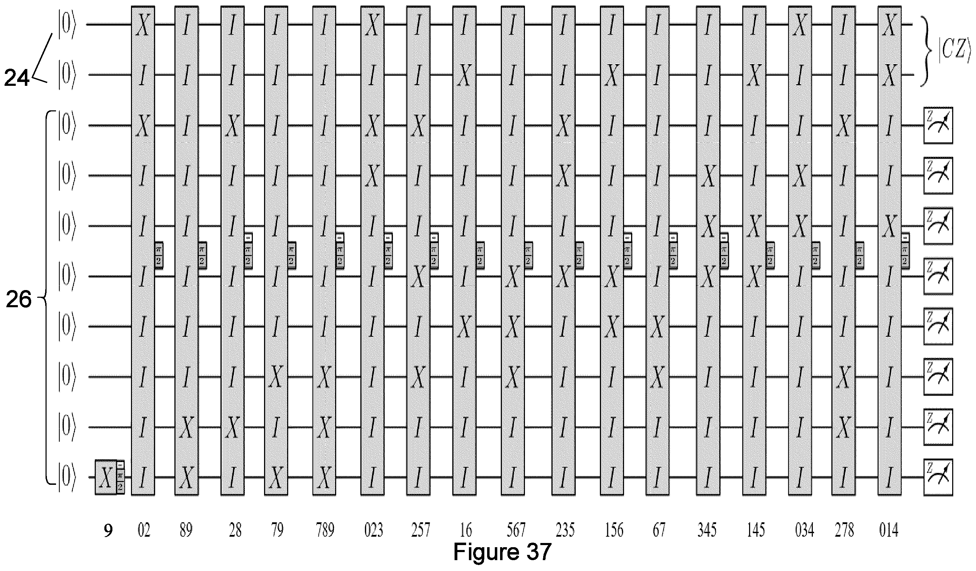

Figure 37 shows an exemplary quantum circuit built using the outer code for distilling across output logical qubits a multi-qubit magic state which corresponds to a *C_{X}C_{X}X* gate, according to an embodiment; and

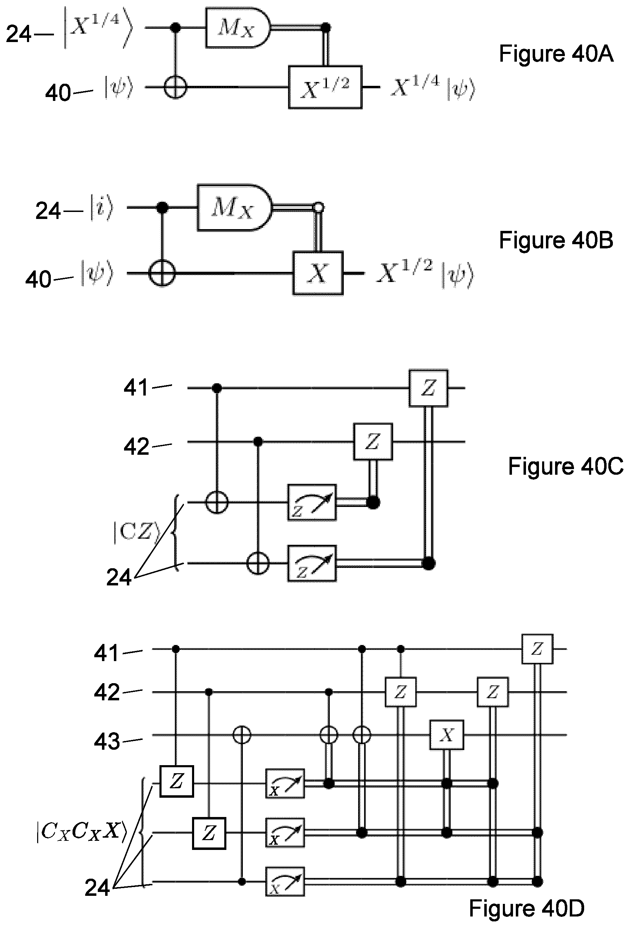

Figures 40A-40D show exemplary quantum circuits used to utilize distilled magic state(s) to apply the corresponding gate to computational logical qubit(s), according to various embodiments.

### DETAILED DESCRIPTION

### Biased noise qubits

The present invention relates to methods for distilling magic states implemented in quantum computing architectures using noise-biased qubits as the underlying physical qubit. One particular example of a noise-biased qubit is a so-called cat qubit. A two-legged cat qubit is defined as a two-dimensional manifold spanned by the so-called cat states $\left|{C}_{α}^{\pm }\right〉$ which are superpositions of two coherent states |*α*〉 and $\left.\left|-α\right〉:\left|{C}_{α}^{\pm }\right〉=\right) {N}^{\pm } \left(\left|α\right〉\pm \left|-α\right〉\right)$ , with: ${N}^{\pm } = 1 / \sqrt{2 \left(1\pm {e}^{- 2 {\left|α\right|}^{2}}\right)}$. Other higher-component cat qubits can be realised, such as the so-called four-legged cat qubit as described in: Mirrahimi, Mazyar, et al. "Dynamically protected cat-qubits: a new paradigm for universal quantum computation." New Journal of Physics 16.4 (2014): 045014.

Lescanne, Raphaël, et al. "Exponential suppression of bit-flips in a qubit encoded in an oscillator." Nature Physics 16.5 (2020): 509-513 demonstrated that such cat qubits can be stabilized with a non-linear conversion between two photons of a first mode a - memory mode or cat qubit mode - and one photon of a second mode b - buffer mode. Such a stabilization is referred to as dissipative stabilization, however many different stabilization architectures may be used.

For instance, cat qubits can be stabilized or confined by the following exemplary schemes:
(A) A parametric dissipative stabilization, with jump operator ${L}_{2} = \sqrt{{κ}_{2}} \left({a}^{2}-{α}^{2}\right)$, where *κ*₂ is the two-photon dissipation rate, *a* is the photon annihilation operator of the memory mode a and *α* is a complex number defining the cat qubit. This jump operator can be realized by coupling a lossy buffer mode b with dissipation rate *κ_{b}*, and a four-wave mixing non-linear element - typically a Josephson junction or an asymmetrically threaded SQUID (ATS) - to the memory mode a and by engineering the Hamiltonian $\frac{H}{ℏ} = {g}_{2} \left({a}^{2}-{α}^{2}\right) {b}^{†} + h . c .$, where *b* is the photon annihilation operator of the buffer mode b and *g*₂ is the two-photon coupling rate, by applying to the four-wave mixing non-linear element a pump at frequency |2*fₐ - f_{b}*| and a drive of the buffer mode b at frequency *f_{b}* provided *g*₂ *< κ_{b}.*
(B) A Kerr Hamiltonian $\frac{H}{ℏ} = \frac{K}{2} \left({a}^{† 2}-{α}^{2}\right) \left({a}^{2}-\overline{{α}^{2}}\right)$, where *K* is the amplitude of the Kerr Hamiltonian, *a* is the photon annihilation operator, and |*α*|² is the mean photon number.
(C) A detuned Kerr Hamiltonian $\frac{H}{ℏ} = \frac{K}{2} \left({a}^{† 2}-{α}^{2}\right) \left({a}^{2}-\overline{{α}^{2}}\right) - {Δa}^{†} a$*,* where *K* is the amplitude of the Kerr Hamiltonian, *a* is the photon annihilation operator, *α* is a complex number defining the cat qubit, and *Δ* is the detuning factor.
(D) A two-photon exchange (TPE) Hamiltonian $\frac{H}{ℏ} = {g}_{2} \left({a}^{2}-{α}^{2}\right) {σ}_{+} + h . c .$, where *g*₂ is the complex two-photon coupling rate, *a* is the photon annihilation operator, *α* is a complex number defining the cat qubit, and *σ*_{±} are the lowering and raising operators of the two-level system. This Hamiltonian can be engineered in the same way as the parametric dissipative stabilization (A).
(E) A dissipative squeezing stabilization, with jump operator ${L}_{SC} = \sqrt{{κ}_{SC}} \left({\left(cosh\left(r\right)a+sinh\left(r\right){e}^{iθ}{a}^{†}\right)}^{2}-{α}^{2}\right)$ , where *κ_{SC}* is the squeezed two-photon dissipation rate, *a* is the photon annihilation operator of the memory mode a, *α* is a complex number defining the cat qubit, *r* and *θ* are the modulus and argument of the complex squeezing parameter *ξ = re^{iθ}.* This jump operator can be realized by coupling a lossy buffer mode b with dissipation rate *κ_{b}*, and a four-wave mixing non-linear element - typically a Josephson junction or an ATS -, to the memory mode a and by engineering the Hamiltonian $\frac{H}{ℏ} = {g}_{SC} \left({\left(cosh\left(r\right)a+sinh\left(r\right){e}^{iθ}{a}^{†}\right)}^{2}-{α}^{2}\right) {b}^{†} + h . c .$, where b is the photon annihilation operator of the buffer mode b and *g_{SC}* is the squeezed two-photon coupling rate, with several pumps at frequencies |2*fₐ - f_{b}*|*, f_{b}* and *2fₐ + f_{b},* and a drive of the buffer mode b at frequency *f₃* provided *g_{SC} < κ_{b}.*
(F) A variant of the previous stabilization scheme e), for which the Applicant filed the European patent application EP 23175147.0, in which a bosonic qubit - called "*moon cat qubit*" since the two blobs of the Wigner function have a crescent moon shape - is stabilized by engineering the Hamiltonian $\frac{H}{ℏ} = {g}_{2} \left({a}^{2}+{λa}^{†}a-{α}^{2}\right) {b}^{†} + h . c .$, where g₂ is the amplitude of the two-photon coupling rate as described above achieved via a pump at frequency |2*fₐ - f_{b}*|*, a* is the annihilation operator of the memory mode a, *λ* is a complex number which phase and amplitude result from the amplitude of longitudinal coupling produced by a pump at frequency *f_{b}, α* is a complex number resulting from a drive of the buffer mode b at frequency *f_{b}* and b is the annihilation operator of the buffer mode b; a comparison between the moon cat qubit and the squeezed cat qubit could be established by expressing *λ* as a function of the complex squeezing parameter *ξ* = *re^{iθ}* as follows: *λ* = 2tanh (*r*).
(G) A DC dissipative stabilization, for which the Applicant filed the European patent application EP 23306839.4, in which a cat qubit is stabilized in the spirit of the previous stabilization scheme a), except that the two-photon pump that engineers the non-linear conversion between two photons of the memory mode a and one photon of the buffer mode b is replaced with a DC voltage source which biases a non-linear element formed exclusively of one or more Josephson junctions, such that the DC-biased non-linear element acts as a voltage-to-frequency converter which, at the appropriate voltage bias, provides the required parametric interaction at the frequency |2*fₐ - f_{b}*| necessary to achieve dissipative stabilization. In particular, the two-photon coupling rate g₂ is therefore not limited by the amplitude of the two-photon pump: ${g}_{2} = \frac{{E}_{J}}{4} {φ}_{a}^{2} {φ}_{b}$, where *E_{J}* is the Josephson energy of the one or more Josephson junctions, *φₐ* is the zero-point fluctuation of the phase of the memory mode a, and *φ_{b}* is the zero-point fluctuation of the phase of the buffer mode b.

The present invention may implement any of these stabilization schemes to generate the physical cat qubits with which logical qubits may be encoded using error-correcting codes. Of course, other noise-biased qubits can also be used in place of such cat qubits.

In general then, a noise-biased qubit (such as a cat qubit) may be stabilized in a physical resonator. In superconducting architectures, physical resonators may include a 3D superconducting cavity, a 2D superconducting resonator such as a coplanar waveguide or a lumped element superconducting circuit comprising a geometric capacitor and an inductor. In other architectures, the physical resonator may be for instance a neutral atom or an ion trapped in laser fields, or electronic spins confined to a semiconductor quantum dot or other nano-structure. The skilled person would be well aware of how to provide such physical resonators, as appropriate. By applying the appropriate control signals from a command circuit (e.g. in the form of tailored electromagnetic pumps/drives and/or DC biases), the noise-biased qubit may be stabilized, confined, or hosted in the physical resonator.

### Error-correcting codes

As described briefly above, preparing logical magic states via distillation schemes first requires a number of logical qubits which are encoded with the underlying physical qubits using an error-correcting code.

More specifically quantum error correction for qubits involves encoding quantum information in a way that allows errors on the underlying physical qubits, such as bit-flips or phase-flips, to be detected and corrected without directly measuring the quantum state, thereby preserving the coherence and accuracy of the computation in the presence of noise. One way to do so utilizes so-called stabilizer codes, where the quantum state is protected by stabilizer generators that commute with the encoded information. Errors are detected through syndrome extraction, a process that measures the stabilizers to identify the type and location of errors, enabling the appropriate correction without collapsing the quantum state.

An error-correcting code designed for noise-biased qubits such as cat-qubits leverages the inherent asymmetry in the noise characteristics of the qubits to reduce the number of physical qubits needed to reach fault-tolerance. For the avoidance of doubt, herein we shall refer extensively to cat qubits, however it should be appreciated that the present invention may apply to other noise-biased qubits as known in the art.

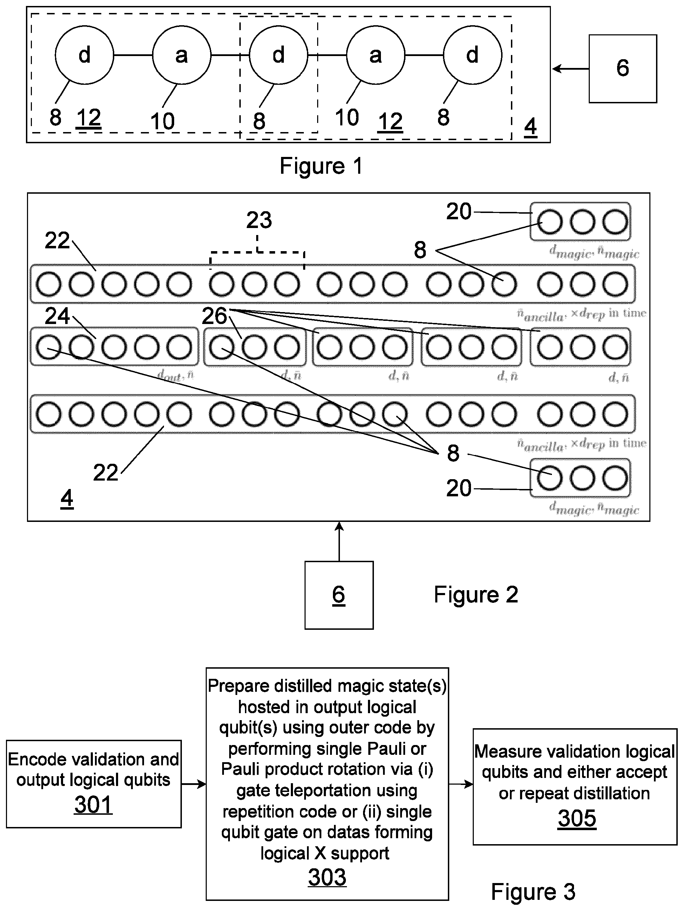

Figure 1 shows an exemplary quantum system which can be used in embodiments of the present invention for encoding a logical qubit with three data cat qubits 8 using a phase-flip repetition code (namely, configured to detect and correct for phase-flip errors occurring on the data cat qubits 8). Connected between adjacent pairs of data cat qubits 8 are ancilla qubits 10 (wherein the ancilla may or may not be a noise-biased qubit such as a cat qubit), which can be used to perform a stabilizer measurement (also known as parity checks) for error syndrome extraction of the phase-flip repetition code (e.g. via performing CNOT gates between the ancilla qubit as control and each of the data cat qubits connected thereto as target). Thus, the phase-flip repetition code of Figure 1 has two stabilizers, as conceptually shown by the dashed boxes (namely, each stabilizer is of weight two, and comprises a pair of data cat qubits 8 with an ancilla qubit 10 coupled therebetween).

The quantum system of Figure 1 may be formed from a superconducting circuit 4 which comprises data resonators 8 and ancilla resonators 10, and a command circuit 6. As mentioned above, the present Invention applies to any quantum computing architecture leveraging biased-noise physical qubits, in which case the superconducting circuit 4 may be any physical arrangement 4 of physical resonators 8,10. Any stabilization scheme described above or otherwise known can be implemented by the command circuit 6 to stabilize the physical qubits in the physical resonators 8,10. Thus, generally the command circuit 6 is configured to deliver control signals to the physical arrangement 4 of physical resonators 8,10 (either directly to the physical resonators 8,10 or indirectly via other components or elements of the physical arrangement 4) to stabilize physical qubits in the physical resonators 8,10.

As such, in the following, the expression "data resonator" (respectively "ancilla resonator") and "data cat qubit" (respectively "ancilla qubit") are interchangeable. For instance, it will be understood that an arrangement 4 of physical data qubits 8 is taken to mean an arrangement 4 of physical data resonators 8 wherein the command circuit 6 is configured to deliver control signals to the arrangement 4 to stabilize physical data qubits in the physical data resonators 8.

The term "data" is used to indicate the qubits with which the logical qubit is encoded using the error-correcting code (i.e. the physical data cat qubits contain the quantum information that the code seeks to protect), whereas the term "ancilla" is used to indicate the qubits which may be used to perform stabilizer measurements of the data qubits.

While command circuit 6 is herein described as a single element, it may be composed of a plurality of command circuits which are each connected to one or more resonators and allow to stabilize the qubits. As will be appreciated, the command circuit 6 is generally configured to deliver control signals to the physical arrangement 4 to also prepare, manipulate, and measure the logical qubits encoded with the physical data qubits using one or more error-correction code(s).

The operation of a phase-flip repetition code to encode a logical qubit with physical data cat qubits and ancilla qubits (whether ancilla cat qubits or otherwise) is known, for instance as described in: Guillaud, Jérémie, and Mazyar Mirrahimi. "Repetition cat qubits for fault-tolerant quantum computation." Physical Review X 9.4 (2019): 041053 (using ancilla cat qubits); or Putterman, Harald, et al. "Hardware-efficient quantum error correction using concatenated bosonic qubits." arXiv preprint arXiv:2409.13025 (2024) (using transmon ancilla qubits).

In general, the performance of a code is given by a triplet of number [n,k,d]: n is the number of physical data qubits (i.e., not including the ancillas for the parity checks); k is the number of logical qubits encoded and d is the distance (i.e. Hamming distance) of the code. The repetition code is a [n,1,n] code, and thus has a value of kd/n equal to 1. There exist some classical codes which improves upon the repetition code, and the present Inventors have further recognised that in some embodiments such other classical error-correcting codes may also be used with cat qubits to better prepare magic states, as will be described in more detail below.

### Magic state distillation

The present Inventors have realized that it may be particularly advantageous to provide a quantum computer implemented in a noise-biased qubit architecture, such as using logical qubits encoded with physical data cat qubits, and configured to operate a universal gate set comprising at least one single qubit logical rotation about the Pauli X- or Z-axis (such as a T gate) as the non-transversal and non-Clifford gate. This is contrary to the aforementioned prior art, which only disclose implementing logical Toffoli gates with cat qubits as the non-Clifford gate.

For the avoidance of doubt, herein a unitary operator U is considered transversal with respect to a partition {*Qi*} of the physical qubits of an [[*n, k, d*]] code if it can be expressed as *U* = ⊗*ᵢ Uᵢ*, where each *Uᵢ* acts non-trivially only on qubits in *Qᵢ,* and the maximum number of qubits in *Qᵢ* is equal to or smaller than 2. Here, a partition of a set is a collection of non-empty and disjoint subsets of the set, whose union is the whole set. This definition of "transversal" is consistent with, e.g., Eastin, Bryan, and Emanuel Knill. "Restrictions on transversal encoded quantum gate sets." Physical review letters 102.11 (2009): 110502; Jochym-O'Connor, Tomas, Aleksander Kubica, and Theodore J. Yoder. "Disjointness of stabilizer codes and limitations on fault-tolerant logical gates." Physical Review X 8.2 (2018): 021047; and Quintavalle, Armanda O., Paul Webster, and Michael Vasmer. "Partitioning qubits in hypergraph product codes to implement logical gates." Quantum 7 (2023): 1153.

As will be appreciated, a magic state shifts the complexity of performing a *T_{L}* gate (or indeed, generally any single logical qubit *jπ*/4 rotations about the Pauli X- or Z-axis where *j* is an integer selected from *j* ∈ {1, 2, 3, 5, 6, 7}) to the task of preparing a specific logical magic state |*T_{L}*〉 (or said any single logical qubit rotation). The form of this magic state is chosen depending on the gate we want to apply, e.g. for the *T_{L}* gate, |*T_{L}*〉 *=* |0〉*_{L}* + *e*^{*iπ*/4}|1〉*_{L}.* Then, once |*T_{L}*〉 is prepare, the logical *T_{L}* gate can be performed on a given logical qubit by gate teleportation from the logical qubit in the magic state to the given logical qubit, e.g. via: (i) performing a transversal logical CNOT gate between the given logical qubit as control and the magic state logical qubit as target; and (ii) measurement-based uncomputation by measuring the logical Z operator of the magic state logical qubit and, depending on the result of the logical measurement, performing a corrective single qubit logical rotation on the given logical qubit (in this case an S gate).

Thus, one needs to prepare a high quality logical magic state as the fidelity of the *T_{L}* gate is directly linked to the fidelity of the magic state. For distillation protocol, the idea is to take several low fidelity (i.e. high probability of error) magic states and output a lower number (e.g. a single) higher fidelity, i.e. "distilled", magic state(s).

### Magic state distillation for rotation about Z axis

Figure 2 shows an arrangement 4 of data cat qubits 8 and a command circuit 6 configured to distil a magic state |*m̃*〉 (e.g., $\left|{m}^{˜}\right〉 = {{\left|{T}^{†}\right〉}^{magic}}_{L}$)*,* according to an embodiment.

The uppermost line in Figure 2 shows a linear array 20 of three data cat qubits 8. A logical qubit is encoded with the three data cat qubits 8 of the linear array 20 using a phase-flip repetition code of distance three (wherein the ancilla qubits are omitted here for clarity).

This may be done by repeatedly performing stabilizer measurements as known in the art, wherein the end data cat qubit 8 and the middle data cat qubit 8 form the data cat qubits 8 of a first stabilizer, and the other end data cat qubit 8 and the middle data cat qubit 8 form the data qubits 8 of a second stabilizer, in a similar manner as Figure 1. For the avoidance of doubt, the stabilizer measurement of each stabilizer is performed by performing CNOT gates between each of the data cat qubits 8 of the stabilizer as target with an ancilla qubit (not shown) coupled therebetween as control, and subsequently measuring the parity (X basis measurement) of the ancilla qubit. The result is recorded, for later decoding and appropriate correction. Typically, a plurality of rounds of stabilizer measurements are performed. This applies for all logical qubits encoded with data cat qubits via an error-correcting code described herein, and will not be described in detail further.

The lowermost line also shows a linear array 20 of three data cat qubits, which are also used to encode another logical qubit using a phase-flip repetition code of distance three in the same manner as described above for the uppermost line.

The uppermost and lowermost repetition codes will be used to prepare the noisy magic or measure in the magic state basis (e.g., |*T*〉*_{L}*) states or perform a noisy |*T*〉*_{L}* measurement to teleport a |*T*〉*_{L}* gate into the other logical qubits (referred to below as validation or output logical qubits) used in the outer code of the distillation scheme, as will be discussed in detail below. As this preparation/measurement is referred in the literature as injection/noisy measurement, these repetition codes are herein referred to as first injection repetition codes and the logical qubits encoded thereby are referred to as first injection logical qubits.

Herein, a logical qubit is referred to as being encoded with data cat qubits using an error-correcting code. Thus, the terms pertaining to a "logical qubit", the arrangement of the underlying "data cat qubits" and the "code" used to encode it may be used interchangeably for ease of description, for instance we may refer to the linear array 20, the first injection repetition code 20 or the first injection logical qubit 20.

Of course, the distance being three for both of the first injection repetition codes is only exemplary, and repetition codes having distances greater than three (ergo, involving greater than three data cat qubits 8) can be used. Moreover, the first injection repetition codes need not be of the same distance, for instance one may have a first distance (of three or higher) and the other may have a second distance (of three or higher) different to the first distance.

The second from uppermost line shows a linear array 22 of seventeen data cat qubits 8. Similar to the first injection repetition codes, the seventeen data cat qubits 8 of this line may be used to encode a logical qubit using a phase-flip repetition code of distance seventeen. Again, this may be done by repeatedly performing stabilizer measurements as known in the art, wherein each adjacent pair of data cat qubits together contribute to a stabilizer, the error syndrome of which (stabilizer measurement) can be measured using an ancilla qubit coupled therebetween (as described above).

The second from lowermost line also shows a linear array 22 of seventeen data cat qubits 8, which may also be used to encode another logical qubit using a phase-flip repetition code of distance seventeen in the same manner as described above for the second from uppermost line.

The repetition codes of the second from uppermost and second from lowermost linear arrays 22 will be used to encode logical "ancilla" qubits for performing multi logical Pauli Z measurement operations involving other logical qubits (e.g. to realise Pauli product rotations between the other logical qubits referred to below as validation or output logical qubits). Thus, each of these linear arrays 22 may act as an ancilla bus, as discussed below. Moreover, each linear array 22 may use fewer than the total of the data cat qubits therein to create smaller repetition codes used to encode logical qubits acting as injection logical qubit, for instance to prepare the noisy magic (e.g., |*T*〉*_{L}*) states or perform a noisy *T_{L}* measurement to teleport a *T_{L}* gate into different ones of the other logical qubits. As such, these repetition codes are herein referred to as ancilla bus repetition codes, however they may also provide one or more second injection repetition codes, as appropriate. Therefore, depending on the use thereof, the logical qubits encoded thereby are referred to as ancilla bus logical qubits or second injection logical qubits.

The middle line of Figure 2 also shows seventeen data cat qubits. However, the seventeen data cat qubits are explicitly segmented into smaller linear arrays 24,26 of data cat qubits 8 to be used in repetition codes shown positioned "end-to-end", with the delineation between the distinct repetition codes indicated conceptually by the rectangular shapes surrounding the physical data qubits in Figure 2.

The leftmost linear array 24 is formed of five data cat qubits 8, and the repetition code using these data qubits 8 is thus of distance five. This repetition code is used to encode the logical qubit which will take the "distilled" magic state output from the distillation scheme, and is therefore referred to herein as the output repetition code.

The remaining linear arrays 26 of data cat qubits 8 of the middle line are each formed of three data cat qubits 8, wherein each repetition code using each grouping of three data cat qubits 8 is used to encode a logical qubit (again, of distance three here). These repetition codes are here to detect errors on the teleported noisy T gates used within an outer code, and are therefore referred as validation repetition codes, with the logical qubits encoded thereby being referred to as validation logical qubits.

It is noted that the number of physical data cat qubits 8 in each of the validation repetition codes (linear arrays 26) can preferably be smaller than the number of physical data cat qubits 8 in the output repetition code (linear array 24), as shown in Figure 2. This is because if there is a Z logical error on one of the validation logical qubits during the protocol described herein, this Z logical error will commute with the *π*/4 rotation described below and then trigger the final X logical measurement. In other words, the X logical measurement of the outer code can both detect faulty *π*/4 rotation as well as Z logical error on the validation logical qubit. Overall, two Z logical errors can be tolerated on the validation logical qubits during the scheme. Thus, the present Inventors have recognised that it allows to take the distance of the validation repetition codes smaller without affecting the performance of the scheme.

Moreover, the present Inventors have discovered that if a bit-flip error occurs on one of the validation logical qubits (e.g. by a bit-flip error occurring on one of the underlying physical data cat qubits 8), this will also be detected by the X logical measurement of the outer code. Thus, one bit-flip error on the validation logical qubit can be tolerated during the distillation protocols described herein. The present Inventors have thus discovered that the average number of bosons of the "smallest" data cat qubit of each validation logical qubit (i.e., for each validation logical qubit, the physical data cat qubit having the smallest average number of bosons contributing to the cat state) can be made smaller than the "smallest" data cat qubit of the output logical qubit. This reduction is eminently desirable, as it is known that phase-flip errors on physical cat qubits decreases linearly with decreasing average boson number. Thus, by decreasing both the distance of the validation repetition codes and the average boson numbers of the data cat qubits used therein, the present distillation scheme is able to distil magic states of the higher fidelity using the same number of physical data cat qubits 8.

Of course, the number of physical data cat qubits 8 used in any of the above phase-flip repetition codes is merely exemplary. Indeed, for each repetition code, preferably a greater number of physical cat qubits 8 are used than what is shown in Figure 2 (as the performance of the repetition code, namely its ability to detect errors, increases with code distance, i.e. increases with the number of physical cat qubits 8 used).

Each of the data cat qubits 8 of the injection repetition codes 20 is coupled to a data qubit 8 of the adjacent ancilla bus repetition codes 22. Each of the data cat qubits 8 of the output 24 and validation 26 repetition codes is coupled to a data cat qubit 8 of at least one of the ancilla bus repetition codes 22. By "coupled" it is meant that a two-qubit entangling gate may be performed between the two coupled data cat qubits, such as (and in particular) a CNOT gate, but also other controlled-unitary gates as appropriate such as a CZ gate. Thus, the coupled data cat qubits 8 need not actually be directly connected (although this may be preferable), but may be indirectly coupled, for instance with an (unshown) ancilla qubit therebetween. That is important is that the two-qubit gate can be performed between the data cat qubits.

The embodiment of Figure 2 shows two ancilla bus repetition codes 22 and two first injection repetition codes 20. However, this is not strictly necessary, i.e. only one ancilla bus repetition code 22 and one first injection repetition code 20 could be used, however the distillation protocol described below would take more time as the various required operations could not be as much parallelizable.

As such, the arrangement of Figure 2 may be used to distil a magic state as shown in Figure 3, which shows a method for distilling a magic state implemented by a quantum computer comprising a plurality of physical data cat qubits 8 (which may for instance comprise the arrangement of Figure 1) using an outer code (a magic state distillation outer code), according to an embodiment of the invention. Here we discuss the distillation of a magic *T*^{†}-state, |*T*^{†}〉*_{L},* although it will be immediately apparent that the general steps of the distillation be used to distil of magic states, such as a magic S-state, |*S*〉*_{L}*.

The distillation of some of the embodiments described herein may be of a magic state for a logical quantum gate corresponding to a *jπ*/4 rotation about the Pauli Z-axis, wherein *j* is an integer selected from *j* ∈ {1,2,3,5,6,7}.

In a first step 301, a plurality of logical qubits are encoded, for instance, when referring to Figure 1, the validation repetition codes 26 and output repetition code 24 may respectively be prepared such that each logical qubit encoded is in a |+〉*_{L}* state. As will be appreciated, for a given repetition code, this may be done by physically preparing each of the physical data cat qubits of the repetition code in a |+〉 state, and selectively measuring the stabilizers of the code to ensure a logical |+〉*_{L}* state is encoded therein.

Of course, this is just one option, the validation repetition codes 26 and output repetition code 24 may respectively be prepared such that each logical qubit encoded is in other logical states, for instance in the |-〉*_{L}* state.

In a second step 303, a distilled magic state is prepared with the validation logical qubits 26 and the output logical qubit 24 using the outer code to host the distilled magic state in the output logical qubit 24, wherein the outer code is configured to have a logical gate corresponding to the *jπ*/4 rotation and/or -*jπ*/4 rotation which is transversal.

In particular, an initial magic state (e.g. a noisy magic T-state |*T*〉*_{L}*) may be teleported into each of the validation repetition codes 26. Explicitly this is a single Pauli rotation on each validation logical qubit 26, wherein the single Pauli rotation is related to the above intended *jπ*/4 rotation of the magic state being distilled by being a $\frac{jπ}{4} + \frac{l ∗ j ∗ π}{2} \left[2π\right]$ rotation with *l* being any integer and [2*π*] denoting modulo 2*π*. For instance, to distil a |*T*^{†}〉*_{L}* magic state, the outer code has a logical T gate which is transversal (a logical gate corresponding to the *π*/4 rotation), such that the single Pauli rotation is also for the π/4 rotation.

This can be done for each validation repetition code 26 by first preparing a noisy T state in the sub-part 23 of the linear array 22 (the ancilla bus) having data cat qubits 8 which are each respectively coupled to a data cat qubit 8 of the validation repetition code 26, with Figure 2 indicating the sub-part 23 of the upper linear array 22 corresponding to the left-most of the validation repetition codes 26. This sub-part 23 of linear array 22 is thus a repetition code used to encode the second injection logical qubit briefly described above. Such a sub-part 23 is thus referred to herein as a second injection repetition code 23. Preparing such a noisy T state is colloquially called the "injection", and it is usually done by preparing the data cat qubits 8 of the second injection repetition code 23 in |*T*〉|0〉 ... |0〉 (i.e. one of the data qubits physically prepared in a |*T*〉 state, with the remaining data cat qubits being physically prepared in the |0〉 state) and then measuring the stabilizers of the second injection repetition code 23 a plurality of time.

It is noted here that a physical |*T*〉 state (or any rotation about the qubit Z axis) can be applied on a physical cat qubit e.g. by driving the cat qubit at a frequency corresponding to the resonant frequency of its "memory" mode (the electromagnetic mode in which the cat state is hosted) for a duration of time chosen such that the cat qubit rotates by the requisite amount. For instance, any of the Z rotation protocols described in: Guillaud, Jérémie, and Mazyar Mirrahimi. "Repetition cat qubits for fault-tolerant quantum computation." Physical Review X 9.4 (2019): 041053 ; Touzard, Steven, et al. "Coherent oscillations inside a quantum manifold stabilized by dissipation." Physical Review X 8.2 (2018): 021005. ; or Gautier, Ronan, Mazyar Mirrahimi, and Alain Sarlette. "Designing high-fidelity Zeno gates for dissipative cat qubits." PRX Quantum 4.4 (2023): 040316.

After preparing the noisy T state in the second injection repetition code 23, this noisy state is teleported into the corresponding validation repetition code 26 (i.e. the one having data qubits 8 coupled to those of the second injection repetition code 23).

The fidelity of this step may be improved by post-selecting after preparing the noisy T state, which requires only proceeding to the teleportation provided the stabilizer measurements of the second injection repetition code 23 have not detected an error after a threshold number of rounds, as described for instance in Ying Li. "A magic state's fidelity can be superior to the operations that created it". New Journal of Physics 17.2 (2015), p. 023037.

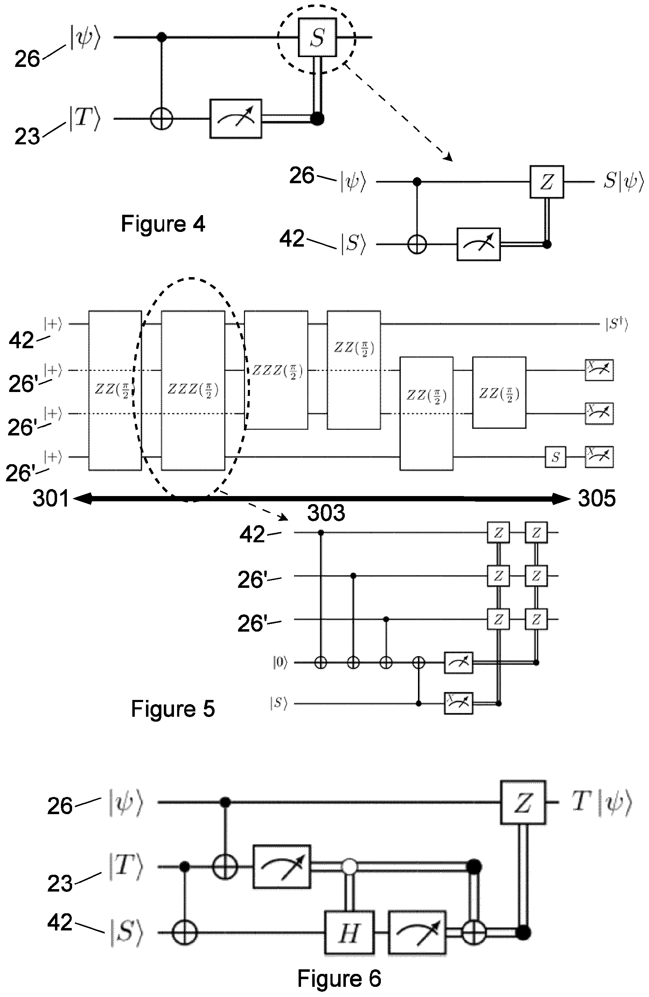

Figure 4 shows an exemplary scheme for teleporting the noisy T state from the second injection logical qubit 23 to the corresponding validation logical qubit 26 according to an embodiment, which is in the formalism of quantum circuit diagram wherein each line represents a (logical) qubit. The T state teleportation is shown in the upper panel, wherein a CNOT gate is performed between the validation logical qubit 26 as control and the noisy T state of the second logical qubit 23 as target (e.g. via corresponding physical CNOT gates performed between each of the coupled data cat qubits 8 of the respective logical qubits). The second injection logical qubit 23 is then measured in the Z basis (e.g. by performing a Z measurement on each of its underlying data cat qubits 8 and taking the product). Depending on the results of the Z measurement, an S gate is performed on the validation logical qubit 26.

As will be appreciated, the S gate itself is not transversal on any classical phase-flip code such as the repetition code, so another distillation may be used (e.g. using the same methods described herein) to prepare a magic S state on another logical qubit 42 (as this S gate requires high fidelity), referred to herein as the magic S state logical qubit 42, which is subsequently teleported to the validation logical qubit 26 to thereby perform the requisite S gate. The S state teleportation is shown in the lower panel down in Figure 4, wherein again a CNOT gate is performed between the validation logical qubit 26 as control and the magic state of the magic S state logical qubit 42 as target. Again, this may be via corresponding physical CNOT gates performed between each data cat qubit 8 of the validation logical qubit 26 and each data cat qubit of the magic S state logical qubit 42 - which might be provided by the other ancilla bus 22 for example). The magic S state logical qubit 42 is then measured in the Z basis (e.g. by performing a Z measurement on each of its underlying data cat qubits 8 and taking the product). Depending on the results of the Z measurement, a Z gate is performed on the validation logical qubit 26 (the Z gate being transversal and therefore applied to each of the data cat qubits 8 of the validation logical qubit 26 and or can be tracked in software which is updating the so-called Pauli frame).

Other circuits for applying the S gate can be conceived or adapted in a similar manner as the lower panel of Figure 4. For instance, it is well known how to take a magic |*S*^{†}〉*_{L}* state instead and teleport in such a way as to apply an S gate to the validation logical qubit 26. For example, in the lower panel of Figure 4, if the logical qubit 42 is an |*S*^{†}〉*_{L}* then an S gate can be "applied" to the validation logical qubit 26 via teleportation simply by following the operations of the circuit but anti-controlling on the logical qubit 42 when determining to apply the Pauli Z to be applied to validation logical qubit 26, i.e. if the Z measurement on logical qubit 42 yields a +1 one determines the Z gate is to be applied on logical qubit 26, and if the result yields -1 you do determine that no Z gate needs to be applied to the logical qubit 26).

The upper panel of Figure 5 shows a quantum circuit diagram for distilling a magic |*S*^{†}〉*_{L}* state, according to an embodiment, for instance said magic |*S*^{†}〉*_{L}* state can be distilled in logical qubit 42 in Figure 4 (explicitly in which case the circuit of the lower panel of Figure 4 would be altered as known in the art to take a |*S*^{†}〉*_{L}* and teleport in such a way that an S gate is applied to the validation logical qubit 26). Here, logical qubit 42 is an output qubit (in a similar manner as described above in the example of Figure 2). This distillation scheme itself indeed follows an embodiment of the invention as described in Figure 3. Namely, in a first step 301 three validation qubits 26' and one output qubit 42 are encoded each with data cat qubits using a repetition code in the |+〉*_{L}* state. The validation logical qubits 26' may be encoded using others of the validation repetition codes 26 of Figure 2 which are not that encoding the validation logical qubit 26 used in the T state teleportation shown in Figure 4. Then a series of Pauli product rotations of π/2 about the Z axis are performed each time on at least two logical qubits (in Figure 3, the dashed lines passing through the $ZZ \left(\frac{π}{2}\right)$ or the $ZZZ \left(\frac{π}{2}\right)$ (defined as $ZZZ \left(θ\right) = {e}^{- \frac{iθ}{2} ZZZ}$ ) boxes denote that the relevant logical qubit does not participate in that Pauli product rotation). For the avoidance of doubt, a Pauli product rotation is given by the exponential of the tensor product of Pauli rotations on the logical qubits involved in the Pauli product rotation.

A single Pauli rotation of *π*/2 about the Z axis is then performed on one of the validation logical qubits 26' (the bottom line, designated by the single S gate symbol).

Similar to the "noisy" T gate described above, this can again be done for that validation repetition code 26' by first preparing a noisy S state in an adjacent the linear array having data cat qubits 8 which are each respectively coupled to a data cat qubit 8 of the validation repetition code 26' (which is thus a second injection repetition code). Preparing such a noisy S state is usually done by preparing the data cat qubits 8 of the second injection repetition code 23 in |*S*〉|0〉 ... |0〉 (i.e. one of the data qubits physically prepared in a |*S*〉 state, with the remaining data cat qubits being physically prepared in the |0〉 state) and then measuring the stabilizers of the second injection repetition code plurality of times. The noisy S state may be teleported to the corresponding validation logical qubit 26' for instance using the scheme shown in the lower panel of Figure 4 (where the second injection repetition code here is then the lower logical qubit with reference label 42 in Figure 4 and the validation repetitio code 26' here is then the upper logical qubit with reference label 26). A CNOT gate is performed between the validation logical qubit 26' as control and the noisy S state of the second injection logical qubit as target (e.g. via corresponding physical CNOT gates performed between each of the coupled data cat qubits 8 of the respective logical qubits). The second injection logical qubit is then measured in the Z basis (e.g. by performing a Z measurement on each of its underlying data cat qubits 8 and taking the product). Depending on the results of the Z measurement, a Z gate to be performed on the validation logical qubit 26' is derived (which can be physically performed, or tracked in software, i.e. so-called "updating the Pauli fame").

The lower panel of Figure 5 shows a quantum circuit diagram for an exemplary method of performing a Pauli product rotation by an angle of *π*/2 about the Z axis, which may be used in embodiments herein (for instance it is the second Pauli product rotation of the magic S state distillation scheme of the upper panel of Figure 5).

Here the Pauli product rotation $ZZZ \left(\frac{π}{2}\right)$ involves three logical qubits, namely the output magic S state logical qubit 42 and two of the validation logical qubits 26', as well as two further logical qubits one prepared in the logical |0〉*_{L}* state and the other in a "noisy" S state. The logical qubit in |0〉*_{L}* may for instance be provided by data cat qubits 8 of one of the buses 22 in Figure 2, provided that the repetition code encoding the logical qubit |0〉*_{L}* is extended round such that some data cat qubits 8 thereof are able to perform transversal CNOT gates with data cat qubits of the repetition code encoding logical qubit 42.

Of course, one could simply use an additional magic state factory similar to that shown in Figure 2 but having four logical qubits (namely three validation repetition codes 26' and a single output repetition code 42, as well as the corresponding buses).

Alternatively, the logical qubit 42 may instead be provided by the qubits shown as the output repetition code 24 in Figure 2 such that the logical qubit |0〉*_{L}* utilizes the data cat qubits 8 of one of the buses 22 in Figure 2 without utilizing extra data cat qubits to extend further, provided that at the end of the magic S state distillation scheme, the repetition code hosting the magic S state is moved via lattice surgery to one of the ancilla buses 22 so as to liberate the data cat qubits 8 of the output repetition code 24 to enable output logical qubit 24 to perform its role in the outer code of the T state distillation.

There are a variety of different implementations involving lattice surgery and extending/contracting and merging repetition codes which would enable the quantum system of Figure 2 to perform the operations in the requisite order described herein.

Once again, the logical qubit prepared in a "noisy" S state can be done similar to the "injection" described above. For instance, by using data cat qubits 8 of the linear array 20 (i.e. the first injection repetition code 20) adjacent to the bus 22 used to encode the logical qubit |0〉*_{L}*, and explicitly by preparing the data cat qubits 8 of the first injection repetition code 20 in |*S〉*|0〉 ... |0〉 (i.e. one of the data qubits physically prepared in a |*S*〉 state, with the remaining data cat qubits being physically prepared in the |0〉 state) and then measuring the stabilizers of the first injection repetition code 20 a plurality of time. Physically preparing the data cat qubit in an |*S*〉 state may be similar to the schemes described above, but wherein the signal inducing the rotation about Z has a duration such that the rotation is *π*/2 rather than *π*/4.

Three CNOT gates are performed with each of the logical qubit 42, the validation logical qubits 26', and the "noisy" S state logical qubit |*S*〉 each time as control with the logical qubit in |0〉*_{L}* as target. Subsequently, the "noisy" S state logical qubit |*S*〉 is measured in X and the logical qubit in |0〉*_{L}* is measured in Z, with one or two Z Pauli corrections being applied (or tracked in software) on each of the logical qubit 42 and the validation logical qubits 26' depending on the results of the measurements.

A Pauli product rotation $ZZ \left(\frac{π}{2}\right)$ involving only two logical qubits may then be achieved in a similar manner as shown in the lower panel of Figure 5, merely with one of the three logical qubits designated by the three upper lines of the quantum circuit diagram being removed.

The validation logical qubits 26' are then each measured in the X basis (step 305 in Figure 3), and depending on the results either the distillation is accepted or the entire scheme is repeated.

Figure 6 shows a quantum circuit diagram showing another exemplary scheme for teleporting the noisy T state using the second injection logical qubit 23 corresponding validation logical qubit 26 (i.e. the sub-part 23 of bus 22 adjacent to that validation repetition code 26) as well as the magic S state logical qubit 42 (which can for instance be distilled following the magic S state distillation scheme of Figure 5). The advantage of the embodiment of Figure 6 is that distilling the magic S state for logical qubit 42 may be done at the start, which may be preferable as an S gate need not be applied directly on the validation logical qubit 26 as required in the scheme of Figure 4, thereby simplifying the scheduling of the various operations.

A first CNOT is performed between the second injection logical qubit 23 (having the noisy T state injected therein as described above) as control and the magic S state logical qubit 42 as target. A second CNOT is performed between the validation logical qubit 26 as control and the second injection logical qubit 23 as target. A Z measurement is then performed on the second injection logical qubit 23. The white circle in the quantum circuit diagram indicates an anti-control, such that if the Z measurement on the second injection logical qubit 23 returns -1, then a measurement is performed on the magic S state logical qubit 42 in the Z basis, whereas if the Z measurement on the second injection logical qubit 23 returns +1, then a measurement is performed on the magic S state logical qubit 42 in the X basis (this is represented graphically in the quantum circuit algorithm of Figure 6 by the Hadamard "H" symbol followed by Z measurement symbol). Depending on the result of the measurement on the magic S state logical qubit 42, a Pauli Z correction is applied to the validation logical qubit 26.

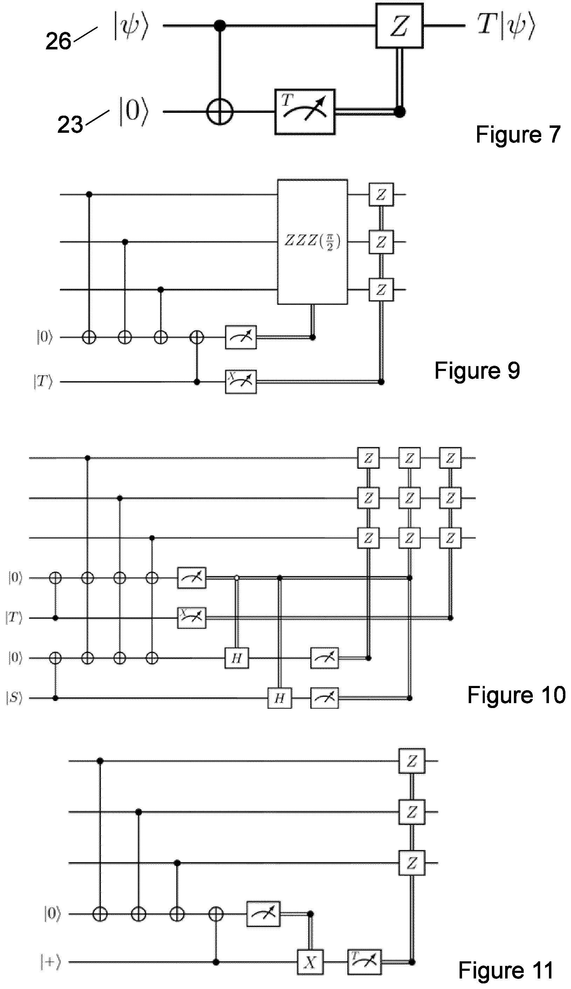

Figure 7 shows a quantum circuit diagram showing another exemplary scheme for teleporting the noisy T state using the second injection logical qubit 23 corresponding to the validation logical qubit 26 according to an embodiment. Here, the second injection logical qubit 23 is not explicitly prepared in a noisy T state, but rather in |0〉*_{L}*. A CNOT gate is the performed between the validation logical qubit 26 as control and the second injection logical qubit 23 as target (e.g. via corresponding physical CNOT gates performed between each of the coupled data cat qubits 8 of the respective logical qubits). The second injection logical qubit 23 is then measured in the T state basis.

This T measurement replaces the explicit noisy T state injection, and can be achieved by measuring in Z all the data cat qubits 8 of the second injection logical qubit 23 except one. A physical T gate is performed to this one data cat qubit which has not been measured, and subsequently measuring this one data cat qubit in the X basis. The result of the X measurement is the result of the T measurement. Pre-selection may be performed prior to the T measurement, namely by ensuring that the previous threshold number of stabilizer measurements of the repetition code of the second injection logical qubit 23 did not detect any errors (and if not, continuing the stabilizer measurements until it is the case).

Returning again to the general method of Figure 3, in the second step 303, using the outer code results in the output logical qubit 24 hosting the distilled magic state. There are a large number of such outer codes, however what is important for an outer code to work is that the outer code permits (or has) a logical gate corresponding to the magic state and/or its inverse which is transversal (so corresponding to the *jπ*/4 rotation and/or *-jπ*/4 rotation), and that the number of distilled magic states is the number of output logical qubits. Examples of such outer codes include the well-known "15-qubit code" disclosed in Bravyi, Sergey, and Alexei Kitaev. "Universal quantum computation with ideal Clifford gates and noisy ancillas." Physical Review A-Atomic, Molecular, and Optical Physics 71.2 (2005): 022316, the "15-to-1 code" or the "20-to-4 code" of Litinski, Daniel. "A game of surface codes: Large-scale quantum computing with lattice surgery." Quantum 3 (2019): 128; or other codes such as those disclosed in: Haah, Jeongwan, and Matthew B. Hastings. "Codes and protocols for distilling $ t $, controlled-$ s $, and toffoli gates." Quantum 2 (2018): 71; Bravyi, Sergey, and Jeongwan Haah. "Magic-state distillation with low overhead." Physical Review A-Atomic, Molecular, and Optical Physics 86.5 (2012): 052329; Jones, Cody. "Multilevel distillation of magic states for quantum computing." Physical Review A-Atomic, Molecular, and Optical Physics 87.4 (2013): 042305; Fowler, Austin G., Simon J. Devitt, and Cody Jones. "Surface code implementation of block code state distillation." Scientific reports 3.1 (2013): 1939; Nezami, Sepehr, and Jeongwan Haah. "Classification of small triorthogonal codes." Physical Review A 106.1 (2022): 012437 ; and the "7-to-1" Fowler, Austin G., et al. "Surface codes: Towards practical large-scale quantum computation." Physical Review A-Atomic, Molecular, and Optical Physics 86.3 (2012): 032324.

In a third step 305, all of the validation logical qubits 26 are measured either in X basis or the Z basis. If one of the logical measurements is -1 the entire distillation is repeated, if not it is terminated and the magic state hosted by the output logical qubit 24 may be used in subsequent operations (i.e. used to perform the corresponding gate on another logical qubit when required during a quantum computation). It is important to note that there is no chronological order to respect between the gates defined using the outer code in step 305, only that they need to occur before step 305. Also, the preparation in step 301 requires several rounds of stabilizers measurements, but at least some of these rounds can be performed at the same time as gates in step 305.

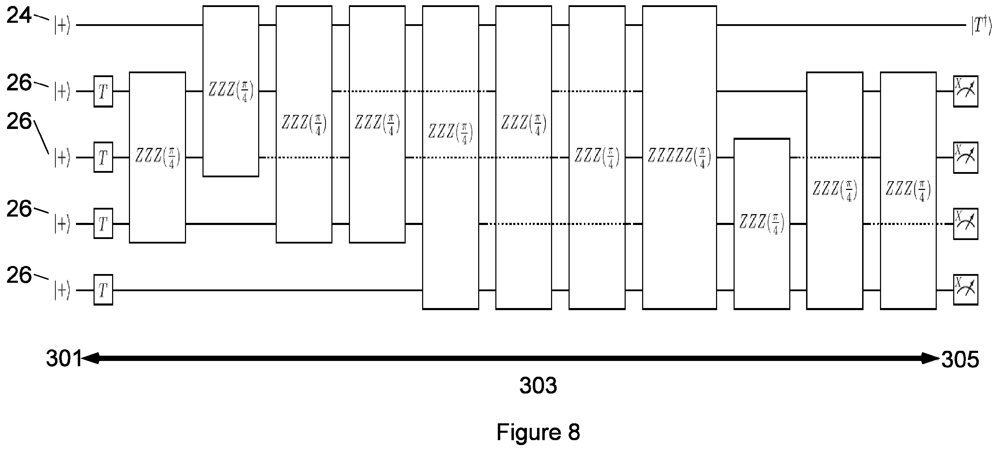

Figure 8 shows a quantum circuit diagram showing an exemplary set of gates constructed from a "15 to 1" outer code for distilling a magic T state, according to an embodiment. As will be appreciated, this is thus a 15-to-one scheme taking a total of five validation and output logical qubits (e.g. those discussed in relation to Figure 2) and outputting a single distilled magic state hosted by the output logical qubit 24. The different steps of the method as outlined in Figure 3 are indicated at the bottom of Figure 8.

It is also noted here that the exemplary quantum circuits shown in Figures 5 and 8 can be derived using an outer code (having the transversal gate as required and described above) via numerous ways known in the art. For instance, this may be done via: (i) building a H_{X} parity check matrix (e.g., in an analogous manner as described below in relation to matrix 1006, but for the X operator); build the corresponding generator matrix G_{X} (e.g., in an analogous manner as described below in relation to matrix 1008, but for the X operator); (iii) vertically stack H_{X} above G_{X} to form a stacked matrix; and (iv) obtaining the circuit by (a) placing a preparation operation in |+〉 or |-〉 preceding each line in the stacked matrix, (b) for each column of the stacked matrix placing a $\frac{jπ}{4} + \frac{l ∗ j ∗ π}{2} \left[2π\right]$ rotation wherever there is a non-null entry (e.g., so multiple "1's" in a column would correspond to a Pauli product rotation involving those logical qubits represented by the line having a "1" ), and (c) placing a Z measurement operation at the end of each line.

In the embodiment of Figure 8, the method thus comprises all of the validation 26 and output 24 logical qubits in |+〉*_{L}*, performing the single Pauli rotation on each of the validation logical qubits 26 (indicated by the T gates), applying a plurality of Pauli product rotations each involving two or more of the validation 26 and output 24 logical qubits, and finally measuring each of the validation logical qubits 26 in the X basis. The distillation is accepted only if the four logical X measurements are +1, otherwise the scheme is restarted.

The Pauli product rotations are rotations of *π*/4 about the Z axis, e.g. $ZZZ \left(\frac{π}{4}\right) = {e}^{i \frac{1}{2} ZZZ \frac{π}{4}}$ *,* and indicated by the black boxes covering several lines of the logical qubits. When a line is dotted through one of the black boxes of the Pauli product rotations, it means that the logical qubit corresponding to that line is not involved in the Pauli product rotation.

Similar to the T state teleportation discussed above in Figures 4, 6, and 7 (which are single Pauli rotations of *π*/4), there are a number of different ways to perform the Pauli product rotations, of which are few examples shall now be described.

Figure 9 shows a quantum circuit diagram showing an exemplary scheme for teleporting a Pauli product *π*/4 rotation about Z from a noisy T state, according to an embodiment, which can be seen as a generalisation of Figure 4.

Figure 10 shows a quantum circuit diagram showing another exemplary scheme for teleporting a Pauli product *π*/4 rotation about Z from a noisy T state, according to an embodiment, which can be seen as a generalisation of Figure 6.

Figure 11 shows a quantum circuit diagram showing another exemplary scheme for teleporting a Pauli product *π*/4 rotation about Z from a noisy T state, according to an embodiment, which can be seen as a generalisation of Figure 7.

### Magic state distillation for rotation about X axis using repetition codes

As will be appreciated, the embodiments described in Figures 2 and 4-11 may in particular be applied to distil a magic state for a logical quantum gate corresponding to a *jπ*/4 rotation about the Pauli Z-axis, wherein *j* is an integer selected from *j* ∈ {1,2,3,5,6,7}.

However, the present Inventors have further discovered that the method of Figure 3 can advantageously also be applied to distilling a magic state for a logical quantum gate corresponding to a *jπ*/4 rotation about the Pauli X-axis, wherein *j* is an integer selected from *j* ∈ {1,2,3,5,6,7}.

In particular, the present inventors have recognised that it may be particularly useful to exploit multi-qubit measurements in the X basis (so-called XX measurement or "M_{XX}" for a pair of qubits, XXX measurement or "M_{XXX}" for a triplet, and so on). This is because multi-qubit X measurements are easier to implement (that is, require fewer physical data qubits) with data cat qubits encoded in a classical phase-flip error-correcting code (such as a repetition code) as compared to multi-qubit measurements in the Z basis (Z...Z or "M_{Z...Z}").

For example, multi-qubit measurements in the Z basis correspond to the series of CNOT gates at the start of the circuits of Figures 9-11 followed by the Z measurement of the |0〉*_{L}* logical qubit (which amounts to an M_{Z...Z}). This is because multi qubit Z measurements require to initialize all the physical data cat qubits 8 of a bus 22 (or a sub-part of the bus, e.g. sub-part 23) in |0〉*_{L}* logical and perform transversal CNOTs. However, multi-qubit X measurements only require to initialize one physical ancilla qubit in |+〉 (if this physical ancilla qubit is connected to the corresponding repetition code), and perform physical CNOTs between this qubit, and one physical data cat qubit providing the X support in each repetition code (or indeed other classical code) that is part of the X measurement. This process has to be repeated for multiple rounds, but in the case this extra qubit is connected to two repetition codes for instance, only one qubit would be required to perform the XX measurement. In the case the connectivity does not permit for the ancilla to be connected to each repetition code which are involved in the parity measurement, a bus needs to used to perform lattice surgery (detailed below).

Accordingly, taking the specific example of the distillation method described in Figure 8, one option to convert it into leveraging multi-qubit X measurements is to distil a |*Rₓ*(*π*/4)〉 state, namely |*Rₓ*(*π*/4)〉 = *Rₓ*(*π*/4)|0〉 = cos (*π*/8)|0〉 - isin (*π*/8)|1〉 , by switching all operations in the X basis to the equivalent operation in the Z basis (and vice versa). Therefore, to distil a single high-quality magic |*Rₓ*(*π*/4)〉 state, the single Pauli rotations on the validation logical qubits 26 in step 303 are no longer *π*/4 rotations about the Z axis (corresponding to T), but rather *π*/4 rotations about the X axis.

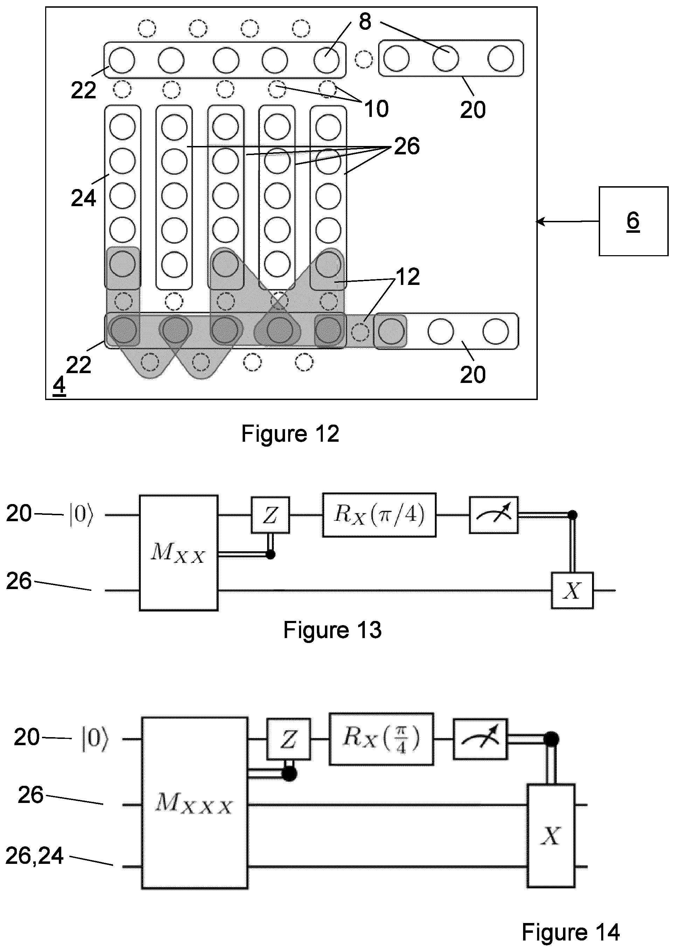

Thus, Figure 12 shows an arrangement 4 of data cat qubits 8 and a command circuit 6 configured to distil a magic state which corresponds to a *jπ*/4 rotation about the Pauli X-axis, according to an embodiment. Like features take the same reference numerals as those in Figures 1 and 2.

The five vertical repetition codes are the output 24 and the validation 26 repetition code. The buses to perform the X...X measurement are the horizontal repetition codes 22 at the top and the bottom of the output 24 and validation 26 repetition codes. The two injection repetition codes 20 are on the side of the buses 22. The physical ancilla qubits 10 (which may or may not be cat qubits) are represented for the buses 22 for clarity when referring to stabilizers 12, but are omitted in the Figure for the output 24, validation 26 and injection 20 repetition codes.

In order to perform multi X measurement between logical qubits, the qubits of the bus are prepared in |0), and specific stabilizers 12 are measured to perform the lattice surgery. Typically, the stabilizers 12 indicated at the bottom of Figure 12 allow to measure the XXXX operator (so "M_{XXXX}") between the output logical qubit 24, the second-from-left validation logical qubit 26, the right-most validation logical qubit 26 and the bottom injection logical qubit 20. Herein we refer to such stabilizers involving data cat qubits 8 of the bus 22 and the validation 26 or output 24 logical qubits as logical-qubit-to-bus stabilizers, and to such stabilizers involving data cat qubits 8 of the injection repetition code 20 and the validation 26 or output 24 logical qubits as injection-to-bus stabilizers. It is noted that using stabilizers 12 to measure the X...X operator is well known, as described for instance: (i) Gouzien, Élie, et al. "Performance analysis of a repetition cat code architecture: Computing 256-bit elliptic curve logarithm in 9 hours with 126 133 cat qubits." Physical review letters 131.4 (2023): 040602; and (ii) Ruiz, Diego, et al. "LDPC-cat codes for low-overhead quantum computing in 2D." Nature Communications 16.1 (2025): 1040. These will therefore not be described further.

Therefore, the arrangement of Figure 12 may be used to distil a magic state following the general method of Figure 3, according to an embodiment of the invention.

In the first step 301, the validation repetition codes 26 and the output repetition code 26 may respectively be prepared in a |0〉*_{L}* state to thereby encode logical qubits hosted therein. As will be appreciated, for a given repetition code, this may be done by physically preparing each of the physical data cat qubits 8 of the repetition code in a |0〉 state, and selectively measuring the stabilizers of the code to ensure a logical |0〉*_{L}* state is encoded therein.

Of course, this is just one option, the validation 26 and output 24 logical qubit may respectively be prepared in other logical states, for instance in |1〉*_{L}.*

In the second step 303, using the outer code results in the output logical qubit 24 hosting the distilled magic state.

In particular, an initial magic state |*Rₓ*(*π*/4)〉 = *Rₓ*(*π*/4)|0〉 = cos (*π*/8)|0〉 - isin (*π*/8)|1〉 is teleported into each of the validation repetition codes 26 (i.e. the validation logical qubits 26 are subject to a Pauli rotation). Similar to Figures 4-7, this can be done a variety of different ways.

One particularly convenient way is shown in the embodiment of Figure 13, which shows a quantum circuit diagram for performing a π/4 Pauli rotation about the X axis on a validation logical qubit 26. In Figure 13, the first injection logical qubit 20 is prepared in |0〉*_{L}.*

Subsequently, the bus 22 is used to measure the XX operator (M_{XX}) between the first injection logical qubit 20 and the relevant validation logical qubit 26 using lattice surgery (namely, by measuring the stabilizer 12 of each respective qubit which overlaps with the bus 22, as discussed above in relation to Figure 12). Depending on the result of the M_{XX} measurement, a Pauli Z gate correction is applied to the first injection logical qubit 20 (or tracked in software).

Then, a physical ${R}_{X} \left(\frac{π}{4}\right) = {e}^{- \frac{i}{2} Xπ / 4}$ gate (rotation of *π*/4 about the X axis) is applied to one of the physical data cat qubits 8 of the first injection logical qubit 20 (as a single physical data cat qubit 8 suffices to provide the logical X support for the logical qubit encoded by a repetition code). It is noted that a physical rotation about the X axis can be realised on a physical cat qubit, for instance by rotating the phase of the stabiliation axis under a dissipative stabilzation scheme (as described in Guillaud, Jérémie, and Mazyar Mirrahimi. "Repetition cat qubits for fault-tolerant quantum computation." Physical Review X 9.4 (2019): 041053) or with a holonomic gate as described in Albert, Victor V., et al. "Holonomic quantum control with continuous variable systems." Physical review letters 116.14 (2016): 140502 or Réglade, Ulysse, et al. "Quantum control of a cat qubit with bit-flip times exceeding ten seconds." Nature 629.8013 (2024): 778-783 having a duration appropriately selected so as to perform the rotation.

As an example, a physical ${R}_{X} \left(-\frac{π}{4}\right)$ gate can be performed on a physical data cat qubit 8 in the following way.

First, the encoding of the data cat qubit 8 is mapped to the Fock 0/1 encoding. In embodiments wherein the data cat qubit 8 is a dissipative cat (e.g. via stabilization schemes (A), (E), (F), (G) described above), this can be achieved by going from a dissipation in $L = \sqrt{{κ}_{2}} \left({a}^{2}-{α}^{2}\right)$ to $L = \sqrt{{κ}_{2}} {a}^{2}$*.* Such a change in the dissipation can be achieved by turning off the resonant drive of the buffer mode (used to stabilize the dissipative cat qubit 8), preferably non-adiabatically i.e. substantially instantaneous. The two-photon pump (e.g. parametric pumps on the non-linear element such as the ATS) which induces a two-to-one photon exchange between the memory mode of the cat qubit and the buffer is kept on. Alternatively, in embodiments wherein the data cat qubit is a Kerr cat (e.g. via stabilization schemes (B) and (C) described above) the mapping can be achieved by adiabatically turning off the appropriate pump on the SNAIL (namely, the pump at twice the memory frequency 2*ωₐ* as described in Grimm, Alexander, et al. "Stabilization and operation of a Kerr-cat qubit." Nature 584.7820 (2020): 205-209), whilst maintaining the system parameters such that the Kerr nonlinearity term is kept on.

Second, an inflation is performed. In embodiments wherein the data cat qubit 8 is a dissipative cat, this is achieved by turning on gradually the dissipation $L = \sqrt{{κ}_{2}} \left({a}^{2}-{\left({αe}^{iπ / 4}\right)}^{2}\right)$ *,* e.g. by sufficiently adiabatically turning on the buffer drive for the dissipative cat (longer than 1/*κ*₂, where *κ*₂ is the two-photon exchange rate), where the phase of this newly turned on drive is tuned to *iπ*/4 relative to the original one. Alternatively, in embodiments wherein the data cat qubit is a Kerr cat, this is achieved by turning on the SNAIL pump 2*ωₐ* adiabatically, with similarly tuned phase.

Thus, $\left|{R}_{X}\left(\frac{π}{4}\right)\right〉$ will be mapped to the coherent state $\left|{αe}^{\frac{iπ}{4}}\right〉$ and $\left|{R}_{X}\left(\frac{3 π}{4}\right)\right〉$ to $\left|-{αe}^{\frac{iπ}{4}}\right〉$ . Then, during the subsequent measurements in the Z basis (discussed below), the two coherent states $\left|{αe}^{\frac{iπ}{4}}\right〉$ and $\left|-{αe}^{\frac{iπ}{4}}\right〉$ can be distinguished through homodyne/heterodyne measurement, giving the result of the Z measurement (e.g. as described in Grimm, Alexander, et al (2020), Réglade, Ulysse, et al. (2024), or Rousseau, Rémi, et al. "Enhancing dissipative cat qubit protection by squeezing." arXiv preprint arXiv:2502.07892 (2025)).

In a similar manner, a physical ${R}_{X} \left(\frac{π}{2}\right)$ gate can be performed on a physical data cat qubit 8 by ensuring that the drive/pump when turned back on instead has a phase tuned to *iπ*/2 relative to the original one.

The first injection logical qubit 20 is subsequently measured in the Z basis, and depending on the result, a Pauli X gate correction is applied to the relevant validation logical qubit 26 (or tracked in software).

In order for the measurement after the physical *Rₓ*(π/4) gate to have a good fidelity, preselection may be applied in a similar manner as described above.

A plurality of Pauli product rotations corresponding to rotations of π/4 about the X axis are also applied. Each of such Pauli product rotation involves two or more of the 26 and output 24 logical qubits.

Such a Pauli product rotation may be referred to as, for instance, $XXX \left(\frac{π}{4}\right) = {e}^{- i \frac{1}{2} XXXπ / 4}$ , which is a Pauli product rotation involving three logical qubits. Similar to Figures 9-11, this can be done a variety of different ways.

One particularly convenient way is shown in the embodiment of Figure 14, which shows a quantum circuit diagram for performing a *π*/4 Pauli product rotation about the X axis on two logical qubits (i.e. a validation logical qubit 26 and one of another validation logical qubit 26 or the output logical qubit 24). The scheme of Figure 14 is identical to that described above for Figure 13, except for involving two logical qubits and therefore requiring a couple of alterations. The first difference is that, the bus 22 is used to measure the XXX operator (M_{XXX}) between the first injection logical qubits 20 and the two involved logical qubits using lattice surgery (namely, by measuring the stabilizer 12 of each respective qubit which overlaps with the bus 22, as discussed above in relation to Figure 12). The second difference is that the Pauli X gate correction is applied to both of the relevant logical qubits. The remaining steps involving the first injection logical qubit 20 are identical.

It will be thus readily apparent how to extend the Pauli product rotation scheme shown in Figure 14 to three or more logical qubits, by simply increasing the number of logical qubits involved in the multi-X measurement at the start and increasing the number of logical qubits on which the Pauli X gate corrections are applied to at the end.

In the third step 305, all of the validation logical qubits 26 are measured in the Z basis. If one of the logical measurements is -1 the entire distillation is repeated, otherwise it is terminated and the magic state hosted by the output logical qubit 24 may be used in subsequent operations (i.e. used to perform the corresponding gate on another logical qubit when required during a quantum computation).

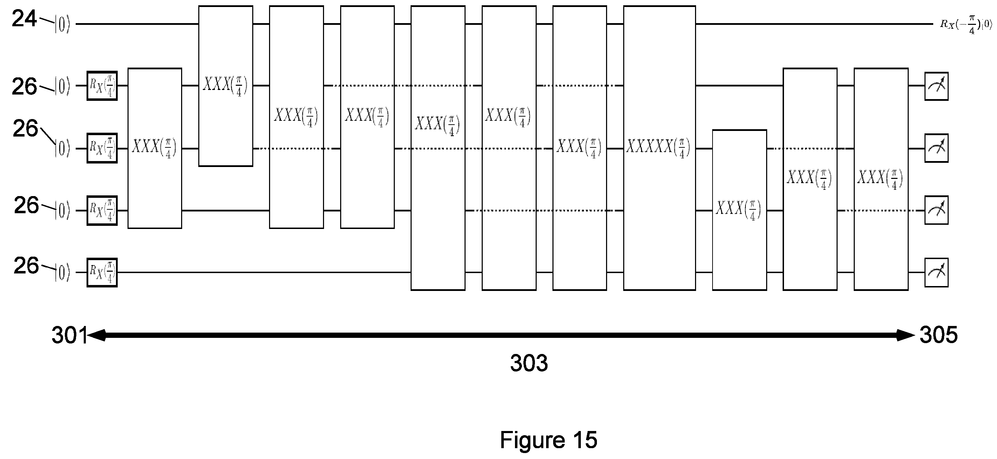

Figure 15 shows a quantum circuit diagram showing an exemplary quantum circuit built using the outer code for distilling a magic *Rₓ*(*π*/4) state, according to an embodiment. As will be appreciated, this is thus a 15-to-one scheme taking a total of five validation and output logical qubits (e.g. those discussed in relation to Figure 12) and outputting a single distilled magic state hosted by the output logical qubit 24. The different steps of the method as outlined in Figure 3 are indicated at the bottom of Figure 15

In the embodiment of Figure 15, the method comprises preparing all of the validation 26 and output 24 logical qubits in |0〉*_{L}*, performing the single Pauli rotation on each of the validation logical qubits 26 (indicated by the *Rₓ*(*π*/4) gates), applying a plurality of Pauli product rotations each involving two or more of the validation 26 and output 24 logical qubits, and finally measuring each of the validation logical qubits 26 in the Z basis. The distillation is accepted only if the four logical Z measurements are +1, otherwise the scheme is restarted. Again, it is important to note that there is no chronological order to respect between the various single Pauli and Pauli product rotations in step 303, only that they need to occur before step 305. The preparation in 301 requires several rounds of stabilizers measurements which can be done at the same time as the lattice surgery operations of step 305.

The number of physical qubits may be further reduced compared to the embodiments of Figures 2 and 4-11 for preparing magic states with similar fidelity (e.g. Hamming distance). This can be seen in a straightforward manner by comparing Figure 12 with Figure 2, wherein the number of physical data cat qubits 8 in each bus 22 in Figure 12 is substantially less than the number of physical data cat qubits 8 in each bus 22 in Figure 2.

Similar to the above-described embodiments relating to Figure 2, the number of physical data cat qubits 8 in each of the validation repetition codes (linear arrays 26) can also be smaller than the number of physical data cat qubits 8 in the output repetition code (linear array 24).

Furthermore, it is again preferable that the average number of bosons of the "smallest" data cat qubit of each validation logical qubit (i.e., for each validation logical qubit, the physical data cat qubit having the smallest average number of bosons contributing to the cat state) can be made smaller than the "smallest" data cat qubit of the output logical qubit.

It is noted the quantum circuit shown in Figure 5 can also transformed in a similar manner so as to also leverage multi-qubit X measurements. Indeed, any quantum circuits created using other outer codes as described herein may similarly be transformed.

### Magic state distillation for rotation about X axis using LDPC codes

### Classical LDPC codes

The present inventors have further recognised that classical phase-flip error-correcting codes other than phase-flip repetition codes may be used to encode the five logical qubits used in quantum circuit of Figure 15 (or other derived quantum circuits as discussed above), according to an embodiment. In particular, the present Inventors have previously developed classical LDPC codes having a value of kd/n greater than one using physical data cat qubits with which to encode a plurality k of logical qubits within the same "block". Such codes can for instance be found in: Ruiz, Diego, et al. "LDPC-cat codes for low-overhead quantum computing in 2D." Nature Communications 16.1 (2025): 1040, as well as in (i) European patent application No. 23307438.4 filed on 29 December 2023; (ii) European patent application No. 24305088.7 filed on 12 January 2024; (iii) European patent application No. 23307439.2 filed on 29 December 2023; (iv) European patent application No. 24305089.5 filed on 12 January 2024; (v) European patent application No. 24305090.3 filed on 12 January 2024; (vi) European patent application No. 23307437.6 filed on 29 December 2023; (vii) European patent application No. 24305087.9 filed on 12 January 202, wherein the entire contents of each of (i)-(vii) are incorporated herein by reference.

Surprisingly, certain ones of such classical LDPC codes having a value of kd/n greater than one may be employed in embodiments of the present invention to yield spectacular reduction in the number of physical data qubits used and the time required for distillation.

A classical LDPC codes having a value of kd/n greater than one may be provided using stabilizers having weights of greater than two (namely, three or more data cat qubits 8 are provided in a stabilizer such that the parity measurement of the stabilizer extracts parity information involving said three or more data cat qubits 8).

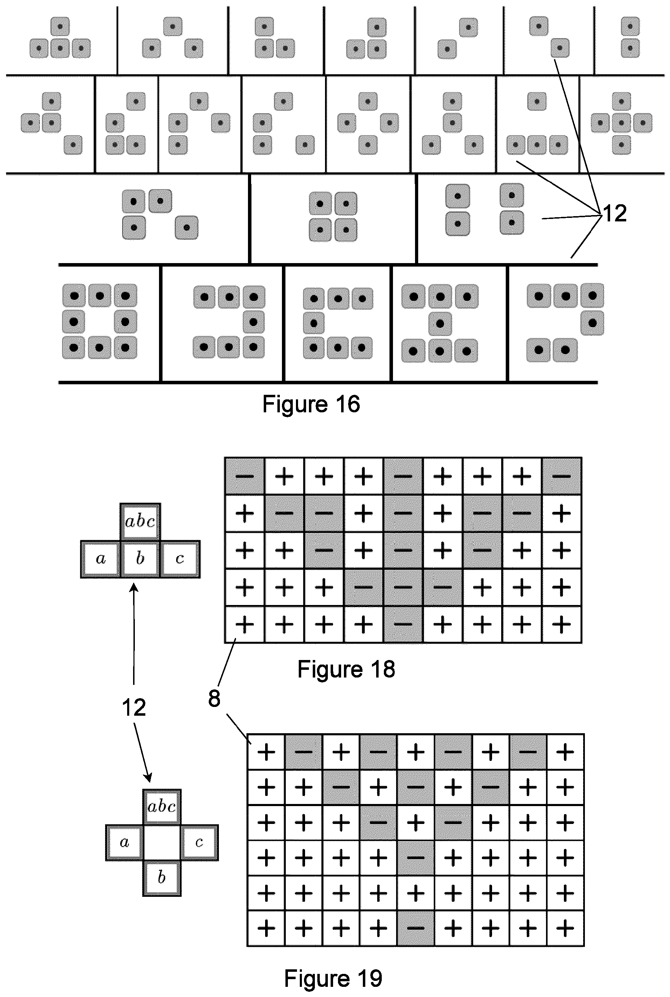

Figure 16 shows different stabilizers which were tested by the present Inventors and validated as offering a better kd/n value over the repetition code in various LDPC code configurations, according to embodiments. These stabilizers were chosen because they span over two or three consecutive rows and offer a low stabilizer weight.

Generally, the stabilizer weight, i.e. the number of physical qubits in a single parity check, is also the number of data cat qubits 8 connected to the ancilla qubit 10 of the stabilizer (if an ancilla qubit 10 is used to extract the parity of the stabilizer). Since the parity check is typically a sequence of CNOT gates being performed between the ancilla qubit and each of the data cat qubits of the stabilizer, and since each CNOT gate takes a finite time, the more CNOT checks, the longer the parity check takes in time. And the longer the time of the parity check, the higher the chance an error occurs, notwithstanding the additional probability of error contributed by each CNOT performed. A particularly high stabilizer weight thus results in the threshold of the code performance being lower, which is highly undesirable for quantum error correction. Consequently, a lower stabilizer weight is enviable, and a trade-off must be found with respect to the increase in the value kd/n.

On the first row of Figure 16, the following stabilizer geometries are shown: inverted T-shape; inverted V-shape; L-shape; backwards-L-shape; trailing-diagonal; leading-diagonal; straight-line. Each stabilizer has a stabilizer weight of 2 or 3, and the columns of the data cat qubits of the lower row are less than two columns close to the column of the single data cat qubit. On the second row of figure 16, various stabilizer geometries spanning over three rows, and the columns of the data cat qubits of the lower rows are less than two columns close to the column of the single data cat qubit.

During its research, the Applicant has recognized that stabilizer geometries which span over less than or equal to four rows and in which the data cat qubits of the lower rows are not distant by more than seven columns, and are each not distant by more than seven columns from the column of the single data cat qubit provide the best results in terms of optimizing the lowest stabilizer weight with the biggest kd/n value along with minimal length of connections between qubits of a stabilizer.

The lower two rows of Figure 16 show stabilizer geometries formed from between 4 and 8 data resonators. These exemplary stabilizers span over two or three consecutive rows and still offer a reasonably low stabilizer weight. In particular, those stabilizer geometries along the lowest row of Figure 16 were tested by the Applicant and validated as offering a better kd/n value over the repetition code.

By balancing code performance with physically reasonable weights for the stabilizers, the Applicant has generally discovered that "non-pointy" formed from between 4 and 10 data resonators selected from a seven-by-seven sub-array of the two-dimensional array spanning seven rows along one dimension and seven rows along the other (substantially orthogonal dimension) result in a good compromise between balancing stabilizer weight with the biggest kd/n value. By "non-pointy", it is understood to mean that the stabilizer geometry has two or more data resonators in the bottom row of the stabilizer and two or more data resonators in the opposing top-most row of the stabilizer in the first direction, as shown in the lower two rows of Figure 16. Preferably, the stabilizer geometries are formed from between 4 and 9 data resonators selected from a 3-by-3 sub-array of the two-dimensional array and form particularly code classical LDPC error-correcting codes with data cat qubits.

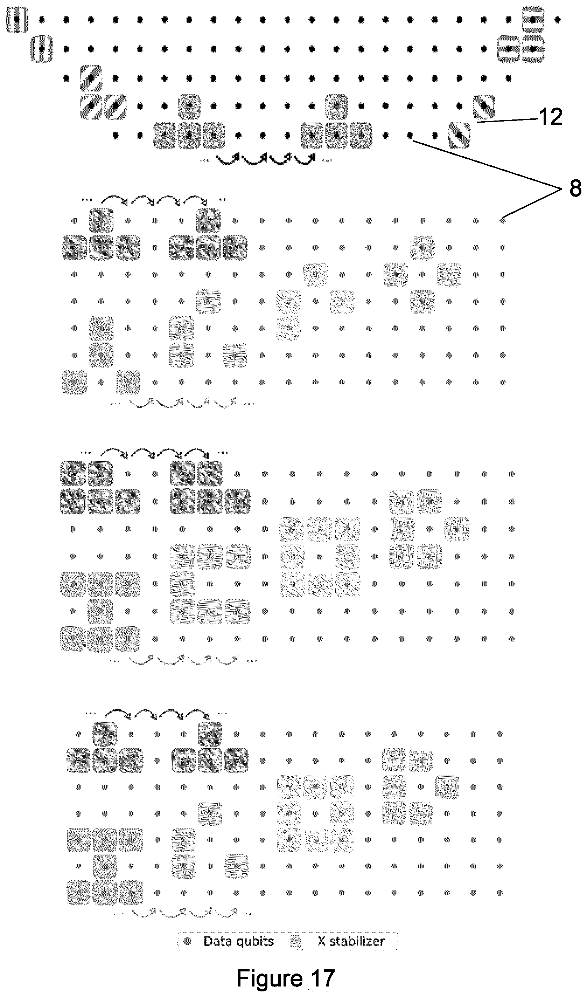

Figure 17 shows schematic views of a quantum system with the use of various stabilizer geometries. The upper panel shows an inverted-T geometry towards the centre of the array of data cat qubits 8, as well as the particular form of the stabilizers at the edge of the array. The next panel down shows a combination of geometries. The following panel down shows a combination of "non-pointy" geometries. The bottom panel shows a combination of geometries wherein some are "pointy" and some are "non-pointy".

Figure 18 illustrates the logical Z operator of minimal weight for an inverted T-shape stabilizer geometry (wherein all stabilizers have the inverted-T stabilizer geometry, except potentially those at the borders of the array). Here, the squares indicate data cat qubits 8, and those squares which are shaded an include a "-" inside thus indicate those which form the logical Z support.

Figure 19 is like Figure 18, but in the case of a cross-shaped (excluding the center of the cross) stabilizer geometry.

More generally, given a choice of stabilizer geometry or geometries and dimension of the array, it is possible to map any desired bit string to the physical position of the data cat qubits in the array to thereby determine the logical groups which define a logical operator (i.e. the data cat qubits which form the support for the Z logical operator and the data cat qubits which form the support for the X logical operator).

As mentioned above, the performance of an error-correcting code is characterized by the triplet of number [n,k,d], where: n is the number of physical data cat qubits (not including the ancillas for the parity checks); k is the number of logical qubits encoded and d is the distance of the code.

As will be appreciated, given a particular arrangement and number n of physical data cat qubits (i.e. the number of data cat qubits in a two-dimensional array of known dimensions) and a particular geometry of stabilizer geometry (i.e. a particular parity check), there are a number of measurement methodologies known in the field of error correction for determining the number of logical qubits k and the distance of the code d, within the appropriate limit of measurement accuracy.

For completeness, the Applicant has also used the following method for determining the k and d parameters of any given code, given the number n of the data cat qubits and the form of the stabilizer geometries (i.e. parity checks).

The array of n data cat qubits is labelled with indices, wherein the indices indicate the position of one of the physical qubits. This is shown in the below exemplary 17 by 5 array:

| | | | | | | | | | | | | | | | | |
|---|---|---|---|---|---|---|---|---|---|---|---|---|---|---|---|---|
| 1 | 2 | 3 | 4 | 5 | 6 | 7 | 8 | 9 | 10 | 11 | 12 | 13 | 14 | 15 | 16 | 17 |
| 18 | 19 | 20 | 21 | 22 | 23 | 24 | 25 | 26 | 27 | 28 | 29 | 30 | 31 | 32 | 33 | 34 |
| 35 | 36 | 37 | 38 | 39 | 40 | 41 | 42 | 43 | 44 | 45 | 46 | 47 | 48 | 49 | 50 | 51 |
| 52 | 53 | 54 | 55 | 56 | 57 | 58 | 59 | 60 | 61 | 62 | 63 | 64 | 65 | 66 | 67 | 68 |
| 69 | 70 | 71 | 72 | 73 | 74 | 75 | 76 | 77 | 78 | 79 | 80 | 81 | 82 | 83 | 84 | 85 |

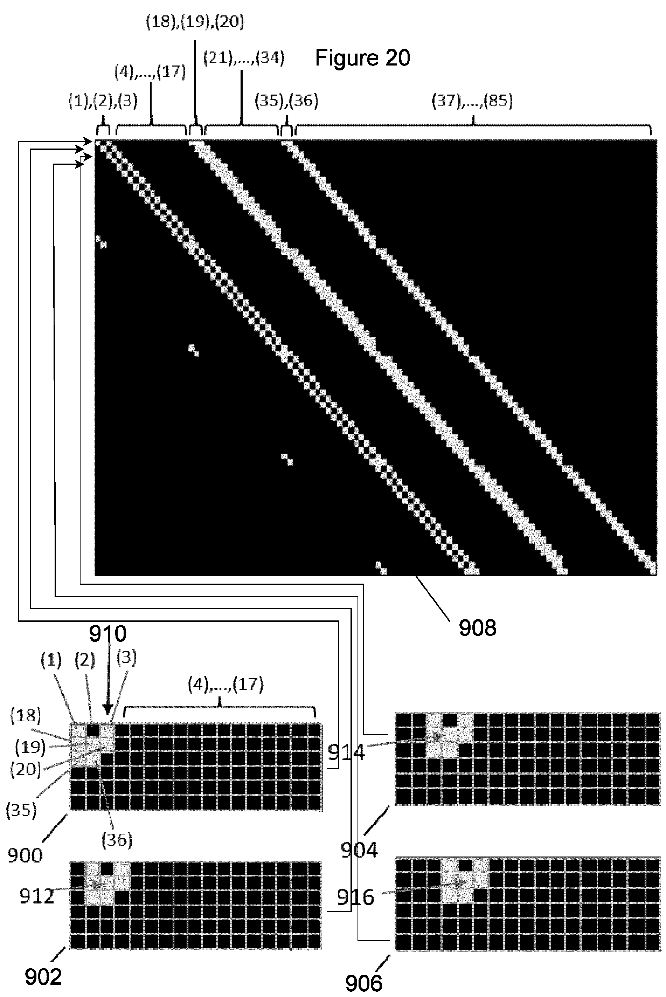

The system is arranged to implement particular geometries for the stabilizer geometries, which enable parity checks involving the data cat qubits contributing to a given stabilizer geometry in the array. The four left-hand panels of Figure 20 show an example stabilizer geometry, and the first four corresponding parity checks of stabilizer geometries 910, 912, 914, and 916 are shown in the physical arrays indicated by reference numerals 900-906 respectively, with the upper panel with physical array 900 having the stabilizer 910 starting from the upper left-hand corner of the above exemplary 17 by 5 array of physical data qubits. The physical qubits contributing to a stabilizer geometry are shown in light grey, whereas the remaining physical data cat qubits are shown in black. The numbers in parentheses indicate the indices indicating the position of each of the physical data cat qubits in the physical array. The indices are only shown in 900 for clarity, however physical arrays 902-906 are the same as 900, such that the physical qubits are identically labelled with the same indices.

A parity matrix H 908 can be constructed by converting each of the parity checks in the physical arrays 900-906 into a row of parity matrix H 908. This can be done by "flattening out" the physical picture such that the first element of the row is index (1), the second element is index (2), and so on, consecutively until the final index of the physical picture (85). This is indicated in the upper panel of Figure 20, wherein physical array 900 is flattened into the first row of parity matrix H 908. Numerically, the physical data cat qubits contributing to a stabilizer geometry are replaced with a "1" as coefficient in the corresponding position of the element in parity matrix H 908, whereas the remaining physical data cat qubits are replaced with a "0", such that the parity matrix H 908 is a numerical matrix populated with numbers "1" and "0". Each physical array 900-906, as well as the remaining physical arrays of all the following parity checks (not shown), is "flattened out" in the same way to populate parity matrix H 908.

The parity check matrix is then transformed into normal form H', consisting of a block A and an identity block I such that H' = [All]. The parity matrix in normal form H' is an n-k by n matrix. Thus, from the dimensions of H' one can deduce k, given that n is known. H' can be constructed from H using a variety of methods, for instance by so-called Gaussian elimination.

The generator matrix G can then be constructed from H' as G = [I|A^{T}], where A^{T} is the transpose of block A. G is thus a k by n matrix. As will be appreciated, the rows of the generator matrix form a basis for the error-correcting code, namely the codewords are all linear combinations of the rows of G.

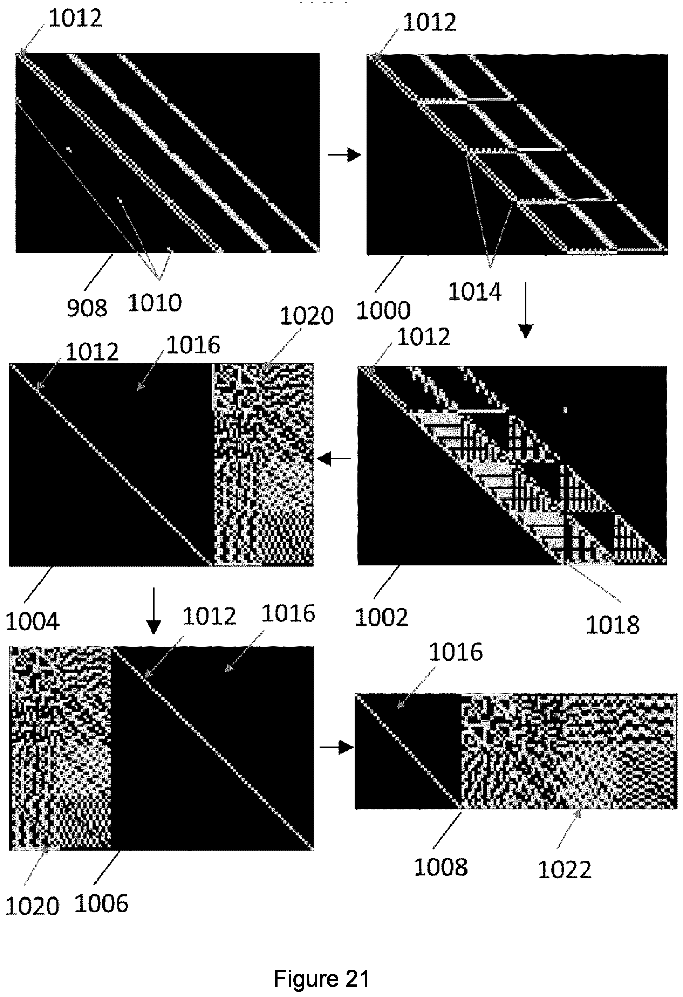

An exemplary method using Gaussian elimination to transform parity matrix H into generator matrix G is shown in Figure 21. The goal is to perform linear operations/transformations on the parity matrix H 908 of Figure 20 until it has an identity block I on one side with a remaining block on the other side. The parity matrix H 908 is first transformed to remove the "1" coefficients 1010 under the first leading diagonal of "1's" 1012. For instance, for every column of 908 which has a pair of "1's" therein, namely a "1" in the first leading diagonal 1012 and a "1" somewhere below, the row which contains the "1" below the leading diagonal can be replaced with the sum of itself and the row which contains the "1" of the leading diagonal. Given that modulo 2 arithmetic applies, this results in a transformed matrix wherein the row which initially contained the "1" below the leading diagonal now has a "0" in the position of the initial "1". This is saying that instead of describing the code as c1,...,c15,... - where ci is the parity check equations of line i - the code becomes c1,...., c1+c15,... which is an equivalent set of parity check equations. This is iterated or repeated recursively across all relevant rows to produce matrix 1000.

Matrix 1000 is thus a matrix with only "0's" under the leading diagonal 1012, however there may be some "0's" now missing from the leading diagonal 1012, as indicated by 1014. The row with a "0" in the leading diagonal may be scanned in a direction away from the leading diagonal to find a "1" coefficient. The column having this "1" coefficient can then be switched with that having the "0" in the leading diagonal. If this results once more in a "1" below the leading diagonal, the above-described process going from 908 to 1000 is repeated for the offending row. This is iterated or repeated recursively across all relevant rows to produce matrix 1002.

Matrix 1002 is transformed into matrix 1004 which has the identity as the left-hand block 1016 by removing the "1's" in the right-angled triangle above the leading diagonal 1012. This may be done as above, by starting at the penultimate row and replacing it with the summation of itself and a row above such that the coefficient 1018 to the right of the leading diagonal 1012 is switched from a "1" to a "0". This is iterated or repeated recursively across all relevant rows to produce matrix 1004.

Matrix 1004 has a left-hand block 1016 which is the identity I, and a right-hand block 1020 which is the block A. Matrix 1004 is transformed into matrix 1006 which is the parity matrix in normal form H' = [All] via flipping the blocks. Thus, the left-hand block 1020 is block A and the right-hand block 1016 is the identity I.

The parity-check matrix in normal form H' 1006 is transformed into the generator matrix G 1008 as above via G = [I|A^{T}], wherein 1022 is A^{T}. It should be noted that the indices (1),...,(85) shown in Figure 20 are tracked throughout the various permutations, such that G can be mapped to correspond to the real positions of physical qubits in the physical array.

As described above, the generator matrix G forms a basis for the error-correcting code, namely any row of G is a valid codeword, and all linear combinations of the rows of G are also valid codewords. The distance of the code d is thus given by the row or linear combination of rows which has the smallest number of "1's", wherein the number of "1's" is d. Said otherwise, the distance d of a code is the smallest Pauli error that maps the a codeword to another codeword, (i.e., the smallest logical error).

In a generator matrix G there are thus k codewords that form a basis for the logical codespace of 2^{k} codewords. The codeword with the minimal number of 1's can be found via a brute-force algorithmic search by explicitly constructing the 2^{k} codewords using this basis. An alternative, sometimes more efficient method for calculating the distance is to map this problem to a satisfiability (SAT) problem to leverage efficient available SAT solvers. The SAT problem is the following: given an integer d', is it possible to find a codeword of non-zero Hamming weight inferior or equal to d'? The code distance d is the minimum value of d' for which the problem is satisfied, found using a dichotomic search. As will be appreciated, various other methods are known in the art for finding d, such as inference from the particular mathematical form of the generator matrix G 1008.

To encode k logical qubits, one may define a vector B which is of length k and includes the bitstring of logical qubits to be encoded in the physical array. The transpose of B^{T} may be matrix multiplied with generator matrix G, which produces E^{T} wherein E is another vector. By keeping track of the indices indicating the positions of the physical data cat qubits in the array, the coefficients of E^{T} can be mapped to the tracked indices therein, corresponding to indicating the positions of the physical data cat qubits in the array. This tells us which physical data cat qubits contribute to which logical operator(s).

Thus, the generator matrix G and bitstring vector B may be used to designate the groups of data cat qubits for any general classical LDPC error-correcting code, which define the support of a logical operator.

The above methods are only exemplary, and a number of variations thereof, as well as other methods, can alternatively be used to: generate valid (and equivalent) codewords; find the distance d of the code; and find the number of logical qubits encoded k, for an error-correcting code given by a particular arrangement and number n of physical qubits and one or more particular stabilizer geometries.

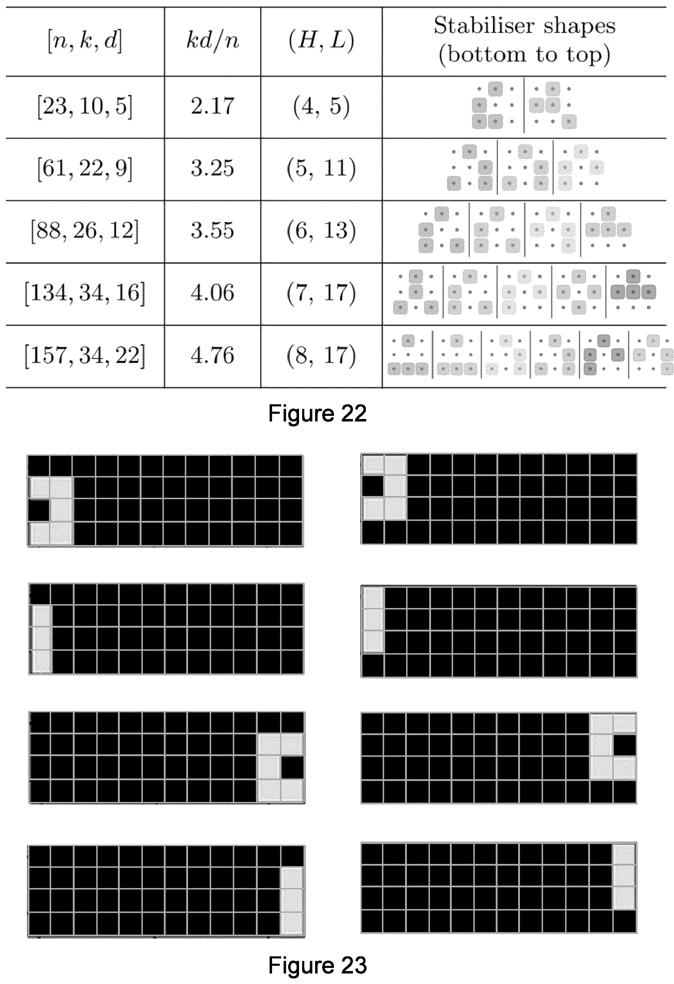

Figure 22 shows results obtained by applying the above methods. This table shows, for various values of [n, k, d], kd/n values obtained, corresponding height and minimum width of the two-dimensional arrays (grid-like geometry) used, as well as the type of stabilizers used to obtain this kd/n value. From the above, it appears that there are many ways to generate a classical LDPC code using at least two stabilizer geometries and which have a kn/d value which is greater than 1 (that is which perform more favorably than a conventional repetition code). As mentioned, in many cases, brute force can be used, and in other cases, a SAT solver can be used.

Figure 23 shows an example of different stabilizers used at two of the boundaries of the grid-like array, used in conjunction with the O-shaped stabilizer geometry shown in the bottom panel of Figure 16. Indeed, for this dimension of array (height of 4, width of 12) and O-shaped stabilizer geometry, the Applicant has verified that the [n, k, d] of the code is [48, 20, 8], which results in a value of kd/n of 3.33. By providing the different stabilizers at the end of the row, the Applicant has discovered that this provides only a slight reduction in encoding compared to the corresponding classical LDPC code with periodic boundary conditions (which has [48,24,8] and kd/n = 4). This is highly surprising, given that the corresponding finite array instead having O-shaped stabilizers at the edges has an extremely poor distance and an kd/n of 1 or lower.

Thus, to enable the most optimal classical LDPC codes in a two-dimensional topology (namely, on a side of a chip), the Applicant has verified that it is particularly advantageous to include: (i) different stabilizer geometry geometries at the edges of the array as compared to those in the middle; and/or (ii) non-rectangular edges. This is only a preferred implementation, as other configurations could be considered (e.g. configurations having physically realizable periodic boundary conditions).

Once all the stabilizers are chosen to define the classical LDPC code, one needs to perform the error syndrome measurement in order to truly protect the logical qubits against phase-flips. As explained above, this is done by measuring the parity of the data cat qubits within each stabilizer geometry. Advantageously, all of the error syndrome measurements can be performed substantially in parallel. The only constraint is that a given data cat qubit can only participate in a single parity check for each timestep (i.e., the given data cat qubit cannot participate in the parity check of two different stabilizer geometries simultaneously). This means that patterns of parity check orders have to be adapted for neighboring stabilizer geometries.

The error measurement syndrome may be performed conventionally, for example by repeatedly preparing the ancilla qubit of each stabilizer geometry in a "| -〉" or "|+〉" state, performing quantum gates with the data cat qubits of the stabilizer geometry, and measuring the associated ancilla to determine the presence of a phase-flip. In an alternative embodiment, the error syndrome can be improved by performing asynchronous CXXX operations (or more in the case of higher stabilizer weights), such that each data cat qubit is used at most in one such CXXX operation for a given timestep.

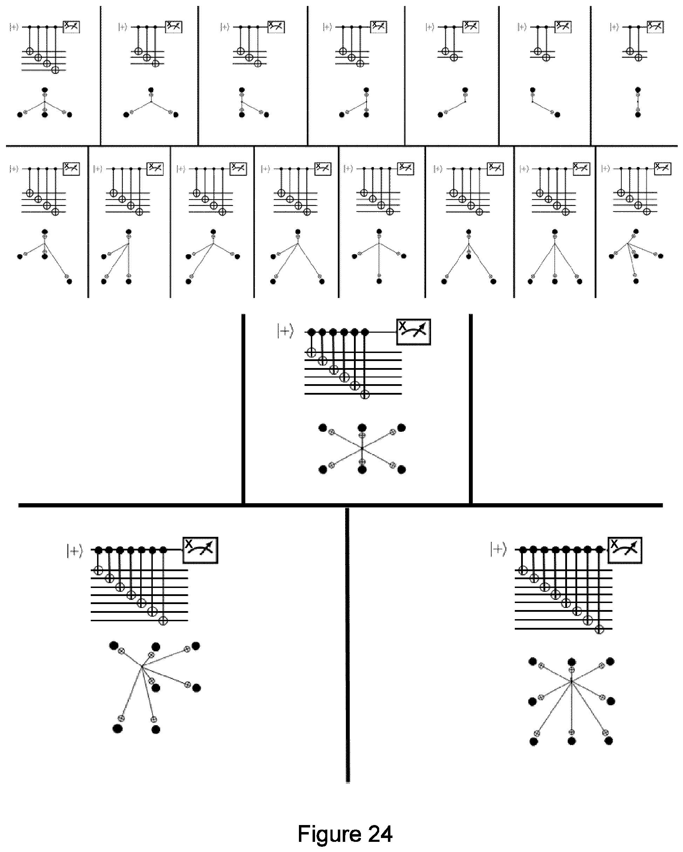

Figure 24 shows, for various stabilizer geometry shapes, how an ancilla qubit 10 can be placed with respect to the data cat qubits 8 in view of the stabilizer geometry shape, as well as the kind of steps which can be conventionally executed to measure the error syndrome in each case.

### Using classical LDPC codes for magic state distillation

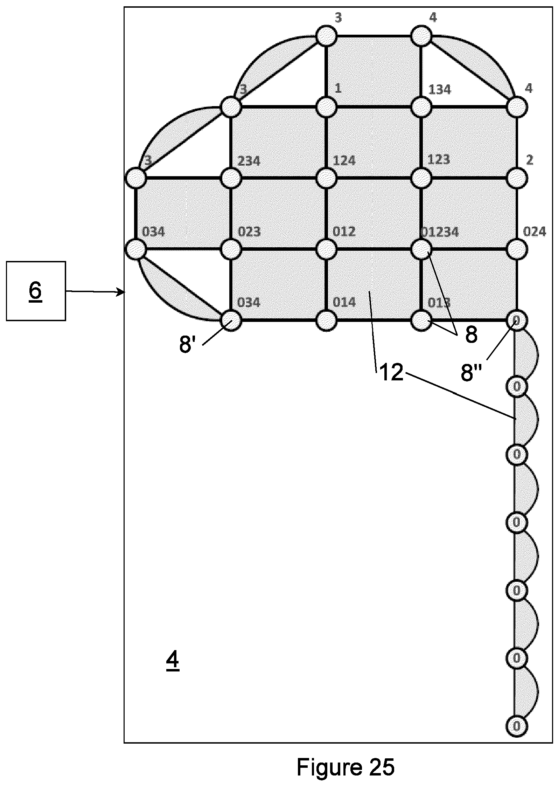

Figure 25 shows an arrangement 4 of data cat qubits 8 and a command circuit 6 configured to distil a magic state which corresponds to the *jπ*/4 rotation about the Pauli X-axis, according to an embodiment. Like features take the same reference numerals as those in Figures 1, 2, and 12.

Figure 25 shows twenty-six physical data cat qubits 8 arranged in a two-dimensional topology. The shaded regions represent stabilizers of weight four or weight two.

As such, the classical LDPC code formed from these stabilizers encodes five logical qubits, and may yield a value of kd/n of greater than one, as can be verified using the methods described above. The data cat qubits 8 form the logical X support and the logical Z support (i.e. the supports for the logical X and logical Z operators), as described above.

Thus, given the data cat qubits 8 are "shared" between the five logical qubits, when a physical gate is applied to a given one of the data cat qubits 8, a logical operation may be induced on one or several of the logical qubits depending on the specific physical gate and the specific data cat qubit 8 involved. For instance, when a physical X gate is applied on a physical data qubit 8, it corresponds to a logical X on one or more of the logical qubits. Namely, if said physical data qubit 8 on which the physical X gate is applied is in fact part of the logical Z support of several logical qubits, then that physical X gates results in a logical X gate on each of those several logical qubits. Another way of looking at this is that physical data qubit 8 may be a physical multi-logical qubit X support.

In the example of Figure 25, each data cat qubit 8 is shown with one or more indices next to or in the circles, "0", "1", "2", "3", "4". These indicate the logical qubits for which that physical data cat qubit 8 forms a part of the logical Z support. The logical qubit "0" refers to the output logical qubit 24, whereas each of "1", "2", "3", "4" refer to respective ones of the validation logical qubits 26. For instance, the bottom-left-most data qubit 8 (indicated as 8') has "034", which indicates that a physical X gate applied to the data cat qubit 8' results in a logical X gate being applied to logical qubits "0" (the output logical qubit 24), "3", and "4" (two of the validation logical qubits 26).

To note, this number also represents which of the five logical qubits that physical data qubit forms part of the logical Z support. For instance, each data cat qubit 8 with a "0" associated (e.g. the nine data cat qubits 8 forming the bottom two rows of the 2D array part plus the remaining six data cat qubits forming the tail part) forms the group of data cat qubits of the logical Z support of the logical qubit "0" (the output logical qubit 24), as determined for instance via the methods described above in relation to Figures 20-21. Thus, another way to identify the physical data qubits 8 to which single physical gates are applied as described herein (to perform single Pauli rotations on a logical qubit of Pauli product rotations on two or more of the logical qubits described below) is those which are part of the logical Z support for only a single logical qubit (for the single Pauli rotation involving that logical qubit) or which are simultaneously part of the logical Z supports for two or more of the logical qubits (for the Pauli product rotations involving those two or more of the logical qubits).

Thus, the classical LDPC code may be exploited to perform single- or multi-logical-qubit rotations about the X axis, which is precisely what is needed to perform the quantum circuit to distil a magic state for a *jπ*/4 rotation about the Pauli X axis such as that shown in Figure 15.

Accordingly, the arrangement of Figure 25 may be used to distil a magic state following the general method of Figure 3, according to an embodiment of the invention.

In the first step 301, the five (output 24 and validation 26) logical qubits may be encoded in a |0〉*_{L}* state. As will be appreciated, for a given classical LDPC code, this may be done by physically preparing each of the physical data cat qubits 8 of the classical LDPC code in a |0〉 state, and selectively measuring the stabilizers of the code to ensure a logical |0〉*_{L}* state is encoded therein.

Of course, this is just one option, the validation 26 and output 24 logical qubit may respectively be prepared in other logical states, for instance in |1〉*_{L}*.

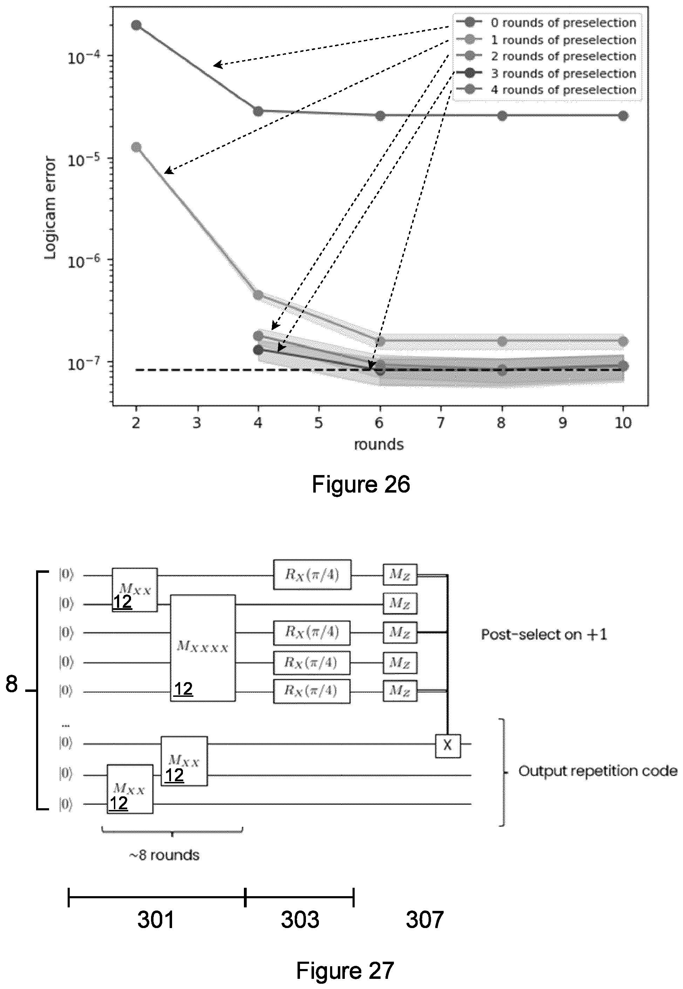

A sufficient number of rounds need to be performed to prepare with a good fidelity the |0〉*_{L}*. In the plot shown in Figure 26, we see about six rounds are required, but this number can change with the physical error rate. However, a measurement error in the last round can create Z residual errors that can then lead to a distillation error (uppermost curve). It may thus be advantageous to do preselection, i.e. ensuring that we detect no error in the last given number of rounds. In practice, this means that the protocol will only stop when said given number of rounds without detected errors are observed. In the plot below, we see that two to three rounds of preselection are sufficient to remove this effect and converge to the usual distillation error rate (horizontal dotted line). This number might also change with the physical error rate. Indeed, the logical error calculated for three rounds and for four rounds are so close that the curves are unresolvable (i.e. overlap one another) in Figure 26.

It is noted here that the tail of weight two stabilizers 12 is essentially a repetition code with which to encode the output logical qubit 24 (although it is noted that the output logical qubit finds X and Z logical support with other data cat qubits which form parts of the weight four stabilizers 12 in the main body of the arrangement 4).

All of the operations of the second step 303 can then be performed in parallel. That is, an *Rₓ*(*π*/4) gate is physically applied to the fifteen physical data cat qubits 8 that corresponds to the logical rotations shown in Figure 15 (either single Pauli product rotations on the validation logical qubits 24 or the Pauli product rotations involving two or more logical qubits of the output 24 and validation 26 logical qubits).

In the explicit example shown in Figure 15, this set of physical gates is applied on the physical data cat qubits having the following indices:
(0, 1, 2, 3, 4, 012, 013, 014, 023, 024, 034, 123, 124, 134, 234, 01234),
where the data cat qubit is identified by the indices within or adjacent to the circle in Figure 25. As one can see in Figure 25, some data qubits have the same index, e.g. "034" of the data cat qubits 8 forming the bottom weight two stabilizer on the left-hand side of Figure 25). For such double entries, simply one of the two options is selected for performing the physical gate on.

In the third step 307, all of the validation logical qubits 26 may again be measured in the Z basis. As described above, depending on the results of the logical measurements either the entire distillation is repeated, or it is terminated and the magic state hosted by the output logical qubit 24 may be used in subsequent operations (i.e. used to perform the corresponding gate on another logical qubit when required during a quantum computation).

For the avoidance of doubt, in the example of Figure 15, if physical *R_{X}*(*π*/4) gates are physically applied to the fifteen physical data cat qubits 8, then the eventual distilled output is a magic state corresponding to a logical *R_{X}*(-*π*/4) rotation, and vice versa.

Figure 27 shows a quantum circuit diagram of a portion of the method at the physical level (i.e. the lines here refer to operations involving physical data cat qubits 8).

The M_{XX} and M_{XXXX} denote the multi X measurements of the stabilizers 12 (e.g., which can be performed as described above in relation to Figure 24 using an ancilla qubit 10).

The set of physical *R_{X}*(*π*/4) gates are then applied on the correct physical data cat qubits 8 as required to achieve the Pauli rotations and Pauli product rotations of the outer coder. As shown in Figure 27, at least some (and preferably all) the physical *R_{X}*(*π*/4) gates are parallelized, i.e. performed in the same time step.

After the *R_{X}*(*π*/4) gates, Z measurements are performed on every physical data cat qubit 8 which are in the logical Z support of the validation logical qubits, except those in the output repetition code (i.e. those in the tail of weight two stabilizers shown in Figure 25). The logical Z of each of the validation logical qubits 26 is then reconstructed using the results of the Z measurements on said physical cat qubits 8.

For instance, for the validation logical qubit 26 enumerated with the index "1", we take the product of Z measurements of all the physical data cat qubits 8 which have a "1" in their index to give the logical Z of that validation logical qubit 26 (e.g. the eight physical data cat qubits 8 of the central column of the 3x3 square array of weight four stabilizers 12).

If not all of the logical Z measurements of the validation logical qubits 26 are +1, then the distilled magic state hosted by the output logical qubit 24 is discarded and the scheme is restarted.

Otherwise, we take the product of all the Z measurements that have been made of all the physical data cat qubits 8 which have a "0" in their index (e.g. the eight physical data cat qubits 8 of the two bottom rows). If the result is -1, we apply a Pauli correction X gate on the output logical qubit 24 (e.g. to the physical data cat qubit 8" which is shared between the output repetition tail and one of the weight four stabilizers 12 of the main body of the classical LDPC code arrangement, or indeed on any of the physical data cat qubits 8 in the repetition code "tail", those with only the single index "0" associated) or tracked in software.

Finally, an alternative to pre-selection can be used. It comprises, after having applied the *R_{X}*(*π*/4) gates to continue measuring the X stabilizers. After a few, e.g. around 5, rounds, the residual errors that happened before *R_{X}*(*π*/4) are well resolved, and a corrective logical *Rₓ*(-*π*/2) gate can be applied to one or more of the logical qubits (to correct for residual Z error). Then, we do again a few, e.g. around 5, rounds of stabilizer measurements to resolve the errors that happened before the corrective *R_{X}*(-*π*/2) as X errors. As the errors are just X errors now, so we can simply post-process the values of the Z logical based on this.

In any case, as a result of the above, the tail of weight two stabilizers will host the distilled magic state, which can be used in subsequent quantum computations implemented by the quantum computer when a logical gate corresponding to the magic state needs to be implemented.

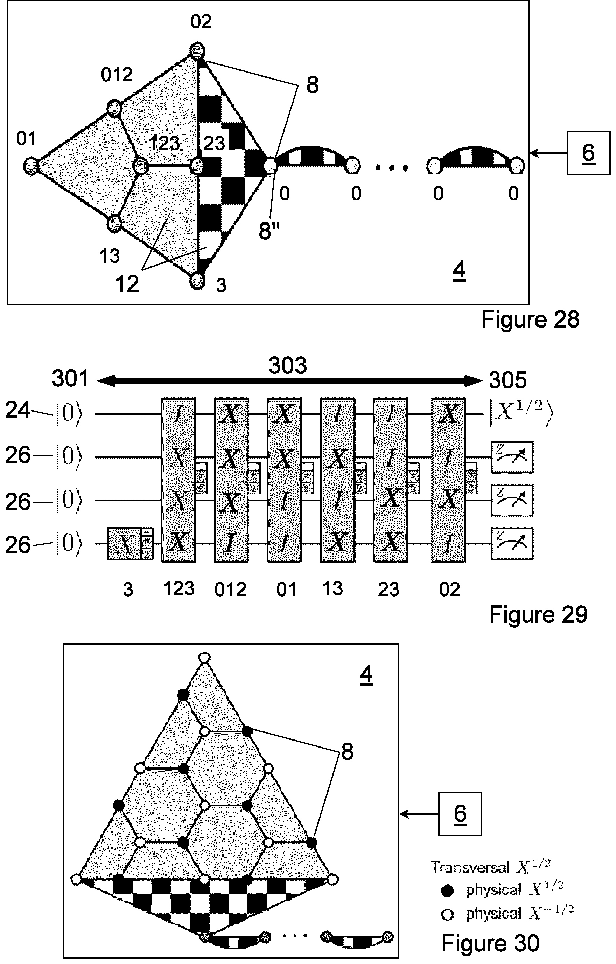

Figure 28 shows an arrangement 4 of data cat qubits 8 and a command circuit 6 configured to distil a magic state which corresponds to the *π*/2 rotation about the Pauli X-axis or indeed Z-axis, according to an embodiment. Like features take the same reference numerals as previous Figures.

Figure 28 shows a plurality of physical data cat qubits 8 arranged in a two-dimensional topology. The shaded regions represent stabilizers of weight four or weight two.

As such, the classical LDPC code formed from these stabilizers encodes four logical qubits, and yields a value of kd/n of greater than one, as can be verified using the methods described above. The data cat qubits 8 form the logical X support and the logical Z support (i.e. the supports for the logical X and logical Z operators), as described above.

Similar to above, in the example of Figure 28, each data cat qubit 8 is shown with one or more indices next to or in the circles, "0", "1", "2", "3". These indicate the logical qubits for which that physical data cat qubit 8 forms a part of the logical Z support (or equivalently the physical multi-logical X support as described above). The logical qubit "0" refers to the output logical qubit 24, whereas each of "1", "2", "3" refer to respective ones of the validation logical qubits 26.

To note, this number also represents which of the four logical qubits that physical data qubit forms part of the logical Z support
Thus, the classical LDPC code may be exploited to perform single- or multi-logical-qubit rotations about the X axis, to perform the quantum circuit to distil a magic state for a *π*/2 rotation about the Pauli X axis such as that shown in Figure 29, or about the Pauli Z axis.

Accordingly, the arrangement of Figure 28 may be used to distil magic states by using an outer code as described herein, for instance, by following the quantum circuit diagram shown in Figure 29, which shows an exemplary quantum circuit built using the outer code for distilling the an output logical qubit 24 in the magic $\left|{X}^{\frac{1}{2}}\right〉 = \left|-i\right〉$ state, according to an embodiment.

In the first step 301, the four (output 24 and validation 26) logical qubits may be encoded in a |0〉*_{L}* state. As will be appreciated, for a given classical LDPC code, this may be done as described above (by physically preparing each of the physical data cat qubits 8 and selectively measuring the stabilizers of the code).

Of course, this is just one option, the validation 26 and output 24 logical qubit may respectively be prepared in other logical states, for instance in |1〉*_{L}*.

A sufficient number of rounds need to be performed to prepare with a good fidelity the |0〉*_{L}*. It may also be advantageous to do preselection, i.e. ensuring that we detect no error in the last given number of rounds.

It is noted here that the tail of weight two stabilizers 12 is essentially a repetition code with which to encode the output logical qubit 24 (although it is noted that the output logical qubit finds X and Z logical support with other data cat qubits which form parts of the weight four stabilizers 12 in the main body of the arrangement 4).

All of the operations of the second step 303 can then be performed in parallel. That is, an *R_{X}*(-*π*/2) gate is physically applied to the seven physical data cat qubits 8 that corresponds to the logical rotations shown in Figure 29 (either single Pauli product rotations on the validation logical qubits 24 or the Pauli product rotations involving two or more logical qubits of the output 24 and validation 26 logical qubits).

In the explicit example shown in Figure 29, this set of physical gates is applied on the physical data cat qubits having the following indices: (3, 123, 012, 01, 13, 23, 02), where the data cat qubit is identified by the indices adjacent to the circle in Figure 28.

In the third step 307, all of the validation logical qubits 26 may again be measured in the Z basis (i.e., as described above, performing Z measurements are performed on every physical data cat qubit 8 which are in the logical Z support of the validation logical qubits, which does not include those in the output repetition code). As described above, depending on the results of the logical measurements either the entire distillation is repeated, or it is terminated and the magic state hosted by the output logical qubit 24 may be used in subsequent operations (i.e. used to perform the corresponding gate on another logical qubit when required during a quantum computation).

For instance, for the validation logical qubit 26 enumerated with the index "1", we take the product of Z measurements of all the physical data cat qubits 8 which have a "1" in their index to give the logical Z of that validation logical qubit 26.

If not all of the logical Z measurements of the validation logical qubits 26 are +1, then the distilled magic state hosted by the output logical qubit 24 is discarded and the scheme is restarted.

Otherwise, we take the product of all the Z measurements that have been made of all the physical data cat qubits 8 which have a "0" in their index. If the result is -1, we apply a Pauli correction X gate on the output logical qubit 24 (e.g. to the physical data cat qubit 8" which is shared between the output repetition tail and one of the weight four stabilizers 12 of the main body of the classical LDPC code arrangement, or indeed any others only in the tail as described above) or tracked in software.

Finally, the same alternative to pre-selection can be used in a similar manner as described above.

In any case, as a result of the above, the tail of weight two stabilizers will host the distilled magic state, which can be used in subsequent quantum computations implemented by the quantum computer when a logical gate corresponding to the magic state needs to be implemented.

It is noted that the arrangement of Figure 28 can also be used to distil a magic |*S*〉 = | *+ i*〉 magic state (which is a magic state for a *π*/2 rotation about the Pauli Z axis). This is because all Clifford gates are transversal on 2D colour codes and the specific code here is a Steane code merged with a repetition code.

Thus, to adapt the quantum circuit of Figure 29 to output a magic |*S*〉 state in the output logical qubit 24, in step 303, physical transversal *S*^{†} gates (a *-π*/2 rotation about the Pauli Z axis) are applied on the physical data qubits 8. Specifically, doing an *X*^{1/2} followed by a Z measurement is equivalent to doing an S followed by an X measurement at the physical level. That is, physical S gates are performed on each of the LDPC code portion, namely physical data cat qubits 8 having the following indices: (3, 123, 012, 01, 13, 23, 02). Of course, if any of the indices happened to be doubled (which is not the case in this specific implementation), then a gate need be applied on only one of such corresponding physical qubits.

We note that this is because both the S and X^1/2 gates are transversal on the outer code used to generate the embodiments of Figures 28-29 (which, for instance, is not the case for that used in relation to Figure 25).

Then, in step 305, a logical X measurement is performed on each of the validation logical qubits. Explicitly, this can be done by performing a physical X measurement on each of the physical data cat qubits 8 contributing to the validation logical qubits 26.

The remaining steps are identical as described above. That is, if not all of the logical X measurements of the validation logical qubits 26 are +1, then the distilled magic state hosted by the output logical qubit 24 is discarded and the scheme is restarted. Otherwise, we take the product of all the X measurements that have been made of all the physical data cat qubits 8 which have a "0" in their index. If the result is -1, we apply a Pauli correction X gate on the output logical qubit 24 or tracked in software.

A higher-fidelity magic state can readily be obtained by using a higher-distance 2D colour code whilst still staying within a 2D layout.

As an example, a suitable arrangement 4 is shown in Figure 30. Here, different single Pauli rotations and Pauli product rotations of $\frac{π}{2}$ about the X axis are performed, namely ${R}_{X} \left(\frac{π}{2}\right)$ rotations are performed on a first subset of the physical data qubits 8 of the colour code portion (the upper triangular part formed of multiple weight four or weight 6 stabilizers 12 shown in light grey) represented by black circles, whereas namely ${R}_{X} \left(-\frac{π}{2}\right)$ rotations are performed on a second, different subset of the physical data qubits 8 of the colour code portion represented by white circles.

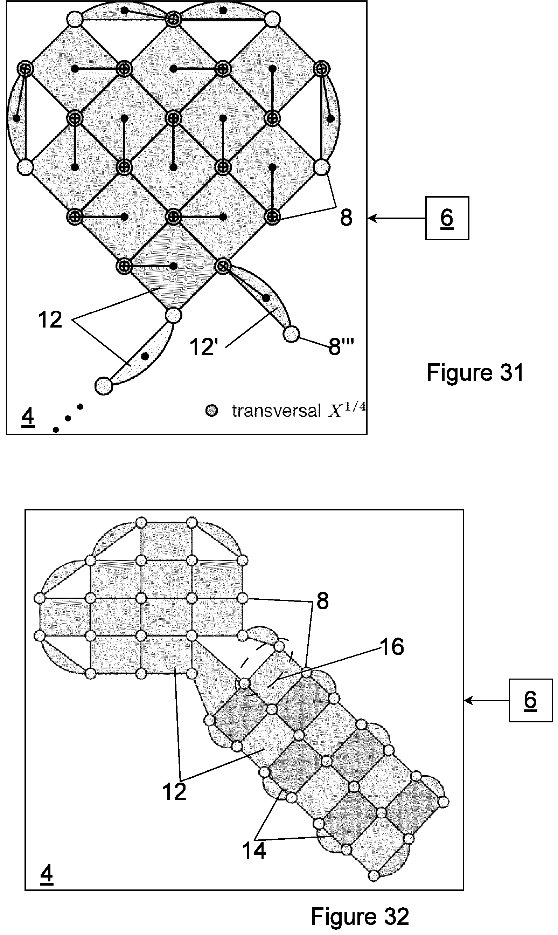

Figure 31 shows a slightly modified version of the arrangement 4 of Figure 25. In the scheme described above in relation to Figures 25 and specifically the quantum circuit diagram at the physical level shown in Figure 27, it is necessary to determine a CNOT gate schedule for the stabilizer 12 measurements such that the gates do not overlap and all stabilizers are measured within four timesteps. Additionally, it is advantageous for every qubit on which the transversal *X*^{1/4} (i.e., *R_{X}*(*π*/4)) gate is applied, namely those represented by dark grey circles in Figure 31, to be involved in a CNOT interaction of a stabilizer measurement immediately beforehand.

If this is not the case, a Z idling error occurring between the CNOT and the *X*^{-1/4} gate contribute directly to the input physical error rate of the distillation protocol.

The present Inventors have therefore developed modified arrangements 4 such as that shown in Figure 31 which permits permit all required CNOTs between the ancilla (of the relevant stabilizer 12) and data cat qubits 8 supporting the *X*^{-1/4} gate to be performed in a single timestep, especially in embodiments wherein the *X*^{-1/4} gates are only applied when the preselection condition is satisfied.

Thus, one viable solution is to introduce an additional data cat qubit 8‴ and stabilizer 12', as illustrated in Figure 12. Thus, by introducing only two additional qubits (the data cat qubit 8‴ and the ancilla to measure syndromes of the additional weight two stabilizer 12'), it becomes possible to apply a CNOT gate to each qubit involved in the *X*^{1/4} transversal gate immediately beforehand.

Figure 32 shows an arrangement 4 of data cat qubits 8 and a command circuit 6 configured to distil a magic state which corresponds to the *jπ*/4 rotation about the Pauli X-axis, according to an embodiment, specifically *π*/4. Like features take the same reference numerals as those in Figures 1, 2, 12, and 25.

Here, instead of the tail of weight two stabilizers for hosting the distilled magic state output via the methods described herein, a thin surface code portion formed of weight four X stabilizers 12 as described above, alternated with weight four Z stabilizers 14 as known in the art. This arrangement is advantageous if the bit-flip is too high for the distilled magic state to be protected in a simple phase-flip repetition code as discussed above in relation to Figure 25. A particularly advantageous synergy exists then by providing the stabilizers with transmon ancilla qubits with which to perform the parity measurements which are e.g. quicker and easier to implement than cat-cat CNOT gates at the expense of reducing the bit-flip protection afforded by the data cat qubits. The present Inventors have thus recognised a magic state factory which can leverage the advantages of hybrid cat-transmon architecture (i.e. using transmons as ancillas) whilst still yields excellent bit-flip protection properties due to the form of the distillation scheme as described herein.

We can note that the Z stabilizer 16 of the thin surface code is not drawn (i.e. there is no shaded region indicating a stabilizer comprising only the two data cat qubits 8 encircled by the dashed oval 16 in Figure 32), because it is merged with the logical qubit "3" of the LDPC code (if comparing with the indices shown in Figure 25), and it need not to be measured until the step of measuring the data cat qubits 8 of the LDPC code in Z. Then, we measure stabilizer 16 again and to reconstruct the Z logical of validation logical qubits "2" and "4", we multiply the Z measurement on every qubit in the Z support of the validation qubits "2" and "4" by the ZZ stabilizer 16 of the surface code derived after a number of rounds and appropriate decoding.

The other steps described above in relation to Figure 25 also apply to Figure 32.

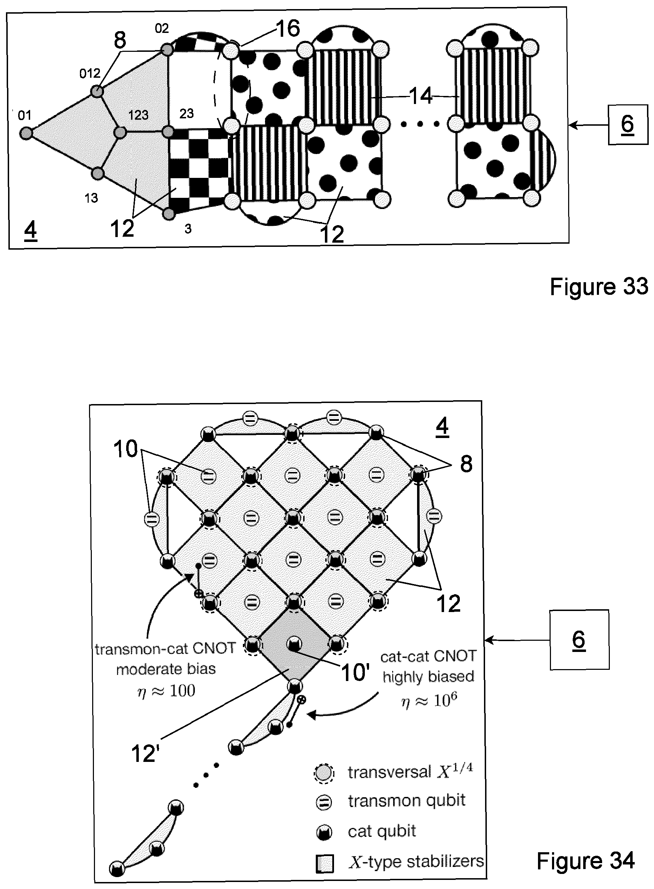

Figure 33 shows another arrangement 4 of data cat qubits 8 and a command circuit 6 configured to distil a magic state which corresponds to the *π*/2 rotation about the Pauli X-axis or Pauli-Z axis, according to an embodiment. Like features take the same reference numerals.

Here, the arrangement is similar to that discussed above in relation to Figure 28, but with the colour code merged with a thin surface code to host the output logical qubit 24.

For instance, all the physical data cat qubits 8 are prepared in |0〉 (or a |1〉), and the X stabilizers 12 are measured (those with shading of light grey, checkboard, or dots). The Z stabilizers 14 of the thin surface code are also measured (those with striped shading).

A sufficient number of rounds are performed (e.g., around at least 8 for a phase-flip error rate of *p_{Z}* = 10⁻³). Then an *X*^{-1/2} gate is applied on every data cat qubit 8 of the color code portion (the triangular portion), indicated by dark grey circles, which are then all subsequently measured in the *Z* basis. An *X*^{1/2} gate could also be applied to prepare a state $\left|{X}^{- \frac{1}{2}}\right〉$ instead of a $\left|{X}^{\frac{1}{2}}\right〉$.

Then, the Z logical operator of logical validation qubits 26 "1" to "3" is evaluated. In practice, this is done by taking the product of the Z measurements of all qubits labelled with the number corresponding to the logical qubit.

We can note that the Z stabilizer 16 of the thin surface code is not drawn (i.e. there is no shaded region indicating a stabilizer comprising only the two data cat qubits 8 encircled by the dashed oval 16 in Figure 33), because it is merged with the logical qubit "2" of the LDPC code (if comparing with the indices shown in Figure 28), and it need not to be measured until the step of measuring the data cat qubits 8 of the LDPC code in Z.

Then, we measure stabilizer 16 again and to reconstruct the Z logical of validation logical qubit "2", we multiply the Z measurement on every qubit in the Z support of the validation qubit "2" by the ZZ stabilizer 16 of the surface code derived after a number of rounds and appropriate decoding.

If all Z logical operators from logical qubits "1" to "3" yield +1, the distillation is accepted and a $\left|{X}^{\frac{1}{2}}\right〉 = \left|-i\right〉$ state is prepared in logical qubit 1.

Otherwise, we take the product of all the Z measurements that have been made of all the physical data cat qubits 8 which have a "0" in their index. If the result is -1, we apply a Pauli correction X gate on the output logical qubit 24 or tracked in software.

We also note that instead of applying a *X*^{-1/2} gate and measuring in the Z basis, one could apply an *S* gate and measure in the *X* basis, as *X*^{-1/2}*ZX*^{1/2} *= SXS*^{†}.

Moreover, the present inventors have recognised that there may be advantages to gain by providing a cat-only repetition code to host the output logical qubit 24, whilst leveraging a hybrid cat-transmon architecture (i.e. using transmons as ancillas) only in the colour code portion. This is because full cat-only stabilizers (with cat qubit ancillas) restricted to only weight two (i.e. a repetition code) requires simpler engineering, whereas higher-weight stabilizers are simpler to implement with a transmon ancilla (or indeed, other discrete variable qubit such as a fluxonium, etc.).

Specifically, the reduced noise bias of the cat-transmon CNOT gate is mitigated by the bit-flip protection of the code generated by the outer code (e.g. the Hadamard Reed-Muller code described in relation to Figures 25-27 and 34). This hybrid approach does not prevent the use of a fully cat-based architecture in the output repetition code, which hosts the final magic state, to minimize the qubit overhead.

Figure 34 shows one such arrangement, which is a specific implementation of the embodiment of Figure 25, but showing the form of the ancilla qubits 10 for each stabilizer 12. Here, the stabilizers 12 of the colour code portion (namely, the portion comprising some stabilizers 12 of weight greater than two) comprise transmon qubits as the ancillas 10. The one exception is the weight four stabilizer 12' merging with the cat-only repetition code portion. In this stabilizer 12', the ancilla 10' is a physical cat qubit.

Such a setup trades a more modest noise bias for increased gate fidelity, benefiting from the simpler interaction between cat and transmon qubits compared to cat-cat interactions. The *X*^{-1/4} (*R_{X}*(*-π*/4) gate on the data cat qubits 8 (identified here by the dotted outer circle) could then be implemented through the ancilla transmon qubit 10 using a SNAP gate by applying an *e*^{-*iπ*/4} phase to the odd Fock states or via quantum optimal control.

For the avoidance of doubt, a SNAP gate (short for Selective Number-dependent Arbitrary Phase gate) enables unitaries that act on the logical subspace of the physical cat qubit 8 whilst respecting the structure of the cat qubit encoding.

The SNAP gate is a unitary operation of the form: S = Σₙ *e^{iφₙ}*|n〉〈n|, which applies a user-defined phase *φₙ*, to each Fock state |n〉 of the cat qubit mode. This is achieved in practice through dispersive coupling between the bosonic mode hosting the cat qubit and the ancilla transmon qubit 10. In the dispersive regime, the frequency of the transmon depends linearly on the number of photons in the cavity due to a cross-Kerr interaction term *χa*^{†}*aσ*_{z} in the Hamiltonian.

This photon-number-dependent shift allows one to selectively address each Fock state by applying microwave pulses to the transmon at appropriately chosen frequencies. By designing sequences of such pulses, one can accumulate controlled phase shifts on individual Fock components of the cavity without altering their amplitudes. The SNAP gate thus enables arbitrary diagonal unitaries in the Fock basis, a capability that is central to controlling cat qubits and engineering logical gates.

One particularly elegant application of the SNAP gate is the implementation of logical X-axis rotations of the form ${X}^{{\left(\frac{1}{2}\right)}^{n}}$, which rotate the cat qubit state within the logical subspace. These rotations correspond to unitaries of the form: $U = {e}^{\frac{iπ}{{2}^{n}} {a}^{†} a}$, which applies a phase ${e}^{\frac{iπ}{{2}^{n}} n}$, to the n-photon Fock state. Because this unitary is diagonal in the Fock basis and involves a linear phase ramp with photon number, it can be directly implemented as a SNAP gate with phase profile ${φ}_{n} = n \frac{π}{{2}^{n}}$. This approach allows one to precisely control the phase evolution of the cavity state and thereby perform rotations of the logical qubit around the X axis of its Bloch sphere representation.

In the specific case of *n* = 2, the unitary becomes: $U = {e}^{\frac{iπ}{4} {a}^{†} a}$, which corresponds to the desired quarter-rotation *X*^{-1/4} on the cat qubit.

Such protocols have been demonstrated to achieve percent to subpercent fidelities.

Thus, this enables leveraging the high-fidelity gates of a harmonic oscillator coupled to a transmon qubit without compromising the logical bit-flip error rate, thanks to the bit-flip protection offered by the Hadamard Reed-Muller code. At the same time, a repetition code is used for the output magic state to minimize the overhead.

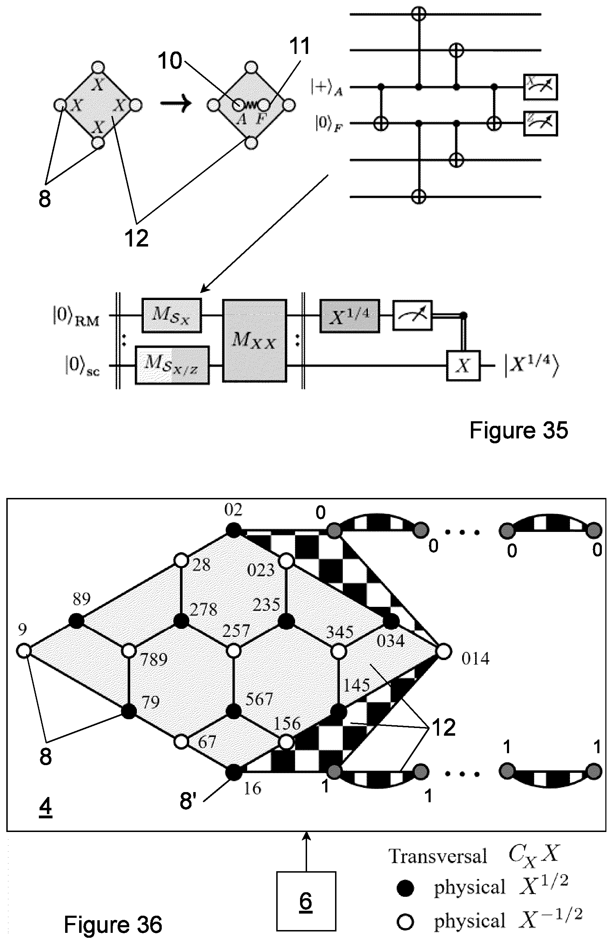

Figure 35 shows yet another embodiment, wherein the ancilla qubit 10 in a stabilizer 12 is accompanied by a second, so-called flag qubit 11, as shown in the upper-left panel of Figure 35.

The present Inventors have recognised that the schemes discussed herein may be sensitive to bit-flip hook errors on the ancilla qubits 10 (especially, but not necessarily limited to, when the ancilla qubits 10 are discrete variable qubits such as transmons).

This effectively reduces the distance of, e.g., the Hadamard Reed-Muller code against bit-flip errors from 3 to 2. A solution to restore the distance is the use of flag qubits, as illustrated in Figure 35.

Unlike conventional flag qubit schemes, our approach may not allow for correlated decoding between the flag qubit measurement and subsequent Z stabilizers, as only X stabilizers are present. Thus, it is necessary to post-select on the flag qubits yielding a trivial outcome, and rejecting the magic state preparation otherwise. In the considered noise-bias regime, this post-selection increases the time cost only marginally.

The upper-right panel of Figure 35 shows the quantum circuit diagram for performing a stabilizer measurement incorporating the additional flag qubit. Here the subscripts "A" and "F" and accompanying horizontal lines denote respectively the operations performed on the ancilla 10 and flag 11 qubits, whereas the remaining horizontal lines denote the operations performed on the remaining data cat qubits 8.

A first CNOT is performed between the ancilla qubit 10 prepared in a |+〉 state (alternatively a |-〉 state) as control and the flag qubit 11 prepared in a |0〉 state (alternatively a |1) state) as the target.

Subsequent CNOTs are performed: (i) between two of the data cat qubits 8 both as targets and each with the flag qubit 11 as control; and (ii) between the other two of the data cat qubits 8 both as targets and each with the ancilla qubit 10 as control.

A final CNOT is performed between the ancilla qubit 10 as control and the flag qubit 11 as the target.

The ancilla qubit 10 is measured in the X basis, whereas the flag qubit is measured in the Z basis. These measurements are used in the decoding, to improve the distance of the code. The X measurement result is the value of the X stabilizer, while the Z measurement is the flag. The Z measurement can only yield -1 in case of a bit-flip error on the flag or on the ancilla, in which case the scheme is restarted.

The lower panel of Figure 35 shows a quantum circuit diagram of a portion of the method at the logical level, specifically for the arrangement of Figure 28. The lower line with subscript "SC" represents the logical operations applied on the thin surface code portion, whereas the upper line with subscript "RM" represents the logical operations applied on the colour code (so-called Hadamard Reed-Muller) code portion. It is the stabilizer measurements denoted by *M_{S_{X}}* of the upper line which leverages the flag qubit stabilizer measurements as described above.

### Magic state distillation for multi-qubit magic state corresponding to a multi-qubit controlled-unitary gate

The present Inventors have further discovered that it may also be beneficial to use quantum computing architectures leveraging biased-noise physical qubits (such as cat qubits) as described herein to distil a multi-qubit magic state, wherein the multi-qubit magic state is for a multi-qubit controlled unitary gate.

As will be appreciated, in general a controlled-unitary gate (also termed controlled- *U* represented by unitary matrix *"CU"*) is defined as follows. Given an arbitrary basis of one qubit (|*e*₀〉, |*e*₁〉) and a gate defined by its unitary matrix *U*, the corresponding controlled-U gate is the gate whose unitary matrix is $\left|{e}_{0}\right〉 \left〈{e}_{0}\right| ⊗ 1 + \left|{e}_{1}\right〉 \left〈{e}_{1}\right| ⊗ U$ with 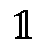 being the identity. Here, the dimension of the target has not been specified, namely in general *U* (and 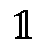 ) can be a multi-qubit gate

As an example, the CNOT gate is a controlled-U gate with the control in the *Z* basis and *U* = *X* (so also known as a "controlled-X" gate). One can verify: $\left(\begin{matrix}1 & 0 & 0 & 0 \\ 0 & 1 & 0 & 0 \\ 0 & 0 & 0 & 1 \\ 0 & 0 & 1 & 0\end{matrix}\right) = \left(\begin{matrix}1 & 0 \\ 0 & 0\end{matrix}\right) ⊗ \left(\begin{matrix}1 & 0 \\ 0 & 1\end{matrix}\right) + \left(\begin{matrix}0 & 0 \\ 0 & 1\end{matrix}\right) ⊗ \left(\begin{matrix}0 & 1 \\ 1 & 0\end{matrix}\right) .$

Herein, the terms *X, Y,* and *Z* denote respectively the Pauli-*X*, *-Y,* and *-Z* matrices (corresponding to physical or logical *X, Y,* and *Z* gates), and where appropriate denote corresponding *X, Y,* and *Z* bases (e.g. in terms of measurements).

More generally, one can also define multi-control controlled-unitary gates in a similar manner. For instance, a *C_{X}C_{X}X* gate is a multi-control controlled-unitary gate with two control qubits both in the X basis and *U* = *X.*

As will be appreciated, a CX gate is essential to intricate the qubits within the computation. While the T or *X*^{1/4} gate enables to reach universality, some algorithms like Shor algorithm requires a lot of Toffoli gate. While 4 T states are required to perform a Toffoli gate, only one *C_{X}C_{X}X* is required to perform a Toffoli.

Figure 36 shows an arrangement 4 of data cat qubits 8 and a command circuit 6 configured to distil a multi-qubit magic state which corresponds to a multi-qubit controlled unitary gate, specifically a *C_{X}X* (a two-qubit controlled unitary gate with the control in the X basis and the unitary an X gate). Again, like features take the same reference numerals as those in previous Figures.

Figure 36 shows a number of data cat qubits 8 arranged in a two-dimensional topology. The shaded/checkered regions represent stabilizers of weight four, five, six, or two.

As such, the classical LDPC code formed from these stabilizers encodes ten logical qubits, and yields a value of kd/n of greater than one, as can be verified using the methods described above. The data cat qubits 8 form the logical X support and the logical Z support (i.e. the supports for the logical X and logical Z operators), as described above.

Similar to the above, given the data cat qubits 8 are "shared" between the ten logical qubits, when a physical gate is applied to a given one of the data cat qubits 8, a logical operation may be induced on one or several of the logical qubits depending on the specific physical gate and the specific data cat qubit 8 involved.

In the example of Figure 36, each data cat qubit 8 is shown with one or more indices next to the circles, "0", "1",...,"9". These indicate the logical qubits for which that physical data cat qubit 8 forms a part of the logical Z support. The logical qubits "0" and "1" refers to two output logical qubits 24, whereas each of "2", ..., "9" refer to respective ones of the validation logical qubits 26. For instance, the bottom--most data qubit 8 (indicated as 8') of the diamond-like grey shaded portion has "16", which indicates that a physical X gate applied to the data cat qubit 8' results in a logical X gate being applied to logical qubits "1" (one of the output logical qubits 24), and "6" (one of the validation logical qubits 26).

As above, this number also represents which of the logical qubits that physical data qubit forms part of the logical Z support.

Thus, the classical LDPC code may be exploited to perform single- or multi-logical-qubit rotations about the X axis, and indeed different rotations on different ones or combinations of the logical qubits, to perform a quantum circuit to distil the two output logical qubits 24 to magic state which together correspond to a *C_{X}X* gate.

Accordingly, the arrangement of Figure 36 may be used to distil magic states by using an outer code as described herein, for instance, by following the quantum circuit diagram shown in Figure 37, which shows an exemplary quantum circuit built using the outer code for distilling the two output logical qubits 24 in the magic *C_{X}X* state, according to an embodiment. We note that the magic *C_{X}X* state is the same as the magic CZ state. That is, whilst the states are the same, a *C_{X}X* gate or a CZ gate can be performed depending on the measurements and other operations used within the teleportation circuit used to consume the magic state.

In a first step, the ten (output 24 and validation 26) logical qubits may be encoded in a |0〉*_{L}* state. As will be appreciated, for a given classical LDPC code, this may be done by physically preparing each of the physical data cat qubits 8 of the classical LDPC code in a |0〉 state, and selectively measuring the stabilizers of the code to ensure a logical |0〉*_{L}* state is encoded therein.

Of course, this is just one option, the validation 26 and output 24 logical qubit may respectively be prepared in other logical states, for instance in |1〉*_{L}*.

Similar to the above, a sufficient number of rounds need to be performed to prepare with a good fidelity the |0〉*_{L}*. Again, it may be advantageous to do preselection, i.e. ensuring that we detect no error in the last given number of rounds. In practice, this means that the protocol will only stop when said given number of rounds without detected errors are observed.

It is noted here that the two tails of weight two stabilizers 12 essentially respectively provide two repetition codes with which to encode the output logical qubits 24 (although it is noted that the output logical qubit finds X and Z logical support with other data cat qubits which form parts of the weight four stabilizers 12 in the main body of the arrangement 4).

All of the subsequent single Pauli and Pauli product rotations operations can then be performed in parallel. In particular, different gates are physically applied to the physical data cat qubits 8 that corresponds to the logical rotations shown in Figure 37. Here, a physical *X*^{1/2} rotation (i.e. a *R_{X}*(*π*/2)) is applied to a first subset of physical data cat qubits 8 represented by black circles in Figure 36, and a physical *X*^{-1/2} rotation (i.e. a *R_{X}*(*-π*/2)) is applied to a second subset of physical data cat qubits 8 represented by white circles.

In the explicit example shown in Figures 36 and 37, the set of physical *X*^{1/2} rotations (*R_{X}*(*π*/2)) is applied on the physical data cat qubits having the following indices: (02, 89, 79, 16, 567, 235, 145, 034, 278), whereas the set of physical *X*^{-1/2} rotations (*R_{X}*(*-π*/2)) is applied on the physical data cat qubits having the following indices: (9, 02, 89, 79, 16, 567, 235, 145, 034, 278), where the data cat qubit is identified by the indices adjacent to the circles in Figure 36.

In a next step, all of the validation logical qubits 26 may again be measured in the Z basis, and the logical operator is evaluated. For instance, this is done by taking the product of the Z measurements of all the physical data cat qubits having a number which corresponds to the logical qubit, e.g. for logical qubit "2", the Z measurements are performed on physical data cat qubits having the following indices: (02, 28, 023, 278, 235, 257)

As described above, depending on the results of the logical measurements either the entire distillation is repeated, or it is terminated and the magic state hosted by the output logical qubits 24 may be used in subsequent operations (i.e. used to perform the corresponding gate on another logical qubit when required during a quantum computation).

That is, if all the Z logical operators yield +1, the distillation is accepted, and we know that a |*CZ*〉 = |*C_{X}X*〉 *=* 1/2(|00〉 + |01〉 + |10〉 - |11〉) state is prepared between the output logical qubits 24 (namely, logical qubits "0" and "1"). In contrast, if not all of the logical Z measurements of the validation logical qubits 26 are +1, then the distilled magic state hosted by the output logical qubit 24 is discarded and the scheme is restarted.

Otherwise, we take the product of all the Z measurements that have been made of all the physical data cat qubits 8 which have a "0" in their index. If the result is -1, we apply a Pauli correction X gate on the corresponding output logical qubit 24 or tracked in software. Similarly, we take the product of all the Z measurements that have been made of all the physical data cat qubits 8 which have a "1" in their index. If the result is - 1, we apply a Pauli correction X gate on the corresponding output logical qubit 24 or tracked in software.As an alternative implementation, we also note that instead of applying a *X*^{±1/2} gate and measuring in the Z basis, one could apply an *S*/ *S*^{†} gate and measure in the X basis, as *X*^{-1/2}*ZX*^{1/2} *= SXS*^{†}*,* in a similar manner as described above in relation to Figures 28-29.

Said otherwise, a physical *S* gate is applied to the first subset of physical data cat qubits 8 and a physical *S*^{†} gate is applied to the second subset of physical data cat qubits 8. These are applied substantially simultaneously (i.e., one cannot perform "rotations" separated by rounds of stabilizer measurements as is possible in the X-basis scheme).

Here, all of LDPC physical data qubits 8 (those not in the repetition code tails) have physical gates applied thereto, although we note that in alternative embodiments a gate is not needed on all of these qubits (e.g. if there are two physical data qubits providing the same logical Z supports, i.e. having the same index, then a physical gate is applied on only one of these). What is important is that the outer code is configured to have a logical gate corresponding to $\pm \frac{π}{2}$ rotation about the Pauli Z-axis which is transversal.

The logical X of the validation logical qubits 26 are then evaluated analogously to described above for the Z measurements.

Specifically, if all the X logical operators yield +1, the distillation is accepted, and we know that a |*CZ*〉 = |*C_{X}X*〉 *=* 1/2(|00〉 + |01〉 + |10〉 - |11〉) state is prepared between the output logical qubits 24 (namely, logical qubits "0" and "1"). In contrast, if not all of the logical X measurements of the validation logical qubits 26 are +1, then the distilled magic state hosted by the output logical qubit 24 is discarded and the scheme is restarted.

Otherwise, we take the product of all the X measurements that have been made of all the physical data cat qubits 8 which have a "0" in their index. If the result is -1, we apply a Pauli correction Z gate on the corresponding output logical qubit 24 or tracked in software. Similarly, we take the product of all the X measurements that have been made of all the physical data cat qubits 8 which have a "1" in their index. If the result is -1, we apply a Pauli correction Z gate on the corresponding output logical qubit 24 or tracked in software.

Furthermore, the same alternative to pre-selection described above can also be used here.

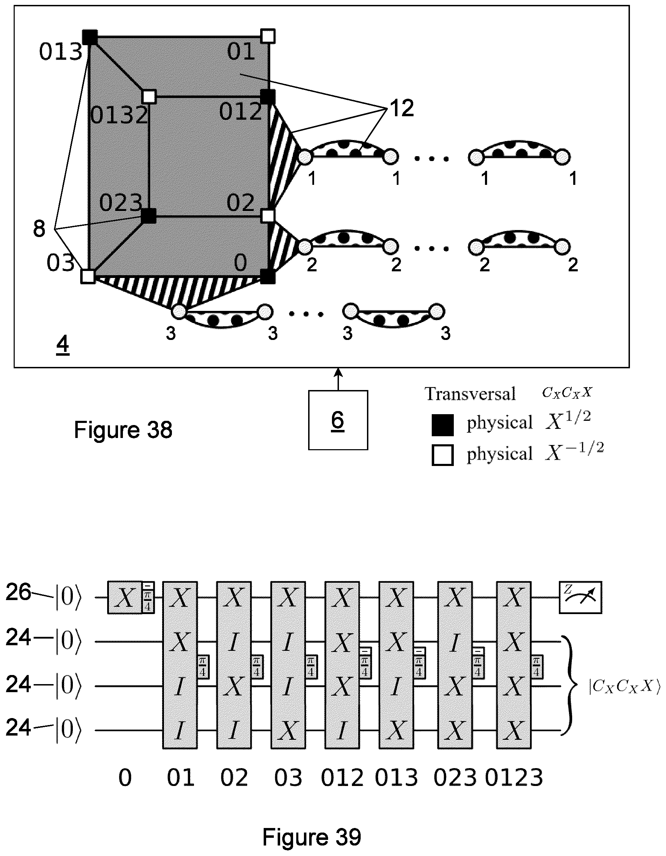

Figure 39 shows an arrangement 4 of data cat qubits 8 and a command circuit 6 configured to distil multi-qubit magic state which corresponds to a multi-qubit controlled unitary gate, specifically a *C_{X}C_{X}X* (a three-qubit controlled unitary gate with two controls in the X basis and the unitary an X gate). Again, like features take the same reference numerals as those in previous Figures.

Figure 39 shows a number of data cat qubits 8 arranged in a two-dimensional topology. The shaded/checkered regions represent stabilizers of weight two, three or four.

The classical LDPC code formed from these stabilizers encodes four logical qubits, and yields a value of kd/n of greater than one, as can be verified using the methods described above. The data cat qubits 8 form the logical X support and the logical Z support (i.e. the supports for the logical X and logical Z operators), as described above.

Similar to the above, given the data cat qubits 8 are "shared" between the four logical qubits, when a physical gate is applied to a given one of the data cat qubits 8, a logical operation may be induced on one or several of the logical qubits depending on the specific physical gate and the specific data cat qubit 8 involved.

Again, each data cat qubit 8 is shown with one or more indices next to the circles, "0", "1",...,"3". These indicate the logical qubits for which that physical data cat qubit 8 forms a part of the logical Z support. The logical qubits "1", "2", and "3" refer to three output logical qubits 24, whereas "0" refers to a single validation logical qubit 26.

As above, this number also represents which of the logical qubits that physical data qubit forms part of the logical Z support.

Thus, the classical LDPC code may be exploited to perform single- or multi-logical-qubit rotations about the X axis, and indeed different rotations on different ones or combinations of the logical qubits, to perform a quantum circuit to distil the three output logical qubits 24 to magic states which together correspond to a *C_{X}C_{X}X* gate.

Accordingly, the arrangement of Figure 38 may be used to distil magic states by using an outer code as described herein, for instance, by following the quantum circuit diagram shown in Figure 39, which shows an exemplary quantum circuit built using the outer code for distilling the three output logical qubits 24 into the magic *C_{X}C_{X}X* state, according to an embodiment.

In a first step, the four (output 24 and validation 26) logical qubits may be encoded in a |0〉*_{L}* state, e.g., by physically preparing each of the physical data cat qubits 8 of the classical LDPC code in a |0〉 state, and selectively measuring the stabilizers of the code to ensure a logical |0〉*_{L}* state is encoded therein.

Of course, this is just one option, the validation 26 and output 24 logical qubit may respectively be prepared in other logical states, for instance in |1〉*_{L}*.

Similar to the above, a sufficient number of rounds need to be performed to prepare with a good fidelity the |0〉*_{L}*. Again, it may be advantageous to do preselection, i.e. ensuring that we detect no error in the last given number of rounds. In practice, this means that the protocol will only stop when said given number of rounds without detected errors are observed.

It is noted here that the three tails of weight two stabilizers 12 essentially respectively provide three repetition codes with which to encode the output logical qubits 24 (although it is noted that the output logical qubit finds X and Z logical support with other data cat qubits which form parts of the weight three or four stabilizers 12 in the main body of the arrangement 4).

All of the subsequent single Pauli and Pauli product rotations operations can then be performed in parallel. In particular, different gates are physically applied to the physical data cat qubits 8 that corresponds to the logical rotations shown in Figure 39. Here, a physical *X*^{1/4} rotation (*R_{X}*(*π*/*4*)) is applied to a first subset of physical data cat qubits 8 represented by black squares in Figure 38, and a physical *X*^{-1/4} rotation (*R_{X}*(*-π*/4)) is applied to a second subset of physical data cat qubits 8 represented by white squares.

In the explicit example shown in Figures 38 and 39, the set of physical *X*^{1/4} rotations is applied on the physical data cat qubits having the following indices: (0, 023, 013, 012), whereas the set of physical *X*^{-1/4} rotations is applied on the physical data cat qubits having the following indices: (03, 02, 0132, 01), where the data cat qubit is identified by the indices adjacent to the circles in Figure 38.

In a next step, the validation logical qubit 26 may again be measured in the Z basis, and the logical operator is evaluated. For instance, this is done by taking the product of the Z measurements of all the physical data cat qubits having a number which corresponds to the logical qubit for logical qubit "0", the Z measurements are performed on physical data cat qubits having the following indices: (01, 013, 012, 0132, 02, 023, 0, 03).

As described above, depending on the results of the logical measurements either the entire distillation is repeated, or it is terminated and the magic state hosted by the output logical qubits 24 may be used in subsequent operations (i.e. used to perform the corresponding gate on another logical qubit when required during a quantum computation).

That is, if all the Z logical operators yield +1, the distillation is accepted, and we know that a $\left|{C}_{X}{C}_{X}X\right〉 = \frac{1}{2 \sqrt{2}} \left(\left|+++\right〉+\left|++-\right〉+\left|+-+\right〉+\left|+--\right〉+\left|-++\right〉+\right.$ $\left.\left|-+-\right〉+\left|--+\right〉-\left|---\right〉\right)$ state is prepared between the output logical qubits 24 (namely, logical qubits "1", "2" and "3"). In contrast, if not all of the logical Z measurements of the validation logical qubits 26 are +1, then the distilled magic state hosted by the output logical qubit 24 is discarded and the scheme is restarted. Note that $\left|+\right〉 = \frac{1}{\sqrt{2}} \left(\left|0\right〉+\left|1\right〉\right)$ and $\left|-\right〉 = \frac{1}{\sqrt{2}} \left(\left|0\right〉-\left|1\right〉\right)$.

Otherwise, we take the product of all the X measurements that have been made of all the physical data cat qubits 8 which have a "1" in their index. If the result is -1, we apply a Pauli correction X gate on the corresponding output logical qubit 24 or tracked in software. Similarly, we take the product of all the X measurements that have been made of all the physical data cat qubits 8 which have a "2" in their index. If the result is - 1, we apply a Pauli correction X gate on the corresponding output logical qubit 24 or tracked in software. Finally, we take the product of all the X measurements that have been made of all the physical data cat qubits 8 which have a "3" in their index. If the result is -1, we apply a Pauli correction X gate on the corresponding output logical qubit 24 or tracked in software.

Furthermore, the same alternative to pre-selection described above can also be used here.

For all embodiments described herein incorporating LDPC codes (e.g., Figures 25-39), similar to the above-described embodiments relating to Figures 2 and 12, the number of physical data cat qubits 8 in contributing to each of the validation logical qubits can also be smaller than the number of physical data cat qubits 8 contributing to the output logical qubit.

Furthermore, it is again preferable that the average number of bosons of the "smallest" data cat qubit of each validation logical qubit (i.e., for each validation logical qubit, the physical data cat qubit having the smallest average number of bosons contributing to the cat state) can be made smaller than the "smallest" data cat qubit of the output logical qubit.

It is noted that the repetition code tails in Figures 36 and 38 can be respectively replaced with surface codes, such as thin surface codes, in a similar manner as described above in relation to Figures 32 and 33.

Furthermore, it is noted that the methods for distilling a multi-qubit magic state as outlined with respect to Figures 37 and 39 can similarly be applied using an arrangement 4 analogous to that of Figure 12.

Namely, instead of the encoding one or more validation logical qubit(s) 26 and plurality of output logical qubits 24 using a merged error-correcting code comprising (A) a plurality of error-correcting codes (e.g. repetition codes of surface codes with which to respectively host the plurality of output logical qubits 24), merged with (B) a classical phase-flip LDPC code, as shown in particular in Figures 36 and 38, the validation logical qubit(s) 26 and output logical qubits 24 may each be respectively encoded with a repetition code.

For instance, the outer code used as outlined in Figure 37 would require a similar arrangement as in Figure 12, but adapted to include ten vertical repetition codes (two output repetition codes 24 and eight validation repetition codes 26). Here, the various Pauli product rotations and single Pauli rotation involving these logical qubits would be performed via state teleportation using one or both of the bus linear arrays 20 and injection repetition codes (such as the first injection repetition codes 20, or separate ones using the bus linear array) in the same manner as described in detail above in relation to Figures 12-14.

### Using the distilled magic state(s)

The distilled magic state(s) can then be consumed by gate teleportation so as to apply the corresponding gate to one or more computational logical qubit(s) during a quantum algorithm.

For instance, once the ${\left|{R}_{X}\left(\frac{π}{4}\right)\right〉}_{L}$ state has been distilled, the gate teleportation to the computation logical qubit may be performed by: (i) performing a CNOT gate between the ${\left|{R}_{X}\left(\frac{π}{4}\right)\right〉}_{L}$ magic state logical qubit as control and the computational logical qubit as target; (ii) measuring the ${\left|{R}_{X}\left(\frac{π}{4}\right)\right〉}_{L}$ magic state logical qubit in the X basis; and (iii) depending on the results of the measurement, performing an ${R}_{X} \left(\frac{π}{2}\right)$ gate on the computational logical qubit (itself being achieved via gate teleportation using ${\left|{R}_{X}\left(\frac{π}{2}\right)\right〉}_{L}$ magic state distilled into another logical qubit using the methods described herein). For instance, Figure 40A shows an example of a quantum circuit diagram for teleporting an ${R}_{X} \left(\frac{π}{4}\right)$ gate, using output logical qubit 24 hosting the requisite distilled magic state to be consumed to produce the corresponding gate on computational logical qubit 40.

Explicitly, the gate teleportation to the computation logical qubit consuming a distilled ${\left|{R}_{X}\left(\frac{π}{2}\right)\right〉}_{L}$ magic state may be performed by: (i) performing a CNOT gate between the ${\left|{R}_{X}\left(\frac{π}{2}\right)\right〉}_{L}$ magic state logical qubit as control and the computational logical qubit as target; (ii) measuring the ${\left|{R}_{X}\left(\frac{π}{2}\right)\right〉}_{L}$ magic state logical qubit in the X basis; and (iii) depending on the results of the measurement, determining whether an *X* gate should be performed on the computational logical qubit (to then be performed physically, or preferably tracked in and applied in software i.e. so-called updating the Pauli frame). For instance, Figure 40B shows an example of a quantum circuit diagram for teleporting an ${R}_{X} \left(\frac{π}{2}\right)$ gate, using output logical qubit 24 hosting the requisite distilled magic state to be consumed to produce the corresponding gate on computational logical qubit 40.

In a similar manner, the |CZ〉*_{L}* magic state or |*C_{X}C_{X}X*〉*_{L}* magic state may be consumed during corresponding gate teleportation respectively to two or three computational logical qubits.

Figure 40C shows an example of a quantum circuit diagram for teleporting a *CZ* gate, using output logical qubits 24 hosting the requisite distilled multi-qubit magic state to be consumed to produce the corresponding gate on computational logical qubits 41,42.

Here, a first logical CNOT gate is performed between a first computational logical qubit 41 as control and a first of the output logical qubits 24 as target. A second logical CNOT gate is performed between a second computational logical qubit 42 as control and a second of the output logical qubits 24 as target.

Both of the output logical qubits 24 are then measured in the Z basis, and respective Pauli frame updates (Z gate corrections) on the computational logical qubits 41,42 are determined.

Specifically, if the Z measurement on the first output logical qubit 24 yields a -1, a Z gate is determined to be applied (or tracked in classical software) on the second computational logical qubit 42, and if the Z measurement on the second output logical qubit 24 yields a -1, a Z gate is determined to be applied (or tracked in classical software) on the first computational logical qubit 41.

Figure 40D shows an example of a quantum circuit diagram for teleporting a *C_{X}C_{X}X* gate (or consuming the |*C_{X}C_{X}X*〉 magic state), using output logical qubits 24 hosting the requisite distilled multi-qubit magic state to be consumed to produce the corresponding gate on computational logical qubits 41,42, 43.

Here, a first logical *CZ* gate is performed between a first computational logical qubit 41 and a first of the output logical qubits 24. This logical *CZ* (and those described below) can be done using the method described above in relation to Figure 40C. A second logical *CZ* gate is performed between a second computational logical qubit 42 and a second of the output logical qubits 24. A third logical *CZ* gate is performed between a third computational logical qubit 42 and a third of the output logical qubits 24.

All of the output logical qubits 24 are then measured in the X basis, and respective Pauli frame updates (single qubit gate corrections) on the computational logical qubits 41,42 are determined or multi-qubit gates are determined and applied between two of the computational logical qubits 41,42,43.

Specifically, if the X measurement on the first output logical qubit 24 yields a -1: a logical CNOT gate is performed between the second computational logical qubit 42 as control and the third computational logical qubit 42 as target. If the X measurement on the second output logical qubit 24 yields a -1: a logical CNOT gate is performed between the first computational logical qubit 41 as control and the third computational logical qubit 43 as target. If the X measurement on the first output logical qubit 24 yields a -1: a logical *CZ* gate is performed between the first computational logical qubit 41 and the second computational logical qubit 42.

If the X measurements on the first and second output logical qubits 24 both yield a -1, a corrective X gate is determined to be applied to the third computational logical qubit 43. If the X measurements on the first and third output logical qubits 24 both yield a -1, a corrective Z gate is determined to be applied to the second computational logical qubit 42. If the X measurements on the second and third output logical qubits 24 both yield a -1, a corrective Z gate is determined to be applied to the first computational logical qubit 41.

We note that any of the logical CNOT gates between two logical qubits can be performed transversally (e.g., via coupling respective data qubits from each logical qubit and performing CNOTs therebetween, as described above), or via lattice surgery schemes, e.g. as detailed in Gouzien, Élie, et al. "Performance analysis of a repetition cat code architecture: Computing 256-bit elliptic curve logarithm in 9 hours with 126 133 cat qubits." Physical review letters 131.4 (2023): 040602.

### General method for finding classical LDPC codes for magic state distillation

Here, we detail how the search to find a suitable LDPC code for magic state distillation as described herein is performed. The goal is to find a phase-flip code with a convenient stabilizer geometry, such as 2D nearest neighbour layout, but whose group of X stabilizers contains as a subgroup the group of X faces stabilizer of an outer code which has a transversal gate corresponding to a magic state, for instance such as the Reed-Muller code. This is equivalent to finding a phase-flip code where the logical operation consisting of all the single Pauli rotations and Pauli product rotations of $\frac{π}{4}$ about the X axis of the circuit of Figure 15 (or other circuits described herein) that can be performed transversally. This means that each of these logical rotations can be performed by applying a single physical X gate.

As the space of possible code is typically too large for an exhaustive search, we restricted the search to codes where the parity check matrix H (as described above) can be put in the following form simply by numbering the qubits properly: $H = \left(P\left|\begin{matrix}1 & 0 & 0 & ⋯ & 0 \\ ∗ & 1 & 0 & ⋯ & 0 \\ ∗ & ∗ & 1 & ⋯ & 0 \\ ⋮ & ⋮ & ⋮ & ⋱ & ⋮ \\ ∗ & ∗ & ∗ & ⋯ & 1\end{matrix}\right.\right)$ where $P ∈ {F}_{2}^{\left(n-k\right) \times k}$, *n* is the number of physical qubits, and *k* the number of logical qubits. In the case of the [15,1,3] Reed-Muller code, *k* = 5.

If any parity check matrix can be put in this form by combining the rows of *H,* we here require that the parity check matrix representing the physical stabilizers that are measured is natively in this form. This ensures that all checks are independent, and thus that the number of logical qubits is the one required. This matrix form induces a natural numbering of the qubits that corresponds to the index of the column in *H.* The *k* first qubits can be viewed as information qubits, as fixing their value fixes the codeword of the code. The *n* - *k* remaining qubits can be viewed as redundancy qubits.

Note that a redundancy qubit only participates in parity checks with qubits whose numbering is lower. We choose the logical basis so that *X_{L,i}* = *Xᵢ* for the physical qubits *i* ∈ {1,...,*k*}. Then, the logical operation corresponding to *Xⱼ* can be easily computed recursively. For instance, for the qubit *k* + 1, if the first parity check is given by *Xₐ X_{b} X_{c} X*_{*k*+1} , then *X*_{*k*+1} = *Xₐ X_{b} X_{c} .*

The search is then performed with the use of the "z3 and kissat" SAT solver. We start from a L by L square grid of data qubits. Connection variables represent which qubit participate in each check. To each qubit is associated ordering variable representing the index of the parity check matrix. A rotation variable is associated to each qubit representing the logical rotation corresponding to the physical X on this qubit.

We then impose the following constraint on the variables. For instance, constraints are imposed on the connection variables such that the parity checks are only between nearest neighbour qubits (or other physical constraints derived from the desired convenient stabilizer geometry). It follows in this case that the weight of the parity checks is at most 4 (but may of course be higher for other constraints). Rotation variables are constrained such that *Xⱼ* = *X*_{*L*,*j*}for *j* ≤ *k* and *Xⱼ = X_{L,a} X_{L,b} X_{L,c}* for the qubit *j* > *k* in the parity check *Xₐ X_{b} X_{c} X*_{*k*+1} with *a*, *b*, *c* < *j.* In the case of the [15,1,3] Reed-Muller code, *k* = 5. Finally, we impose that for each logical rotation (for instance each logical rotation of Figure 15) there corresponds a physical qubit. The result of the solver produces (or can be used to product) a viable LDPC code (i.e. the distribution of the stabilizers and the logical rotations which will be induced by which physical gates on the individual physical data cat qubits) as desired.

## Claims

1. A method for distilling a multi-qubit magic state implemented by a quantum computer comprising a plurality of physical data cat qubits using an outer code, wherein the multi-qubit magic state is for a multi-qubit controlled unitary gate, the method comprising the following operations:
(i) encoding one or more validation logical qubit(s) and a plurality of output logical qubits with at least some of the data cat qubits using a merged error-correcting code comprising (A) a plurality of output error-correcting codes with which to respectively host the plurality of output logical qubits, merged with (B) a classical phase-flip low density parity check (LDPC) code comprising one or more stabilizers having a weight greater than two such that the LDPC code is able to encode a number *k* of logical qubits with a number *n* of the plurality of data cat qubits, wherein a majority of the *n* data cat qubits form part of the logical Z support for two or more of the *k* logical qubits; and
(ii) preparing the distilled multi-qubit magic state with the validation logical qubit(s) and the output logical qubits using the outer code to respectively host the distilled multi-qubit magic state across the plurality of output logical qubits, wherein the outer code is configured to have a logical gate corresponding to the multi-qubit controlled unitary gate which is transversal, and wherein using the outer code comprises:
(a1) performing, for each logical qubit of the validation logical qubit(s) and output logical qubits, at least one single Pauli rotation or Pauli product rotation involving said logical qubit, wherein the rotation is a $\frac{jπ}{4}$ rotation about the Pauli *X-*axis, where *j* is an integer selected from *j* ∈ {1,2,3,5,6,7}, wherein said single Pauli rotation is performed via physically applying a single qubit gate corresponding to the $\frac{jπ}{4}$ rotation to a single one of the *n* data cat qubits which forms part of the logical Z support for said logical qubit but not part of the logical Z support for any other logical qubit, and wherein said Pauli product rotation is performed via physically applying a single qubit gate corresponding to the $\frac{jπ}{4}$ rotation to a single one of the *n* data cat qubits which forms part of the logical Z supports for each of the logical qubits involved in said Pauli product rotation but not part of the logical Z support for any other logical qubit; or
(a2) performing, on a plurality of the *n* data cat qubits, a physical single qubit gate corresponding to a ±*π*/2 rotation about the Pauli *Z*-axis, provided that the outer code is configured to also have a logical gate corresponding to the ±*π*/2 rotation about the Pauli *Z*-axis which is transversal; and
(b) performing a logical Z measurement subsequent to operation (a1) or a logical X measurement subsequent to operation (a2) on each of the validation logical qubit(s), and depending on the results of the logical measurements either:
(I) repeating operations (i)-(ii); or
(II) terminating the distilling and utilizing the distilled multi-qubit magic state.

2. The method of claim 1, wherein each of the plurality of physical data cat qubits of the quantum computer has an average boson number characterising said data cat qubit, the data cat qubit of each validation logical qubit which has the smallest average boson number being referred to as the smallest validation data cat qubit of the validation logical qubit, and the data cat qubit of each output logical qubit which has the smallest average boson number being referred to as the smallest output data cat qubit of the validation logical qubit, wherein each of the smallest output data cat qubits has a larger average boson number than all of the smallest validation data cat qubits, optionally wherein each of the plurality of physical data cat qubits of the quantum computer is a dissipatively stabilized cat qubit.

3. The method of claims 1 or 2, wherein the outer code comprises performing a plurality of Pauli product rotations on two or more logical qubits of the validation logical qubit(s) and/or the output logical qubits, wherein each of the validation logical qubit(s) and the output logical qubits is involved in at least one Pauli product rotation.

4. The method of claim 3, wherein a first subset of the plurality of Pauli product rotations is for a first rotation, and wherein a second subset of the plurality of Pauli product rotations is for a second rotation which is the conjugate of the first rotation.

5. The method of claims 3 or 4, wherein the outer code further comprises performing a single Pauli rotation on only one of the validation logical qubits.

6. The method of any preceding claim, wherein operation (i) comprises encoding the validation logical qubits and the output logical qubit(s) in a logical |0〉*_{L}* state or a logical |1〉*_{L}* state and subsequently performing a number of rounds of stabilizer measurements of the error-correcting code(s); and the method comprises performing at least some of the single Pauli rotations and the Pauli product rotations in parallel.

7. The method of any preceding claim, wherein the plurality of output error-correcting codes with which to respectively host the plurality of output logical qubits is:
(I) a plurality of output phase-flip repetition codes, wherein, for each of the output repetition codes, at least one data cat qubit forming a part of a stabilizer of the LDPC code also forms a part of a stabilizer of said output phase-flip repetition code, and that the remaining data cat qubits used with the output phase-flip repetition codes do not form part of the logical Z support of any of the validation logical qubits; or
(II) is a plurality of output surface codes, wherein, for each of the output surface codes, at least two data cat qubits forming a part of a stabilizer of the LDPC code also forms a part of a stabilizer of said output surface code, and that the remaining data cat qubits used with the output surface codes do not form part of the logical Z support of any of the validation logical qubits.

8. The method according to any preceding claim, wherein the method comprises performing operation (a1), and operation (ii)(b) comprises:
physically performing a Z measurement on each data cat qubit which forms a part of the logical Z support of at least one of the validation logical qubits;
using the Z measurements on said each data cat qubit to construct the logical Z measurement on each of the validation logical qubit(s); and
if terminating the distilling, for each of the output logical qubits, taking the product of all of the physical Z measurements of each data cat qubit which simultaneously forms a part of the logical Z support of said output logical qubit and at least one validation logical qubit to construct a logical Z measurement related to said output logical qubit, and, depending on said logical Z measurement, deriving whether a Pauli X correction should be applied to said output logical qubit.

9. The method according to any preceding claim, wherein the method comprises performing operation (a1), and the distilled multi-qubit magic state is a |*CZ*〉 = |*C_{X}X*〉 = 1/2(|00〉 + |01〉 + |10) - |11〉) state hosted across two output logical qubits.

10. The method according to any of claims 1-8, wherein the method comprises performing operation (a1), and the distilled multi-qubit magic state is a $\left|{C}_{X}{C}_{X}X\right〉 =$ $\frac{1}{2 \sqrt{2}} \left(\left|+++\right〉+\left|++-\right〉+\left|+-+\right〉+\left|+--\right〉+\left|-++\right〉+\left|-+-\right〉+\left|--+\right〉-\right. \left.\left|---\right〉\right)$ state hosted across three output logical qubits.

11. The method according to any of claims 1-6, wherein the method comprises performing operation (a2), and operation (ii)(b) comprises:
physically performing a X measurement on each data cat qubit which forms a part of the logical Z support of at least one of the validation logical qubits;
using the X measurements on said each data cat qubit to construct the logical X measurement on each of the validation logical qubit(s); and
if terminating the distilling, for each of the output logical qubits, taking the product of all of the physical X measurements of each data cat qubit which simultaneously forms a part of the logical Z support of said output logical qubit and at least one validation logical qubit to construct a logical X measurement related to said output logical qubit, and, depending on said logical X measurement, deriving whether a Pauli Z correction should be applied to said output logical qubit.

12. The method according to any preceding claim, wherein the method comprises performing operation (a2), and the distilled multi-qubit magic state is a |*CZ*〉 = |*C_{X}X*〉 = 1/2(|00〉 + |01〉 + |10) - |11〉) state hosted across two output logical qubits.

13. A quantum computer comprising:
a plurality of physical resonators; and
a command circuit for sending control signals to the physical resonators to stabilize a plurality of physical data cat qubits;
wherein the command circuit is further configured to perform the method of any of the preceding claims.

14. A classical computer program product comprising instructions which cause the quantum computer of claim 13 to perform the method any of claims 1-12, or a computer-readable medium having stored thereon a classical computer program product comprising instructions which cause the quantum computer of claim 13 to perform the method any of claims 1-12.
